(19) Europäisches Patentamt
European Patent Office
Office européen des brevets

(11) **EP 2 807 538 B1**

(12) # EUROPEAN PATENT SPECIFICATION

(45) Date of publication and mention of the grant of the patent:
**12.04.2017 Bulletin 2017/15**

(21) Application number: **13741308.4**

(22) Date of filing: **21.01.2013**

(51) Int Cl.:
**G06F 3/042** *(2006.01)*   G06F 3/041 *(2006.01)*

(86) International application number:
**PCT/US2013/022355**

(87) International publication number:
**WO 2013/112392 (01.08.2013 Gazette 2013/31)**

(54) **LIGHT-BASED TOUCH SURFACE WITH CURVED BORDERS AND SLOPING BEZEL**

LICHTBASIERTE BERÜHRUNGSFLÄCHE MIT GEKRÜMMTEN GRENZEN UND GENEIGTER EINFASSUNG

SURFACE TACTILE UTILISANT UNE DÉTECTION OPTIQUE, DOTÉE DE BORDS INCURVÉS ET D'UN BISEAU INCLINÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2012 US 201261591913 P**

(43) Date of publication of application:
**03.12.2014 Bulletin 2014/49**

(73) Proprietor: **Neonode Inc.
San Jose CA 95134 (US)**

(72) Inventors:
• **HOLMGREN, Stefan
S-192 72 Sollentuna (SE)**
• **SPARF, Lars
S-162 45 Vällingby (SE)**
• **KARLSSON, John
S-195 32 Märsta (SE)**
• **JANSSON, Anders
S-138 34 Alta (SE)**

• **ERIKSSON, Thomas
S-114 32 Stockholm (SE)**
• **SHAIN, Joseph
76308 Rehovot (IL)**
• **KVIST, Niklas
S-139 40 Varmdo (SE)**
• **PETTERSSON, Robert
S-126 39 Hägersten (SE)**

(74) Representative: **Lavoix
Bayerstrasse 83
80335 München (DE)**

(56) References cited:
EP-A2- 0 884 691      CN-A- 101 387 930
CN-U- 201 965 588      US-A1- 2005 052 426
US-A1- 2008 056 068      US-A1- 2010 238 139
US-A1- 2010 321 344      US-A1- 2010 321 344
US-A1- 2011 175 852      US-A1- 2011 175 852

EP 2 807 538 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The field of the present invention is light-based touch input surfaces.

BACKGROUND OF THE INVENTION

Many consumer electronic devices are now being built with touch sensitive screens, for use with finger or stylus touch user inputs. These devices range from small screen devices such as mobile phones and car entertainment systems, to mid-size screen devices such as notebook computers, to large screen devices such as check-in stations at airports.

Most conventional touch screen systems are based on resistive or capacitive layers. Such systems are not versatile enough to offer an all-encompassing solution, as they are not easily scalable.

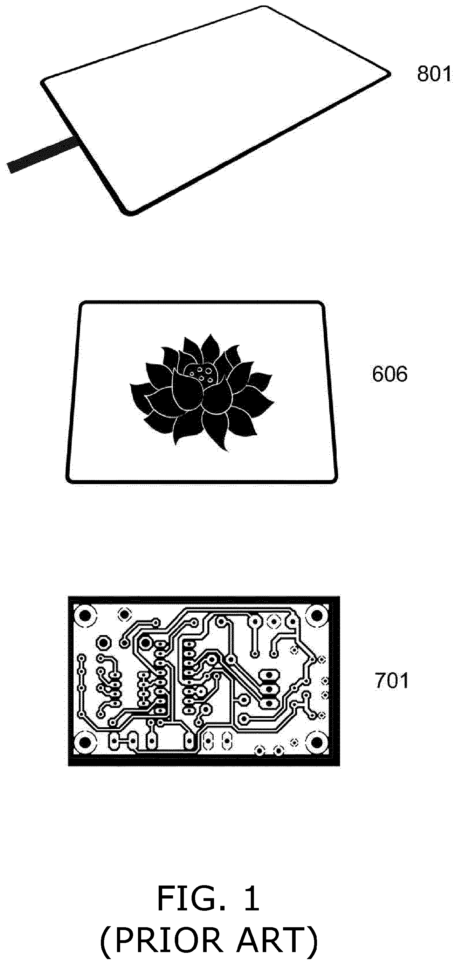

Reference is made to **FIG. 1,** which is a prior art illustration of a conventional touch screen system. Such systems include an LCD display surface **606,** a resistive or capacitive overlay **801** that is placed over the LCD surface, and a controller integrated circuit (IC) **701** that connects to the overlay and converts inputs from the overlay to meaningful signals. A host device (not shown), such as a computer, receives the signals from controller IC **701,** and a device driver or such other program interprets the signals to detect a touch-based input such as a key press or scroll movement.

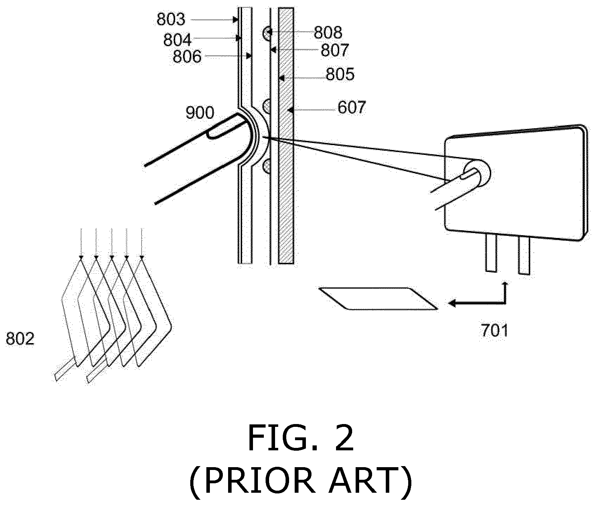

Reference is made to **FIG. 2,** which is a prior art illustration of a conventional <u>resistive</u> touch screen. Shown in **FIG. 2** are conductive and resistive layers **802** separated by thin spaces. A PET film **803** overlays a top circuit layer **804,** which overlays a conductive coating **806.** Similarly, a conductive coating **807** with spacer dots **808** overlays a bottom circuit layer **805,** which overlays a glass layer **607.** When a pointer **900,** such as a finger or a stylus, touches the screen, a contact is created between resistive layers, closing a switch. A controller **701** determines the current between layers to derive the position of the touch point.

Advantages of resistive touch screens are their low cost, low power consumption and stylus support.

A disadvantage of resistive touch screens is that as a result of the overlay, the screens are not fully transparent. Another disadvantage is that pressure is required for touch detection; i.e., a pointer that touches the screen without sufficient pressure goes undetected. As a consequence, resistive touch screens do not detect finger touches well. Another disadvantage is that resistive touch screens are generally unreadable in direct sunlight. Another disadvantage is that resistive touch screens are sensitive to scratches. Yet another disadvantage is that resistive touch screens are unable to discern that two or more pointers are touching the screen simultaneously, referred to as "multi-touch".

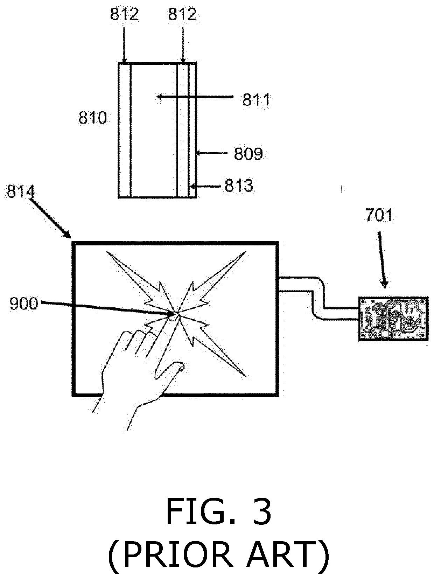

Reference is made to **FIG. 3,** which is a prior art illustration of a conventional <u>surface capacitive</u> touch screen. Shown in **FIG. 3** is a touch surface **809** overlaying a coated glass substrate **810.** Two sides of a glass **811** are coated with a uniform conductive indium tin oxide (ITO) coating **812.** In addition, a silicon dioxide hard coating **813** is coated on the front side of one of the ITO coating layers **812.** Electrodes **814** are attached at the four corners of the glass, for generating an electric current. A pointer **900,** such as a finger or a stylus, touches the screen, and draws a small amount of current to the point of contact. A controller **701** then determines the location of the touch point based on the proportions of current passing through the four electrodes.

Advantages of surface capacitive touch screens are finger touch support and a durable surface.

A disadvantage of surface capacitive touch screens is that as a result of the overlay, the screens are not fully transparent. Another disadvantage is a limited temperature range for operation. Another disadvantage is a limited capture speed of pointer movements, due to the capacitive nature of the touch screens. Another disadvantage is that surface capacitive touch screens are susceptible to radio frequency (RF) interference and electromagnetic (EM) interference. Another disadvantage is that the accuracy of touch location determination depends on the capacitance. Another disadvantage is that surface capacitive touch screens cannot be used with gloves. Another disadvantage is that surface capacitive touch screens require a large screen border. As a consequence, surface capacitive touch screens cannot be used with small screen devices. Yet another disadvantage is that surface capacitive touch screens are unable to discern a multi-touch.

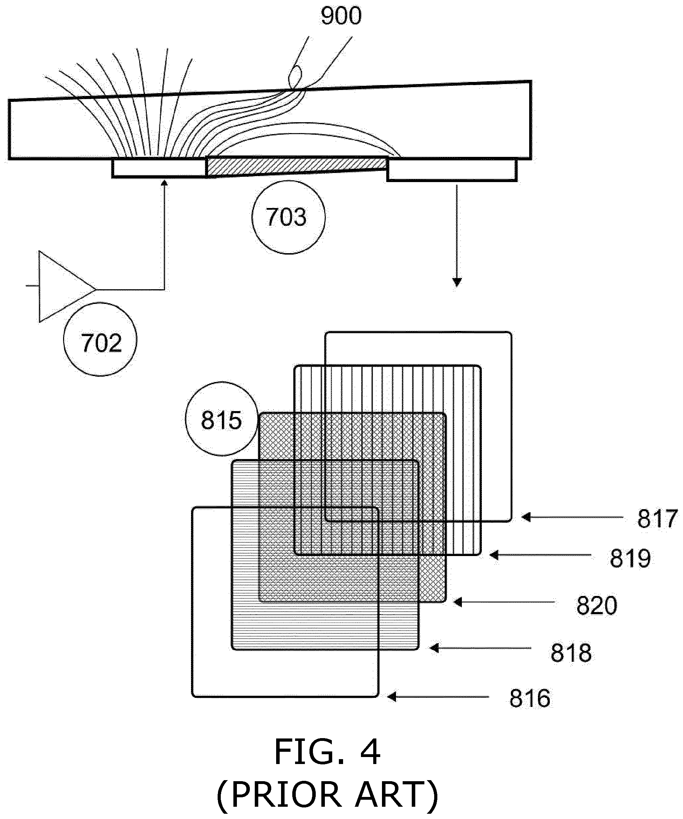

Reference is made to **FIG. 4,** which is a prior art illustration of a conventional <u>projected capacitive</u> touch screen. Shown in **FIG. 4** are etched ITO layers **815** that form multiple horizontal (x-axis) and vertical (y-axis) electrodes. Etched layers **815** include outer hard coat layers **816** and **817,** an x-axis electrode pattern **818,** a y-axis electrode pattern **819,** and an ITO glass **820** in the middle. AC signals **702** drive the electrodes on one axis, and the response through the screen loops back via the electrodes on the other axis. Location of a pointer **900** touching the screen is determined based on the signal level changes **703** between the horizontal and vertical electrodes.

Advantages of projective capacitive touch screens are finger multi-touch detection and a durable surface.

A disadvantage of projected capacitive touch screens is that as a result of the overlay, the screens are not fully transparent. Another disadvantage is their high cost. Another disadvantage is a limited temperature range for operation. Another disadvantage is a limited capture speed, due to the capacitive nature of the touch screens. Another disadvantage is a limited screen size, typically less than 5". Another disadvantage is that surface capacitive touch screens are susceptible to RF interference and EM interference. Yet another disadvantage is that the accuracy of touch location determination depends on the capacitance.

One type of touch screen that overcomes these disadvantages is a light-based touch screen. Conventional light-based touch screens include rows of infra-red (IR) light emitters along horizontal and vertical screen edges, that emit light beams across a screen input surface, in the form of a lattice of light beams. Corresponding rows of IR light receivers detect the emitted light beams. An absence of expected light beams detected by the IR light receivers is used to determine the location of a touch.

In conventional light-based touch screens, the IR emitters and IR receivers are encased in a protective housing. An IR transparent lens along the screen edges joins the touch screen to the housing, and directs emitted IR light to pass across the screen surface.

Conventional light-based touch screens are rectangular. Rectangular touch screens are easy to assemble using straight IR-transparent lenses along the four screen edges. However, curved edges have a disadvantage in that light passing through a curved lens is distorted; in particular, collimated light beams emitted from a row of emitters do not emerge as collimated beams after passing through a conventional curved lens. In turn, a precise touch coordinate cannot be determined based solely on an absence of expected light.

Conventional light-based touch screens include a vertical bezel. Sloped bezels have a disadvantage of light leakage due to refraction, whereby light beams refracted by a sloped bezel do not arrive at receivers.

EP 0 884 691 A2 describes an optical sensor unit that includes a plurality of LEDs and phototransistors that are arranged so that parallel optical axes are formed in the vertical direction and in the horizontal direction.

US 2011/175852 A1 describes a light guide having a parabolic reflective surface and a corresponding refractive elliptical surface to direct light beams across a screen surface in a light-based touch screen.

CN 101 387 930 A describes an electronic whiteboard, that includes a panel, pluralities of infrared emitters, pluralities of infrared receivers and an electronic component. The pluralities of infrared emitters are distributed along the periphery of the panel, and infrared rays emitted by the emitters can go through along the surface of the panel to cross into an infrared matrix. The pluralities of infrared receivers are distributed along the periphery of the panel, each infrared receiver corresponds to an infrared emitter, and the infrared receiver and the infrared emitter are located on two sides of the panel oppositely.

US 2008/056068 A1 describes a touch panel that includes a frame, a plurality of first signal sources, a plurality of first signal receivers, a plurality of second signal sources, a plurality of second signal receivers, and a processor. The frame includes a first portion, a second portion, a third portion, and a fourth portion. The plurality of first signal sources is disposed along the first and the second portions to emit the signals configured to detect a coordinate in a first direction. The plurality of first signal receivers is disposed along the third and the fourth portions, corresponding to the plurality of first signal sources, to receive the signals from the plurality of first signal sources respectively. The plurality of second signal sources is disposed along the first and the fourth portions to emit the signals configured to detect a coordinate in a second direction. The plurality of second signal receivers is disposed along the second and the third portions, corresponding to the plurality of second signal sources, to receive the signals from the plurality of second signal sources respectively. When an object is set in a particular position within the frame, the processor, coupled with the plurality of first and second signal receivers, determines the particular position of the object according to the locations of signal receivers and strength variation of their received signals.

CN 201 965 588 U describes a circular infrared touch screen, that includes a circular shaped screen and several touch units around the screen.

It would thus be of advantage to provide curved lenses for non-rectangular light-based touch screens that are bordered by curved edges, so that a touch location may be easily and precisely determined.

It would also be of advantage to provide sloping bezels for touch screen light guides, which minimize light leakage.

SUMMARY OF THE DESCRIPTION

Aspects of the present invention relate to light-based touch surfaces and lenses therefor. The surface may be opaque or transparent. The surface may be a hollow frame that detects user input when a user inserts a finger or object into the frame cavity. The surface may or may not include a display screen.

Aspects of the present invention provide special curved lenses for non-rectangular touch screens that are bordered by curved edges, so that a touch location may be easily and precisely determined. In one embodiment, the touch-sensitive portion of the non-rectangular touch screen is an inscribed rectangle, and the IR emitters and IR receivers are evenly spaced in straight rows.

There is thus provided in accordance with an embodiment of the present invention a light-based touch-sensitive surface according to claim 1.

There is additionally provided in accordance with an embodiment of the present invention a light-based touch-sensitive surface, including a housing, a surface attached to the housing for receiving touch input, a plurality of light sources in the housing for emitting light that crosses the surface, a plurality of light receivers in the housing for detecting the light emitted by the light sources, a lens adjacent to the surface through which the light emitted by the light sources passes, and a calculating unit in the housing, connected to the light receivers, for calculating a touch location based on the absence of light expected to be received by the receivers.

BRIEF DESCRIPTION OF THE DRAWINGS

The present invention will be more fully understood and appreciated from the following detailed description, taken in conjunction with the drawings in which:

**FIG. 1** is a prior art illustration of a conventional touch screen system;
**FIG. 2** is a prior art illustration of a conventional resistive touch screen;
**FIG. 3** is a prior art illustration of a conventional surface capacitive touch screen;
**FIG. 4** is a prior art illustration of a conventional projected capacitive touch screen;
**FIG. 5** is an illustration of a portion of a touch screen including a plurality of emitters that are positioned close together, wherein light is guided by fiber optic light guides to locations along a first screen edge;
**FIG. 6** is a diagram of a touch screen having 16 emitters and 16 receivers;
**FIGS. 7 - 9** are diagrams of the touch screen of **FIG. 6,** showing detection of two pointers that touch the screen simultaneously;
**FIGS. 10** and **11** are diagrams of a touch screen that detects a two-finger glide movement;
**FIG. 12** is a circuit diagram of the touch screen from **FIG. 6;**
FIG. **13** is a simplified diagram of a light-based touch screen system;
**FIG. 14** is a simplified cross-sectional diagram of the touch screen system of **FIG. 13;**
**FIG. 15** is a simplified illustration of an arrangement of emitters, receivers and optical elements that enable a touch screen system to determine a precise location of a fingertip touching the screen;
**FIG. 16** is a simplified illustration of an arrangement of emitters, receivers and optical elements that enable a touch screen system to detect a pointer that is smaller than the sensor elements, including inter alia a stylus;
**FIG. 17** is a simplified diagram of a touch screen with wide light beams covering the screen;
**FIG. 18** is a simplified illustration of a collimating lens;
**FIG. 19** is a simplified illustration of a collimating lens in cooperation with a light receiver;
**FIG. 20** is a simplified illustration of a collimating lens having a surface of micro-lenses facing an emitter;
**FIG. 21** is a simplified illustration of a collimating lens having a surface of micro-lenses facing a receiver;
**FIG. 22** is a simplified diagram of an electronic device with a wide-beam touch screen;
**FIG. 23** is a diagram of the electronic device of **FIG. 22,** depicting overlapping light beams from one emitter detected by two receivers;
**FIG. 24** is a diagram of the electronic device of **FIG. 22,** depicting overlapping light beams from two emitters detected by one receiver;
**FIG. 25** is a diagram of the electronic device of **FIG. 22,** showing that points on the screen are detected by at least two emitter-receiver pairs;
**FIG. 26** is a simplified diagram of a wide-beam touch screen, showing an intensity distribution of a light signal;
**FIG. 27** is a simplified diagram of a wide-beam touch screen, showing intensity distributions of overlapping light signals from two emitters;
**FIG. 28** is a simplified diagram of a wide-beam touch screen, showing intensity distributions of two sets of overlapping light signals from one emitter;
**FIG. 29** is a simplified diagram of a wide beam touch screen with emitter and receiver lenses that do not have micro-lens patterns;
**FIGS. 30** and **31** are simplified diagrams of a wide-beam touch screen with emitter and receiver lenses that have micro-lens patterns;
FIG. 32 is a simplified diagram of a wide-beam touch screen with emitter and receiver lenses that do not have micro-lens patterns;
FIG. 33 is a simplified diagram of a wide beam touch screen, with emitter and receiver lenses that have micro-lens patterns;
FIG. 34 is a simplified diagram of two emitters with lenses that have micro-lens patterns integrated therein;
**FIG. 35** is a simplified diagram of two receivers with lenses that have micro-lens patterns integrated therein;
**FIG. 36** is a simplified diagram of a side view of a single-unit light guide, in the context of an electronic device with a display and an outer casing;

**FIG. 37** is a simplified diagram of side views, from two different angles, of a lens with applied feather patterns on a surface;

**FIG. 38** is a simplified diagram of a portion of a wide-beam touch screen;

**FIG. 39** is a top view of a simplified diagram of light beams entering and exiting micro-lenses etched on a lens;

**FIG. 40** is a simplified diagram of a side view of a dual-unit light guide, in the context of a device having a display and an outer casing;

**FIG. 41** is a picture of light guide units, within the context of a device having a PCB and an outer casing;

**FIG. 42** is a top view of the light guide units of **FIG. 41;**

**FIG. 43** is a simplified diagram of a side view cutaway of a light guide within an electronic device;

**FIG. 44** is a simplified diagram of a side view cutaway of a portion of an electronic device and an upper portion of a light guide with at least two active surfaces for folding light beams;

**FIG. 45** is a simplified drawing of a section of a transparent optical touch light guide, formed as an integral part of a protective glass covering a display;

**FIG. 46** is a simplified illustration of the electronic device and light guide of FIG. 44, adapted to conceal the edge of the screen;

**FIG. 47** is a simplified diagram of a light guide that is a single unit extending from opposite an emitter to above a display;

**FIG. 48** is a simplified diagram of a dual-unit light guide;

**FIG. 49** is a simplified diagram of a touch screen device held by a user;

**FIG. 50** is a simplified diagram of a touch screen with wide light beams covering the screen;

**FIGS. 51 - 53** are respective simplified side, top and bottom views of a light guide in the context of a device;

**FIG. 54** is a simplified illustration of a touch screen surrounded by emitters and receivers;

**FIG. 55** is a simplified illustration of an optical element with an undulating angular pattern of reflective facets, shown from three angles;

**FIG. 56** is a simplified illustration of an optical element reflecting, collimating and interleaving light from two neighboring emitters;

**FIG. 57** is a simplified diagram of a multi-faceted optical element;

**FIG. 58** is a simplified graph showing the effect of various reflective facet parameters on light distribution for nine facets;

**FIG. 59** is a simplified illustration of a touch screen with a wide light beam crossing the screen;

**FIG. 60** is a simplified illustration of a touch screen with two wide light beams crossing the screen;

**FIG. 61** is a simplified illustration of a touch screen with three wide light beams crossing the screen;

**FIGS. 62** is a simplified graph of light distribution of a wide beam in a touch screen;

**FIG. 63** is a simplified illustration of detection signals from three wide beams as a fingertip moves across a screen;

**FIGS. 64 - 66** are simplified graphs of light distribution in overlapping wide beams in a touch screen;

**FIG. 67** is a simplified graph of detection signals from a wide beam as a fingertip moves across a screen at three different locations;

**FIG. 68** is a simplified diagram of four optical elements and four neighboring emitters;

**FIG. 69** is a simplified diagram of a diffractive surface that directs beams from two emitters along a common path;

**FIG. 70** is a simplified diagram of a touch screen surrounded with alternating emitters and receivers;

**FIG. 71** is a simplified illustration of a touch screen surrounded with alternating emitters and receivers, and a wide beam crossing the screen;

**FIG. 72** is a simplified illustration of a touch screen surrounded with alternating emitters and receivers and two wide beams crossing the screen;

**FIG. 73** is a simplified illustration of a touch screen surrounded with alternating emitters and receivers and three wide beams crossing the screen;

**FIG. 74** is a simplified illustration of a collimating optical element reflecting and interleaving light for an emitter and a neighboring receiver;

**FIGS. 75 - 78** are illustrations of multi-touch locations that are ambiguous vis-à-vis a first orientation of light emitters;

**FIGS. 79 - 81** are illustrations of the multi-touch locations of **FIGS. 75 - 77** that are unambiguous vis-à-vis a second orientation of light emitters;

**FIG. 82** is a simplified illustration of a touch screen with light beams directed along four axes;

**FIG. 83** is a simplified illustration of an alternate configuration of light emitters and light receivers with two grid orientations;

**FIG. 84** is a simplified illustration of a configuration of alternating light emitters and light receivers;

**FIG. 85** is a simplified illustration of two wide light beams from an emitter being detected by two receivers;

**FIG. 86** is a simplified illustration of two wide beams and an area of overlap between them;

**FIG. 87** is a simplified illustration of a touch point situated at the edges of detecting light beams;

**FIG. 88** is a simplified illustration of an emitter along one edge of a display screen that directs light to receivers along two edges of the display screen;

**FIGS. 89** and **90** are simplified illustrations of a lens for refracting light in three directions, having a lens surface with a repetitive pattern of substantially planar two-sided and three-sided recessed cavities, respectively;

**FIGS. 91 - 93** are simplified illustrations of a touch screen surrounded with alternating emitters and receivers and diagonal wide beams crossing the screen;

**FIG. 94** is a simplified graph of light distribution across a diagonal wide beam in a touch screen;

**FIG. 95** is a simplified graph of light distribution across three overlapping diagonal wide beams in a touch screen;

**FIG. 96** is a simplified graph of touch detection as a finger glides across three overlapping diagonal wide beams in a touch screen;

**FIG. 97** is a simplified graph of detection signals from a diagonal wide beam as a fingertip moves across the screen at three different locations;

**FIG. 98** is a simplified illustration of a first touch screen surrounded with alternating emitters and receivers, whereby diagonal and orthogonal wide beams crossing the screen are detected by one receiver;

**FIG. 99** is a simplified illustration of a second touch screen surrounded with alternating emitters and receivers, whereby diagonal and orthogonal wide beams crossing the screen are detected by one receiver;

**FIG. 100** is a simplified illustration of a user writing on a prior art touch screen with a stylus;

**FIG. 101** is a simplified illustration of light beams detecting location of a stylus when a user's palm rests on a touch screen;

**FIG. 102** is a simplified illustration of a frame surrounding a touch screen;

**FIG. 103** is a simplified illustration of emitters, receivers and optical elements for a corner of a touch screen;

**FIG. 104** is a simplified illustration of emitters, receivers and optical elements for a corner of a touch screen;

**FIG. 105** is an illustration of optical components made of plastic material that is transparent to infrared light;

**FIG. 106** is a simplified diagram of a side view of a touch screen with light guides;

**FIG. 107** is an illustration of a touch screen with a block of three optical components on each side;

**FIG. 108** is a magnified illustration of one of the emitter blocks of **FIG. 107;**

**FIG. 109** is an illustration of a touch screen having a long thin light guide along a first edge of the screen, for directing light over the screen, and having an array of light receivers arranged along an opposite edge of the screen for detecting the directed light, and for communicating detected light values to a calculating unit;

**FIG. 110** is an illustration of a touch screen having an array of light emitters along a first edge of the screen for directing light beams over the screen, and having a long thin light guide for receiving the directed light beams and for further directing them to light receivers situated at both ends of the light guide;

**FIG. 111** is an illustration of two light emitters, each emitter coupled to each end of a long thin light guide;

**FIGS. 112-115** are illustrations of a touch screen that detects occurrence of a hard press;

**FIGS. 116** and **117** are bar charts showing increase in light detected, when pressure is applied to a rigidly mounted 7-inch LCD screen;

**FIG. 135** is a simplified diagram of a touch screen surrounded by a frame that has slightly curved edges, and having emitters and receivers along each screen edge that project and receive light beams substantially along the screen surface plane, in accordance with an embodiment of the present invention;

**FIG. 136** is a simplified diagram of a touch screen surrounded by a frame that has slightly curved edges, and having upward-facing emitters and receivers underneath the screen edge that project and receive light beams perpendicular to the screen surface plane, in accordance with an embodiment of the present invention;

**FIG. 137** is an exploded view of the touch screen of **FIG. 136,** in accordance with an embodiment of the present invention;

**FIG. 138** is a simplified diagram of a touch screen surrounded by a frame that has slightly curved edges, and having outward-facing emitters and receivers underneath the screen edge that project and receive light beams on a plane below the screen surface, in accordance with an embodiment of the present invention;

**FIG. 139** is an exploded view of the touch screen of **FIG. 138,** in accordance with an embodiment of the present invention;

**FIGS. 144** and **145** are illustrations of opposing rows of emitter and receiver lenses in a touch screen system;

**FIG. 146** is a simplified illustration of a technique for determining a touch location, by a plurality of emitter-receiver pairs in a touch screen system;

**FIG. 147** is an illustration of a light guide frame for the configuration of **FIGS. 144** and **145;**

**FIG. 148** is a simplified flowchart of a method for touch detection for a light-based touch screen;

**FIGS. 149 - 151** are illustrations of a rotation gesture, whereby a user places two fingers on the screen and rotates them around an axis;

**FIGS. 152-155** are illustrations of touch events at various locations on a touch screen;

**FIGS. 156-159** are respective bar charts of light saturation during the touch events illustrated in **FIGS. 152 - 155;**

**FIG. 160** is a simplified flowchart of a method for determining the locations of simultaneous, diagonally opposed touches;

FIG. 161 is a simplified flowchart of a method for discriminating between clockwise and counter-clockwise gestures;

FIG. 162 is a simplified flowchart of a method of calibration and touch detection for a light-based touch screen;

FIG. 163 is a picture showing the difference between signals generated by a touch, and signals generated by a mechanical effect;

FIG. 164 is a simplified diagram of a control circuit for setting pulse strength when calibrating a light-based touch screen;

FIG. 165 is a plot of calibration pulses for pulse strengths ranging from a minimum current to a maximum current, for calibrating a light-based touch screen;

FIG. 166 is a simplified pulse diagram and a corresponding output signal graph, for calibrating a light-based touch screen;

FIG. 167 is an illustration showing how a capillary effect is used to increase accuracy of positioning a component, such as an emitter or a receiver, on a printed circuit board;

FIG. 168 is an illustration showing the printed circuit board of **FIG. 167,** after having passed through a heat oven;

FIG. 169 is a simplified illustration of a light-based touch screen and an ASIC controller therefor;

FIG. 170 is a circuit diagram of a chip package for a controller of a light-based touch screen;

FIG. 171 is a circuit diagram for six rows of photo emitters with 4 or 5 photo emitters in each row, for connection to the chip package of **FIG. 170;**

FIG. 172 is a simplified illustration of a touch screen surrounded by emitters and receivers;

FIG. 173 is a simplified application diagram illustrating a touch screen configured with two controllers;

FIG. 174 is a graph showing performance of a scan sequence using a conventional chip vs. performance of a scan using a dedicated controller;

FIG. 175 is a simplified illustration of a touch screen having a shift-aligned arrangement of emitters and receivers; and

FIG. 176 is a simplified diagram of a touch screen having alternating emitters and receivers along each screen edge.

For reference to the figures, the following index of elements and their numerals is provided. Elements numbered in the **100**'s generally relate to light beams, elements numbered in the **200**'s generally relate to light sources, elements numbered in the **300**'s generally relate to light receivers, elements numbered in the **400**'s and **500**'s generally relate to light guides, elements numbered in the **600**'s generally relate to displays, elements numbered in the **700**'s generally relate to circuit elements, elements numbered in the **800**'s generally relate to electronic devices, and elements numbered in the **900**'s generally relate to user interfaces. Elements numbered in the **1000**'s are operations of flow charts.

Similarly numbered elements represent elements of the same type, but they need not be identical elements.

| Elements generally related to light beams | | | | |
|---|---|---|---|---|
| | | | | |
| **Element** | **Description** | **Element** | **Description** | |
| **100 - 102** | Light beams | **167 - 169** | Wide light beam | |
| **105**, **106** | Reflected light beam | **170-172** | Signals received by light receivers | |
| **107 - 109** | Arc of light output from light source | **173** | Beam from 1 emitter to 2 receivers | |
| **110** | Distance between centers of two beams | **174** | Beam from 1 emitter to 1st receiver | |
| **111** | Distance from emitter/receiver to optical element | **175** | Beam from 1 emitter to 2nd receiver | |
| **112** | Refracted beam | **176** | Beam from emitter to 1st receiver | |
| **113 - 117** | Blocked light beams | **177** | Beam from emitter to 2nd receiver | |
| **118 - 120** | Light beams | **178** | Beam from 1 emitter to 1st receiver | |
| **125** | Beam offset inside of lens | **179** | Beam from 1 emitter to 2nd receiver | |
| **142** | Arc of light output from light source | **182** | Beam from 1 emitter to 2 receivers | |
| **143** | Arc of light input to light receiver | **183 - 187** | Middle of arc of light | |
| **144** | Wide light beams | **190** | Light beams output from light source | |
| **145 - 148** | Edge of wide light beam | **191** | Light beams input to light receiver | |
| **151 - 154** | Light beams | **192** | Arcs of light | |

(continued)

| Element | Description | Element | Description |
|---|---|---|---|
| **158** | Wide light beam | **193** | Wide light beam from two sources |

| Elements generally related to light sources | | | |
|---|---|---|---|
| **Element** | **Description** | **Element** | **Description** |
| **200-213** | Light emitters | **230** | Combined emitter-receiver elements |
| **220** | LED cavity | **235 - 241** | Light emitters |

| Elements generally related to light receivers | | | |
|---|---|---|---|
| | | | |
| **Element** | **Description** | **Element** | **Description** |
| **300 - 319** | Light receivers | **398** | Light receiver / light emitter |
| **394** | Light receiver | | |

| Elements generally related to light guides | | | |
|---|---|---|---|
| | | | |
| **Element** | **Description** | **Element** | **Description** |
| **400** | Lens | **486** | Lower portion of light guide |
| **401**, **402** | Fiber optic light guides | **487** | Surface with parallel row micro-lenses |
| **407** | Raised reflector bezel | **488, 489** | Optical component |
| **408** | Cutout | **490 - 492** | Surface of optical component |
| **437, 438** | Reflector & lens | **493** | Multi-faceted reflective surface |
| **439 - 443** | Lens | **494 - 497** | Optical component |
| **444** | Micro-lenses | **498, 499** | Light guide |
| **445** | Surface with fan of micro-lenses | **500 - 501** | Emitter optical component block |
| **450** | Light guide | **502 - 503** | Receiver optical component block |
| **451, 452** | Internally reflective surface | **504** | Emitter lenses |
| **453, 454** | Light guide surface | **505** | Receiver lenses |
| **455** | Light guide | **506, 507** | Emitter optical component |
| **456** | Internally reflective surface | **508 - 510** | Receiver optical component |
| **457** | Collimating lens & reflective surface | **511** | Emitter optical components |
| **458** | Micro-lenses | **512** | Receiver optical components |
| **459** | Light guide surface | **513** | Optical component / temporary guide |
| **460** | Surface with fan of micro-lenses | **514** | Long thin light guide |
| **461** | Lens | **515** | Light guide reflector |
| **462** | Micro-lenses | **516** | Micro-lenses |
| **463** | Upper portion of light guide | **517** | Light scatterer strip |

(continued)

| Element | Description | Element | Description |
|---|---|---|---|
| 464 | Lower portion of light guide | 518,519 | Light guides |
| 465 | Light guide surface | 520, 521 | Protruding lips on light guides |
| 466 | Surface with parallel row micro-lenses | 522, 523 | Relative position of light guide element |
| 467 | Parallel row pattern of micro-lenses | 524 | Clear, flat glass |
| 468 | Light guide | 525 | Collimating lens |
| 469,470 | Internally reflective surface | 526 | Clear flat glass with micro-lens surface |
| 471 | Light guide surface | 527 | Lens with pattern of refracting surfaces |
| 472 | Light guide | 528 | Micro-lens pattern |
| 473 | Internally reflective surface | 530 - 534 | Opt element with multi-faceted surface |
| 474 | Light guide surface | 541 | Optical element surface |
| 475 | Focal line of a lens | 542 | Multi-faceted reflective surface |
| 476 | Light guide | 545 - 549 | Reflective facets |
| 477 | Internally reflective surface | 550 - 552 | Lens section in multi-lens assembly |
| 478 | Light guide surface | 555, 556 | Air gap |
| 479 | Light guide | 559 | Connector joining lens section |
| 480 | Internally reflective surface | 560 | Diffractive surface |
| 481 | Light guide surface | 561, 562 | Air gap |
| 482 | Black plastic transmissive element | 564 | Lens frame |
| 483 | Light guide | 565 | Two-part collimating lens |
| 484 | Surface with fan of micro-lenses | 566 | Curved lens |
| 485 | Upper portion of light guide | 571, 572 | Curved lens surfaces |

| Elements generally related to displays | | | |
|---|---|---|---|
| | | | |
| Element | Description | Element | Description |
| 600 | Screen glass | 639 | Daylight filter sheet |
| 606 | LCD display (prior art) | 640 | Protective glass |
| 607 | Screen glass (prior art) | 641 | Daylight filter sheet |
| 635 - 637 | Display | 642, 643 | Display |
| 638 | Protective glass | 645 | Reflection on display glass |

| Elements generally related to circuit elements | | | |
|---|---|---|---|
| | | | |
| Element | Description | Element | Description |
| 700 | Printed circuit board | 756 | Analog-to-digital convertor |
| 701 | Controller integrated circuit (pr. art) | 759 | Controller circuitry |
| 702 | AC input signal (prior art) | 760, 761 | Electrical pad |

(continued)

| Element | Description | Element | Description |
|---|---|---|---|
| 703 | Output signal (prior art) | 762, 763 | Printed circuit board |
| 720 | Shift register for column activation | 764 | Guide pin |
| 730 | Shift register for column activation | 765 | Solder pad |
| 731 | Chip package | 766 | Component solder pad |
| 732, 733 | Signal conducting pins | 767 | Solder pads after heat oven |
| 736 | Input/output pins | 768, 769 | Notch in optical component / guide |
| 737 | Chip select pin | 770 | Calculating unit |
| 740 | Emitter driver circuitry | 771 | Clip-on fastener |
| 742 | Emitter pulse control circuitry | 772 | Host processor |
| 750 | Detector driver circuitry | 774 | Touch screen controller |
| 753 | Detector signal processing circuitry | 775 | Serial Peripheral Interface (SPI) |
| 755 | Detector current filter | | |

| Elements generally related to touch-based electronic devices | | | |
|---|---|---|---|
| | | | |
| Element | Description | Element | Description |
| 800 | Touch screen | 814 | Electrode (prior art) |
| 801 | Touch overlay (prior art) | 815 | Etched ITO layers (prior art) |
| 802 | Conductive & resistive layers (pr. art) | 816, 817 | Hard coat layer (prior art) |
| 803 | PET film (prior art) | 818 | x-axis electrode pattern (prior art) |
| 804 | Top circuit layer (prior art) | 819 | y-axis electrode pattern (prior art) |
| 805 | Bottom circuit layer (prior art) | 820 | ITO glass (prior art) |
| 806, 807 | Conductive coating (prior art) | 826 | Electronic device |
| 808 | Spacer dot (prior art) | 827 - 832 | Device casing |
| 809 | Touch surface (prior art) | 841, 842 | Resilient members |
| 810 | Coated glass substrate (prior art) | 843 | Flex air gap |
| 811 | Glass substrate (prior art) | 844 - 847 | Image sensors |
| 812 | Conductive ITO coating (prior art) | 848 | Laptop computer |
| 813 | Silicon dioxide hard coating (prior art) | 849 | Screen frame |

| Element generally related to user interfaces | | | |
|---|---|---|---|
| | | | |
| Element | Description | Element | Description |
| 900-903 | Pointer / finger / thumb / stylus | 971, 972 | Touch points |
| 905-908 | Detected touch area | 973 - 976 | Light signal attenuation area |
| 910-912 | Light signal attenuation area | 977 | Point on lens |
| 920, 921 | Light signal attenuation gradient | 980 | Touch point |

(continued)

| Element | Description | Element | Description |
|---------|-------------|---------|-------------|
| **925-927** | Path across a wide beam | **981**, **982** | Point on lens |
| **930** | Hand | **989**, **990** | Pin |
| **931** | Stylus | **991 - 993** | Active touch area |
| **932** | Drawn line | **996 - 999** | Mid-line between pointer and reflection |
| **965-970** | Touch icons | | |

DETAILED DESCRIPTION

Aspects of the present invention relate to light-based touch surfaces and lenses therefor. The surface may be opaque or transparent. The surface may be a hollow frame that detects user input when a user inserts a finger or object into the frame cavity. The surface may or may not include a display screen.

For clarity of exposition, throughout the present specification the terms "touch screen" and "touch surface" are used as generic terms to refer to touch sensitive surfaces that may or may not include an electronic display. As such, the terms "touch screen" and "touch surface" as used herein include inter alia a mouse touchpad as included in many laptop computers, and the cover of a handheld electronic device. The term "touch screen" and "touch surface" also include hollow frames that enable detection of objects inserted into the frame cavities. The terms "optical touch screen" and "optical touch surface" are used as generic terms to refer to light-based touch screens, including inter alia screens that detect a touch based on the difference between an expected light intensity and a detected light intensity, where the detected light intensity may be greater than or less than the expected light intensity. The term "screen glass" is used as a generic term to refer to a transparent screen surface. The screen may be constructed inter alia from glass, or from a non-glass material including inter alia crystal, acrylic and plastic. In some cases, the screen allows near-infrared light to pass through, but is otherwise non-transparent.

For clarity of exposition, throughout the present specification, the term "emitter" is used as a generic term to refer to a light emitting element, including inter alia a light-emitting diode (LED), and the output end of a fiber optic or tubular light guide that outputs light into a lens or reflector that directs the light over a display surface. The term "receiver" is used as a generic term to refer to a light detecting element, including inter alia a photo diode (PD), and the input end of a fiber optic or tubular light guide that receives light beams that traversed a display surface and directs them to a light detecting element or to an image sensor, the image sensor being inter alia a charge coupled device (CCD) or a complementary metal oxide semiconductor (CMOS) image sensor.

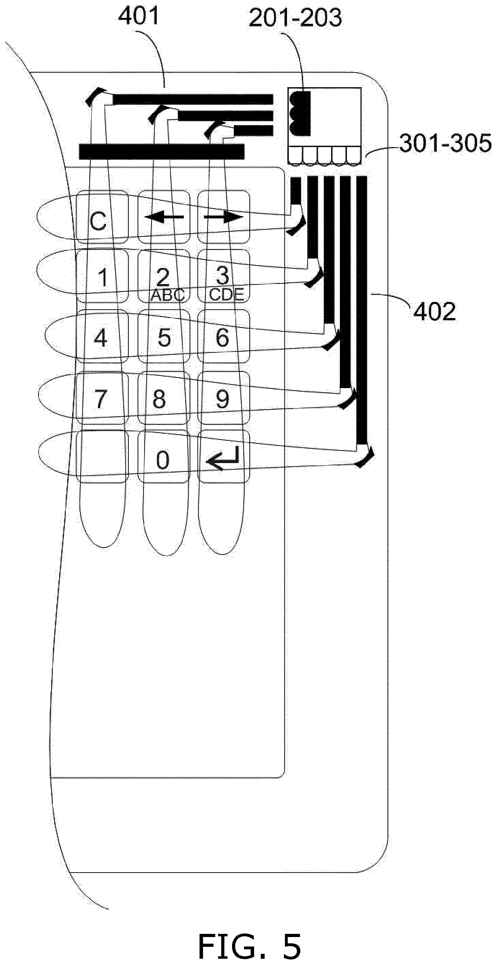

Reference is made to **FIG. 5,** which is an illustration of a portion of a touch screen including a plurality of emitters **201 - 203** that are positioned close together, wherein light is guided by fiber optic light guides **401** to locations along a first screen edge. The portion of the touch screen also includes a plurality of receivers **301 - 305** that are positioned close together, wherein light is guided thereto by fiber optic light guides **402** from locations along a second screen edge.

A light-based touch screen includes one or more emitters, including inter alia infra-red or near infra-red light-emitting diodes (LEDs), and a plurality of receivers, including inter alia photo diodes (PDs), arranged along the perimeter surrounding the touch screen or touch surface. The emitters project light substantially parallel to the screen surface, and this light is detected by the receivers. A pointer, such as a finger or a stylus, placed over a portion of the screen blocks some of the light beams, and correspondingly some of the receivers detect less light intensity. The geometry of the locations of the receivers, and the light intensities they detect, suffice to determine screen coordinates of the pointer. The emitters and receivers are controlled for selective activation and de-activation by a controller. Generally, each emitter and receiver has I/O connectors, and signals are transmitted to specify which emitters and which receivers are activated.

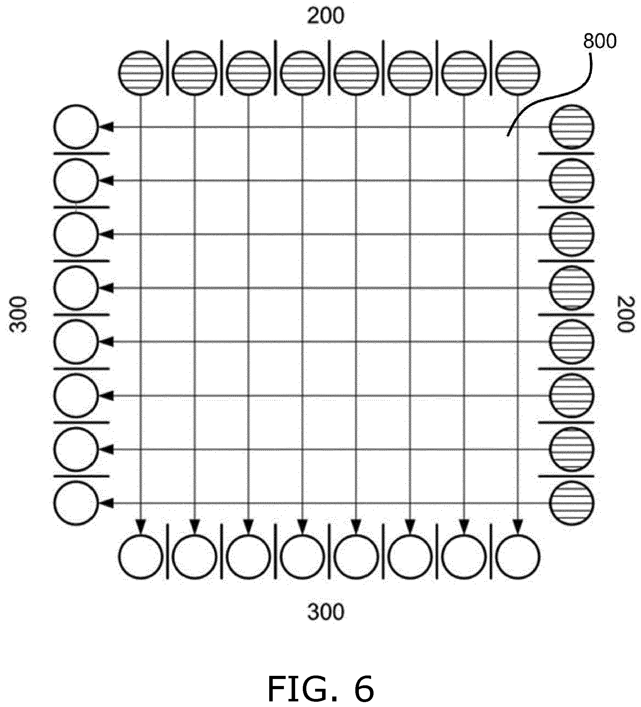

Plural emitters are arranged along two adjacent sides of a rectangular screen, and plural receivers are arranged along the other two adjacent sides. In this regard, reference is now made to **FIG. 6,** which is a diagram of a touch screen **800** having 16 emitters **200** and 16 receivers **300**. Emitters **200** emit infra-red or near infra-red light beams across the top of the touch screen, which are detected by corresponding receivers **300** that are directly opposite respective emitters **200**. When a pointer touches touch screen **800,** it blocks light from reaching some of receivers **300.** By identifying, from the receiver outputs, which light beams have been blocked by the pointer, the pointer's location can be determined.

Light-based touch screens do not place a physical layer over a display, and this provides a user experience that is advantageous over that of conventional capacitive and resistive touch screens. When writing with a stylus on a conventional capacitive or resistive touch screen overlay, the stylus is removed from the display surface, which produces a parallax effect. In distinction, when writing with a stylus on a light-based touch screen, which has no overlay and no protective glass, the stylus is in contact with the writing surface, which produces a natural writing effect.

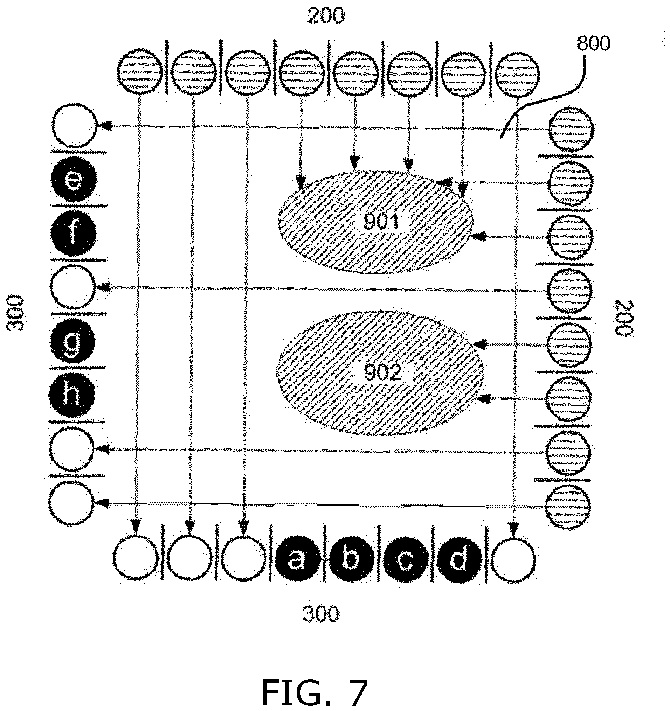

Reference is now made to **FIGS. 7 - 9,** which are diagrams of touch screen **800** of **FIG. 6,** showing detection of two pointers, **901** and **902,** that touch the screen simultaneously. When two or more pointers touch the screen simultaneously, this is referred to as a "multi-touch." Pointers **901** and **902,** which are touching the screen, block light from reaching some of receivers **300.** The locations of pointers **901** and **902** are determined from the crossed lines of the infra-red beams that the pointers block. In distinction, prior art resistance-based and capacitance-based touch screens are generally unable to detect a multi-touch.

When two or more pointers touch screen **800** simultaneously along a common horizontal or vertical axis, the positions of the pointers are determined by the receivers **300** that are blocked. Pointers **901** and **902** in **FIG. 7** are aligned along a common vertical axis and block substantially the same receivers **300** along the bottom edge of touch screen **800;** namely the receivers marked **a, b, c** and **d.** Along the left edge of touch screen **800,** two different sets of receivers **300** are blocked. Pointer **901** blocks the receivers marked **e** and **f,** and pointer **902** blocks the receivers marked **g** and **h.** The two pointers are thus determined to be situated at two locations. Pointer **901** has screen coordinates located at the intersection of the light beams blocked from receivers **a - d** and receivers **e** and **f;** and pointer **902** has screen coordinates located at the intersection of the light beams blocked from receivers **a - d** and receivers **g** and **h.**

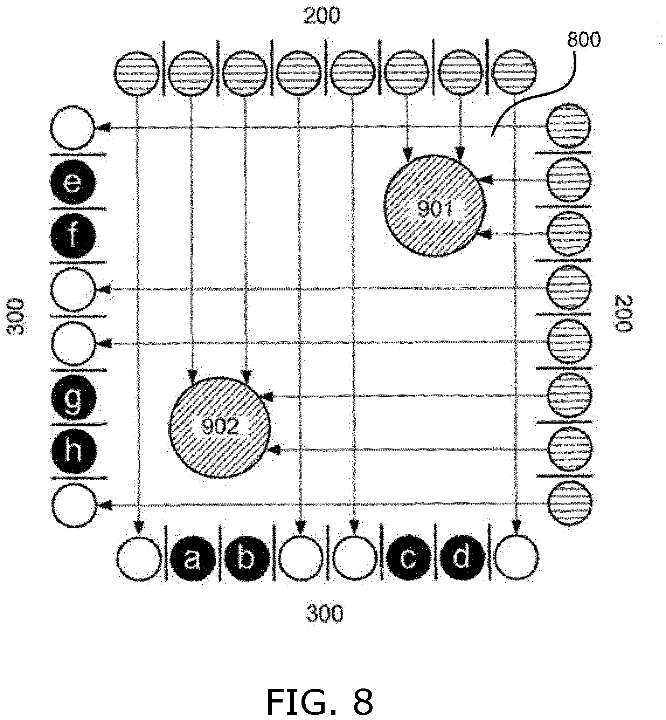

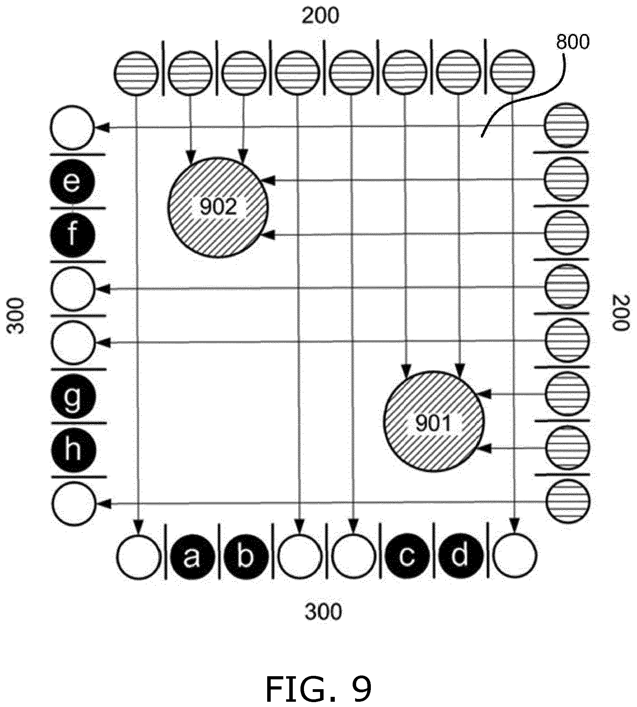

Pointers **901** and **902** shown in **FIGS. 8** and **9** are not aligned along a common horizontal or vertical axis, and they have different horizontal locations and different vertical locations. From the blocked receivers **a - h,** it is determined that pointers **901** and **902** are diagonally opposite one another. They are either respectively touching the top right and bottom left of touch screen **800,** as illustrated in **FIG. 8;** or else respectively touching the bottom right and top left of touch screen **800,** as illustrated in **FIG. 9.**

Discriminating between **FIG. 8** and **FIG. 9** is resolved by either (i) associating the same meaning to both touch patterns, or (ii) by associating meaning to only one of the two touch patterns. In case (i), the UI arranges its icons, or is otherwise configured, such that the effects of both touch patterns **FIG. 8** and **FIG. 9** are the same. For example, touching any two diagonally opposite corners of touch screen **800** operates to unlock the screen.

In case (ii), the UI arranges its icons, or is otherwise configured, such that only one of the touch patterns **FIG. 8** and **FIG. 9** has a meaning associated therewith. For example, touching the upper right and lower left corners of touch screen **800** operates to unlock the screen, and touching the lower right and upper left of touch screen **800** has no meaning associated therewith. In this case, the UI discriminates that **FIG. 8** is the correct touch pattern.

Determining locations of a diagonally oriented multi-touch is described further hereinbelow with reference to shift-aligned arrangements of emitters and receivers, and with reference to light beams directed along four axes. An additional method of resolving ambiguous multi-touches is described with reference to fast scan frequencies enabled by the ASIC controller discussed hereinbelow.

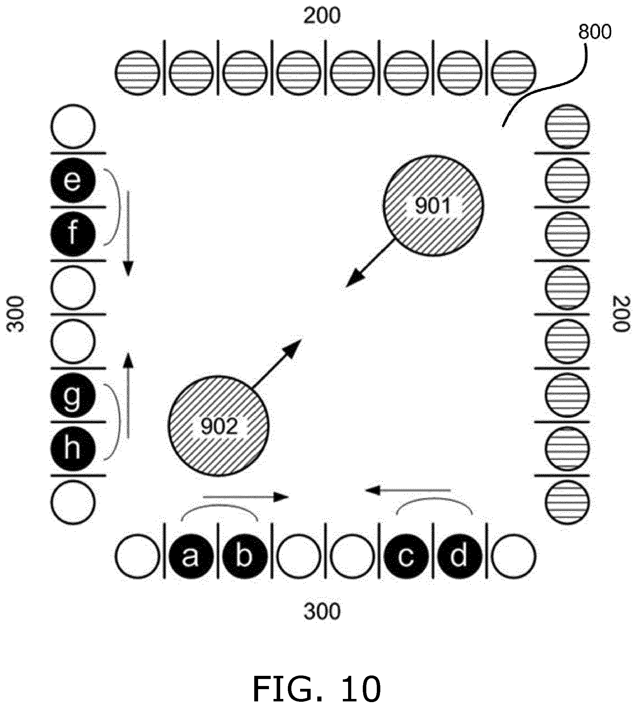

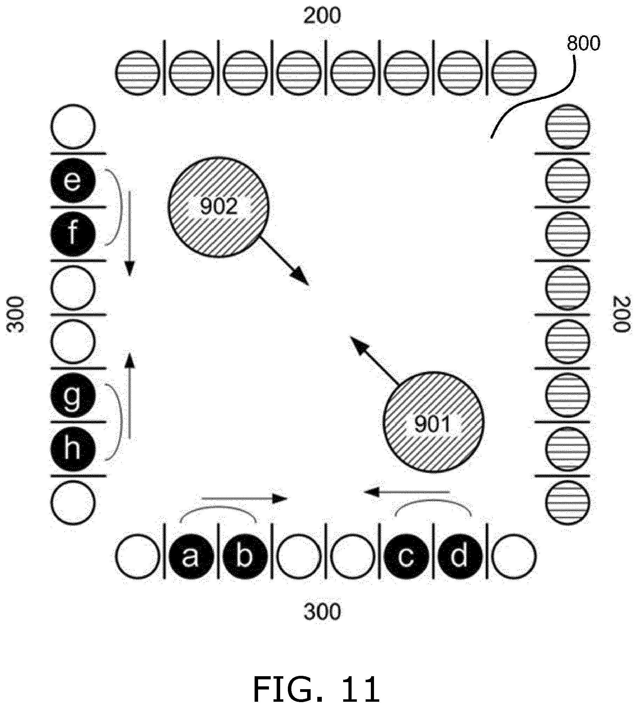

Reference is now made to **FIGS. 10** and **11,** which are diagrams of a touch screen **800** that detects a two-finger glide movement. The two-finger glide movement illustrated in **FIGS. 10** and **11** is a diagonal pinch gesture that brings pointers **901** and **902** closer together. The direction of the glide is determined from changes in which receivers **300** are blocked. As shown in **FIGS. 10** and **11,** blocked receivers are changing from a and **b** to receivers **300** more to the right, and from **c** and **d** to receivers **300** more to the left. Similarly, blocked receivers are changing from **e** and **f** to receivers **300** more to the bottom, and from **g** and **h** to receivers **300** more to the top. For a two-finger glide in the opposite direction, i.e., a spread, or reverse-pinch gesture, that moves pointers **901** and **902** farther apart, the blocked receivers change in the opposite directions.

When pointers **901** and **902** are aligned along a common vertical or horizontal axis, there is no ambiguity in identifying glide patterns. When pointers **901** and **902** are not aligned in a common vertical or horizontal axis, there may be ambiguity in identifying glide patterns, as illustrated in **FIGS. 10** and **11.** In case of such ambiguity, and as described hereinabove with reference to **FIGS. 8** and **9,** discriminating between **FIG. 10** and **FIG. 11 is** resolved by either (i) by associating the same meaning to both glide patterns, or (ii) by associating meaning to only one of the two glide patterns.

Associating the same meaning to both glide patterns may be performed in a pinch zoom gesture, whereby a user places two fingers on the screen and spreads the fingers apart along a diagonal of the screen. Such a gesture activates a zoom-in operation, for increasing the magnification of graphics displayed on the screen. Such a gesture has the same meaning irrespective of whether the pinch zoom is performed along a top-left to bottom-right diagonal, or along a top-right to bottom-left diagonal.

Similar considerations apply to a zoom-out gesture, whereby a user places two fingers on the screen and brings the fingers closer together along a diagonal of the screen, for decreasing the magnification of graphics displayed on the screen. This gesture, too, has the same meaning irrespective of along which diagonal of the screen the gesture is performed.

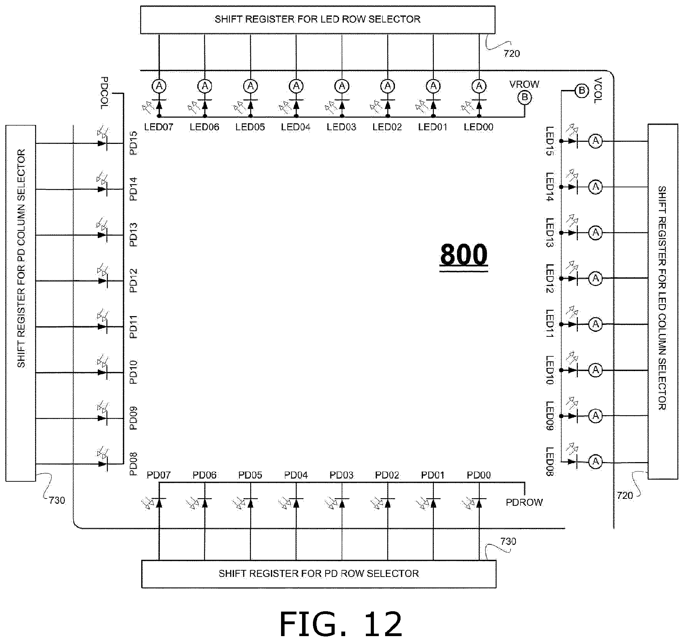

Reference is made to **FIG. 12,** which is a circuit diagram of touch screen **800** from **FIG. 6.** The emitters and receivers are controlled by a controller (not shown). The emitters receive respective signals *LED00 - LED15* from switches **A,** and receive current from *VROW* and *VCOL* through current limiters **B**. The receivers receive respective signals *PD00 - PD15* from shift register **730.** Receiver output is sent to the controller via signals *PDROW* and *PDCOL.* Operation of the controller, of switches **A** and of current limiters **B** is described in applicant's U.S. Patent No. 8,339,379, issued on December 25, 2012 and entitled LIGHT-BASED TOUCH SCREEN.

The emitters are controlled via a first serial interface, which transmits a binary string to a shift register **720.** Each bit of the binary string corresponds to one of the emitters, and indicates whether to activate or deactivate the corresponding emitter, where a bit value "1" indicates activation and a bit value "0" indicates deactivation. Successive emitters are activated and deactivated by shifting the bit string within shift register **720.**

Similarly, the receivers are controlled by a second serial interface, which transmits a binary string to a shift register **730.** Successive receivers are activated and deactivated by shifting the bit string in shift register **730.** Operation of shift registers **720** and 730 is described in applicant's U.S. Patent No. 8,339,379, referenced above.

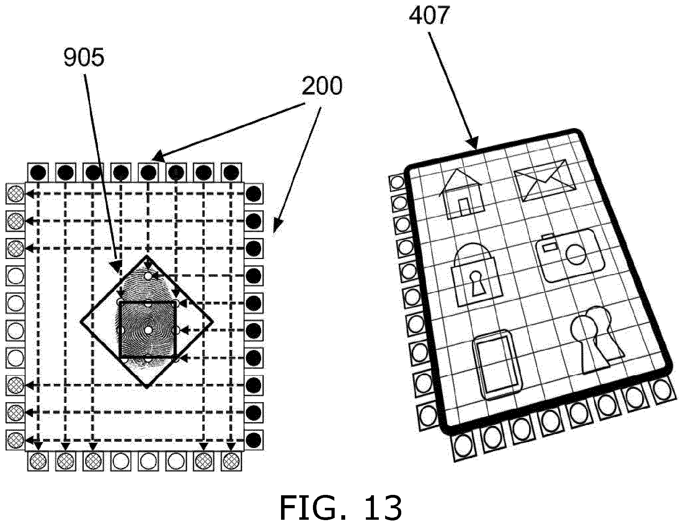

Reference is made to **FIG. 13,** which is a simplified diagram of a light-based touch screen system. The touch screen of **FIG. 13** does not require an overlay. Instead, a small infrared transparent frame **407** surrounds the display to reflect beams between emitters **200** and receivers positioned on opposite sides of the screen. When a pointer, such as a finger or a stylus, touches the screen in a specific area **905,** one or more light beams generated by emitters **200** are obstructed. The obstructed light beams are detected by corresponding decreases in light received by one or more of the receivers, which is used to determine the location of the pointer.

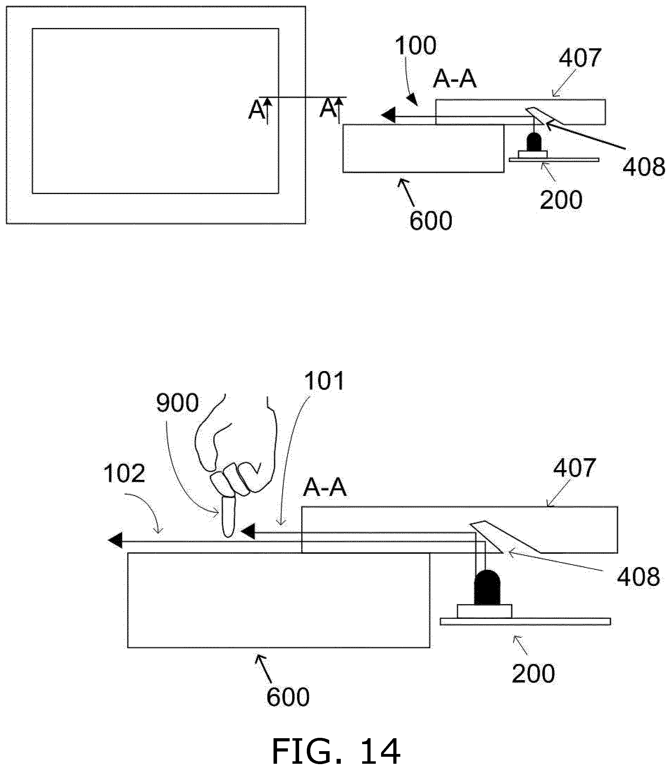

Reference is made to **FIG. 14,** which is a simplified cross-sectional diagram of the touch screen system of **FIG. 13.** Shown in **FIG. 14** is a cross-sectional view of a section **A-A** of an LCD display **600** and its surrounding infrared transparent frame **407.** The cross-sectional view shows an emitter **200** emitting light **100** that is reflected by a cutout **408** in frame **407,** and directed substantially parallel over the display surface. As a finger **900** approaches near the display surface, some of the light, **101,** emitted by the emitters and directed over the location of the near touch is blocked by the finger, and some of the light, **102,** passes between the fingertip and the screen glass. When finger **900** touches the display surface, all of the light emitted by the emitters and directed over the touch location is blocked by finger **900.**

**Touch Screen System Configuration No. 1**

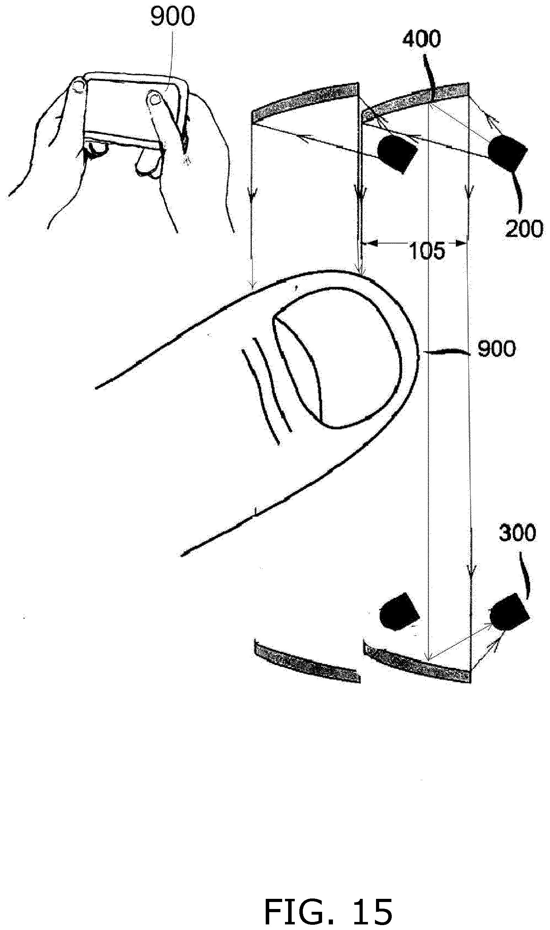

Reference is made to **FIG. 15,** which is a simplified illustration of an arrangement of emitters, receivers and optical elements that enable a touch screen system to determine a precise location of a fingertip touching the screen. Shown in **FIG. 15** are a mirror or optical lens **400,** an emitter **200,** a wide reflected light beam **105,** a pointer **900** and a receiver **300.** Mirror or optical lens **400** generates a wide light beam that is focused onto receiver **300** by a second mirror or optical lens. The wide beam makes it possible to sense an analog change in the amount of light detected at receiver **300** when a pointer blocks a portion of the wide beam. In some cases, the mirror or optical lens **400** distributes light at approximately uniform intensity along the width of beam **105.** Thus, as a fingertip passes across wide beam **105** it blocks increasing amounts of the beam's light, and the amount of blocked light is linearly proportional to the width of the blocked portion of the beam. The fingertip is slightly wider than each wide beam, such that the fingertip is detected by at least two adjacent wide beams. The precise location of the finger is determined by interpolating the detection signals in adjacent beams. In systems, where beam **105** is directed though air over screen **800,** pointer **900** in **FIG. 15** blocks only a portion of wide beam **105.** The wide beam also enables mounting the emitters far apart from one another, and mounting the receivers far apart from one another. Consequently, this reduces the bill of materials by requiring fewer emitters and fewer receivers.

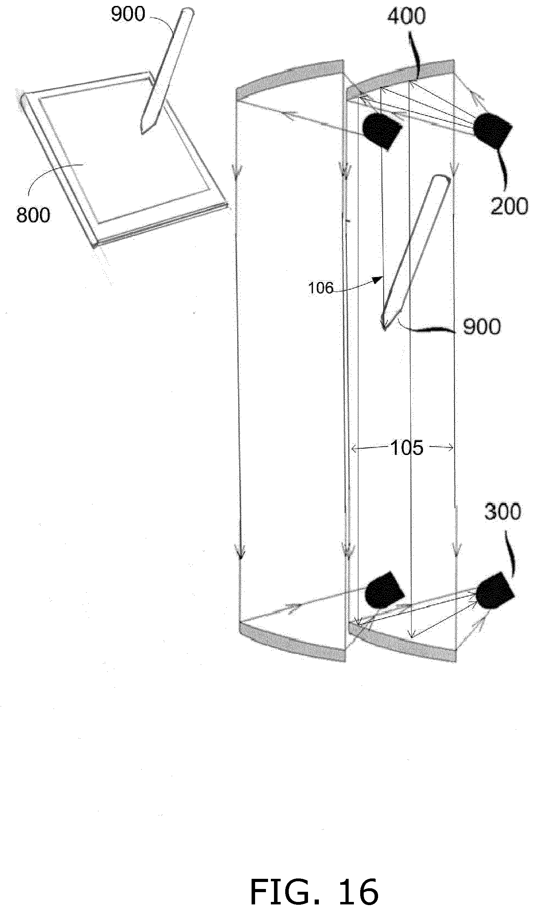

Reference is made to **FIG. 16,** which is a simplified illustration of an arrangement of emitters, receivers and optical elements that enable a touch screen system to detect a pointer that is smaller than the sensor elements, including inter alia a stylus. Shown in **FIG. 16** are a mirror or optical lens **400,** an emitter **200,** a wide reflected light beam, **105,** a pointer **900** and a receiver **300.** Mirror or optical lens **400** generates a wide light beam that is focused onto receiver **300** by a second mirror or optical lens. The wide beam enables sensing of an analog change in the amount of light detected at receiver **300** when a pointer **900** blocks a portion of the wide beam, in particular, when pointer **900** is placed in front of mirror or lens **400.** Pointer **900,** as shown in **FIG. 16,** blocks only a portion of wide beam **105,** indicated by beam **106** being blocked by the tip of pointer **900.** The wide beam also enables mounting emitters far apart from one another, and mounting receivers far apart from one another. In turn, this reduces the bill of materials by requiring fewer emitters and fewer receivers.

Without the wide beam, there are generally spaces between beams that go undetected, making it impossible to distinguish between a user dragging a fine-point stylus across the beams, and the user tapping on different beams with a fine-point stylus. Moreover, with widely spaced narrow beams the pointer touch must be very precise in order to cross a narrow beam.

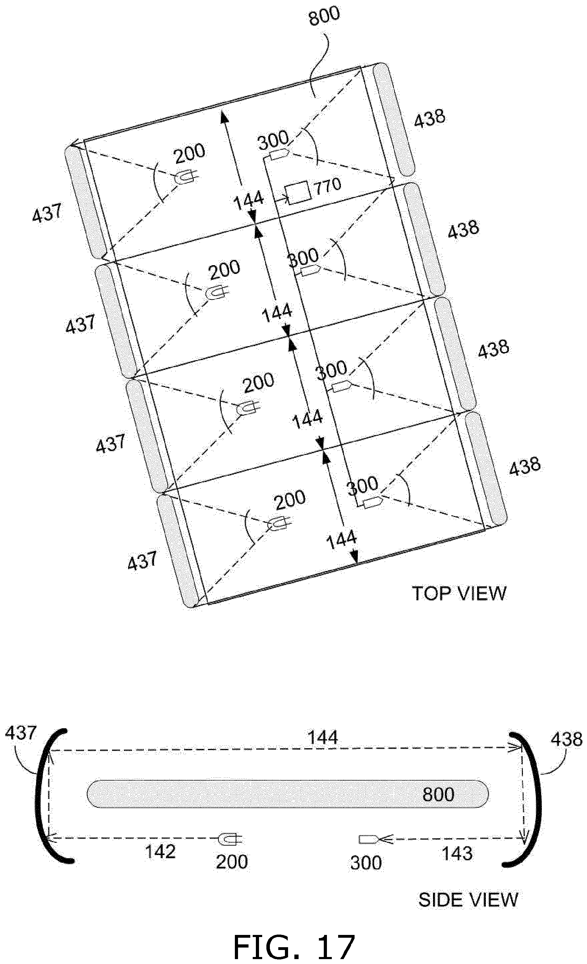

Reference is made to **FIG. 17,** which is a simplified diagram of a touch screen with wide light beams covering the screen. Touch screen systems using wide beams are described in applicant's patent application, U.S. Application Serial No. 12/760,568, US 2010/0238139 A1, filed on April 15, 2010 and entitled OPTICAL TOUCH SCREEN SYSTEMS USING WIDE LIGHT BEAMS.

The emitters and receivers shown in **FIG. 17** are spaced relatively widely apart. Generally, the emitters are not activated simultaneously. Instead, they are activated one after another, and the coverage areas of their light beams are substantially connected.

**FIG. 17** shows a top view and a side view of a touch system having a touch screen or touch surface **800.** The touch system provides touch-sensitive functionality to a surface irrespective of whether or not the surface includes a display screen. Moreover, a physical surface is not required; the light beams may be projected though the air, and the location of a pointer in mid-air that breaks the light beams may be detected.

Also shown in **FIG. 17** are emitters **200,** reflectors **437** and **438,** and receivers **300** coupled with a calculating unit **770.** Emitters **200** and receivers **300** are positioned beneath screen **800.** Emitters **200** project arcs **142** of light under screen **800** onto reflectors **437.** The distance between emitters **200** and reflectors **437** is sufficient for an arc to spread into a wide beam at a reflector **437.** The distance between emitters **200** and reflectors **437** may be approximately 4 mm, 10 mm, 20 mm or greater, depending on factors including inter alia the widths of the wide beams, the required touch resolution, the emitter characteristics and the optical reflector characteristics.

Reflectors **437** collimate the light as wide beams **144** across a swath of screen surface. A wide beam **144** reaches a reflector **438,** which (i) redirects the light beam below screen **800,** and (ii) narrows the wide beam **144** into an arc **143.** As such, wide beam **144** converges onto the surface of one of receivers **300** below the surface of screen **800.** The light intensity detected by each of receivers **300** is communicated to calculating unit **770.**

The configuration of **FIG. 17** is of advantage in that the wide light beams cover the entire screen surface, thereby enabling touch sensitive functionality anywhere on the screen. Additionally, the cost of materials for the touch screen is reduced, since relatively few emitter and receiver components are required.

## Touch Screen System Configuration No. 2

Configurations 2 - 5 use multiple emitter-receiver pairs to precisely identify a touch position. In some of the configurations described hereinabove there are opposing rows of emitters and receivers, each emitter being opposite a respective receiver. In configurations 2 and 3 the emitters are shift-aligned with the receivers. For example, each emitter may be positioned opposite a midpoint between two opposing receivers. Alternatively, each emitter may be off-axis aligned with an opposite receiver, but not opposite the midpoint between two receivers.

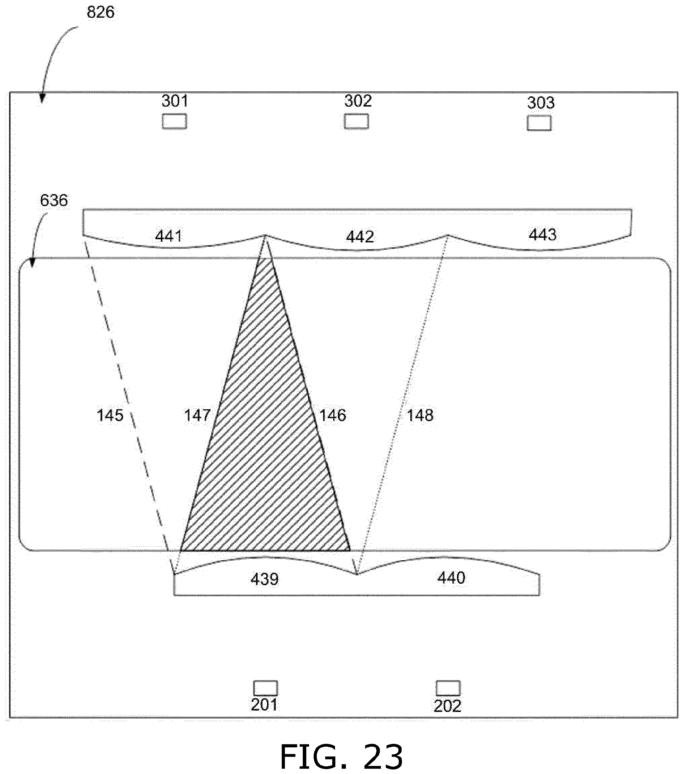

Two types of collimating lenses are employed; namely, (i) conventional collimating lenses, and (ii) collimating lenses coupled with a surface of micro-lenses that refract light to form multiple wide divergent beams. When a light source is positioned at the focus of a conventional collimating lens, the lens outputs light in substantially parallel beams, as illustrated inter alia in **FIGS. 15 - 17.** When a light source is positioned between a conventional collimating lens and its focus, the lens outputs a wide beam, the outer edges of which are not parallel to each other, as illustrated inter alia in **FIGS. 23 - 26.**

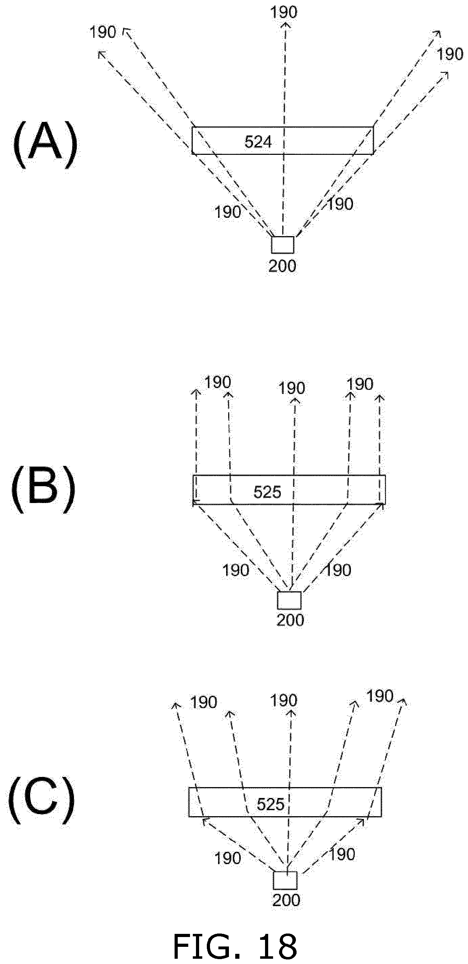

Reference is made to **FIG. 18,** which is a simplified illustration of a collimating lens in cooperation with a light emitter. Shown in **FIG. 18** is **(A)** a light emitter **200** transmitting light beams **190** through a flat clear glass **524.** Beams **190** are unaltered by the glass.

Also shown in **FIG. 18** is **(B)** an emitter positioned at the focus of a collimating lens **525.** Beams **190** are collimated by lens **525.**

Also shown in **FIG. 18** is **(C)** an emitter **200** positioned between collimating lens **525** and the lens' focus. Beams **190** are partially collimated by lens **525;** i.e., the output wide beams are not completely parallel.

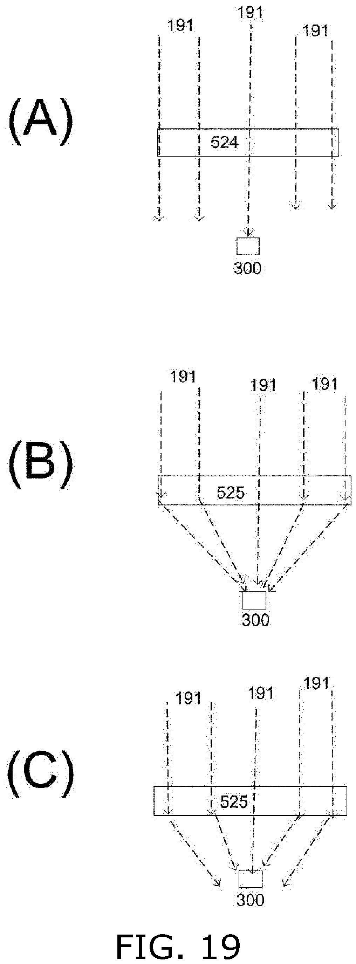

Reference is made to **FIG. 19,** which is a simplified illustration of a collimating lens in cooperation with a light receiver. Shown in **FIG. 19** is **(A)** substantially parallel light beams **191** transmitted through a flat clear glass **524.** Beams **191** are unaltered by the glass.

Also shown in **FIG. 19 is (B)** a receiver **300** positioned at the focus of collimating lens **525.** Beams **191** are refracted onto receiver **300** by collimating lens **525.**

Also shown in **FIG. 19** is **(C)** a receiver **300** positioned between collimating lens **525** and the lens' focus. Beams **191** are collimated by lens **525,** but because receiver **300** is not at the lens focus, the beams do not converge thereon.

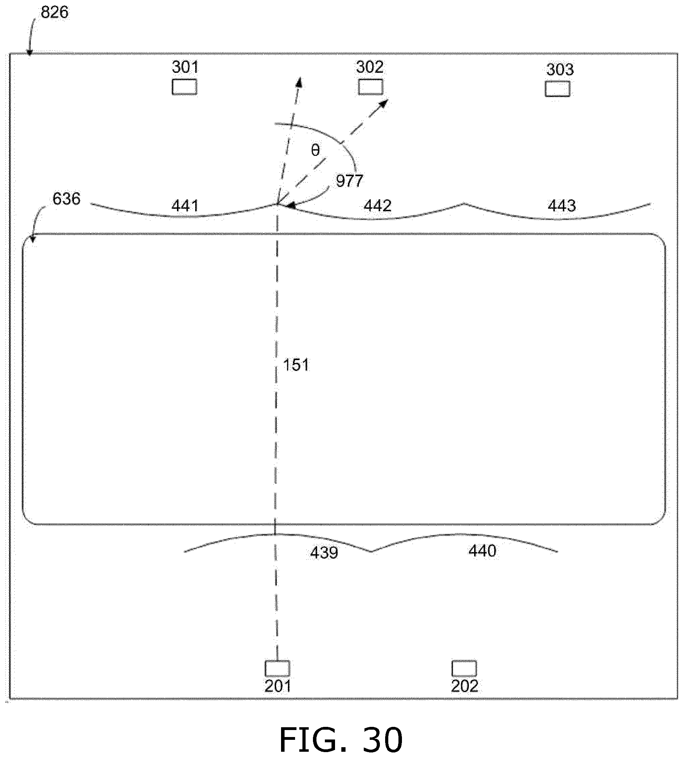

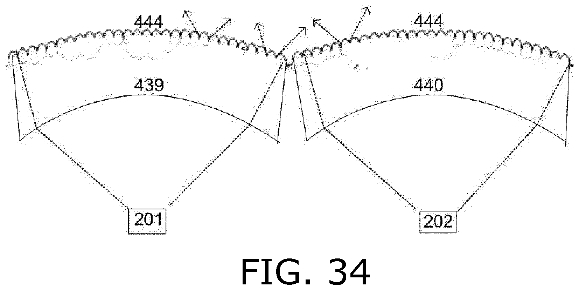

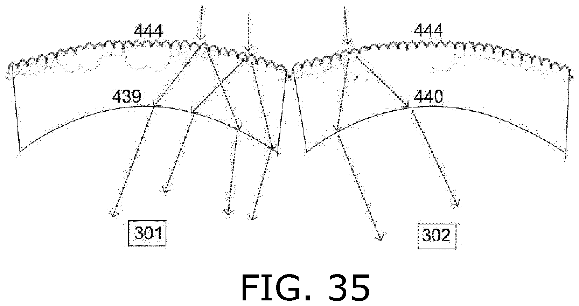

Collimating lenses coupled with an outer surface of micro-lenses, which face away from emitters or receivers, transmit light in two stages. As light passes through the bodies of the lenses, light beams are collimated as with conventional collimating lenses. However, as the light passes through the surface of micro-lenses, the light is refracted into multiple wide divergent beams, as illustrated inter alia in **FIGS. 30, 31** and **33 - 35.** In **FIGS. 34** and **35,** collimating lenses **439** and **440** are shown having micro-lens surfaces **444.** In **FIG. 34,** light emitters **201** and **202** are positioned within the focal distance of collimating lenses **439** and **440,** and wide light beams from the emitters are shown entering lenses **439** and **440.** Light is collimated as it passes through the lens, as with conventional collimating lenses. When the collimated light passes through micro-lens surface **444,** it is refracted into multiple wide divergent beams, three of which are illustrated in **FIG. 34.** In **FIG. 35,** light receivers **301** and **302** are positioned within the focal distance of the collimating lenses, and light beams are shown entering lenses **439** and **440** through micro-lens surface **444.** The incoming beams are refracted into wide divergent beams inside the lens bodies. The refracted beams are directed by the collimating portions of lenses **439** and **440,** which concentrate the beams onto light receivers **301** and **302.**

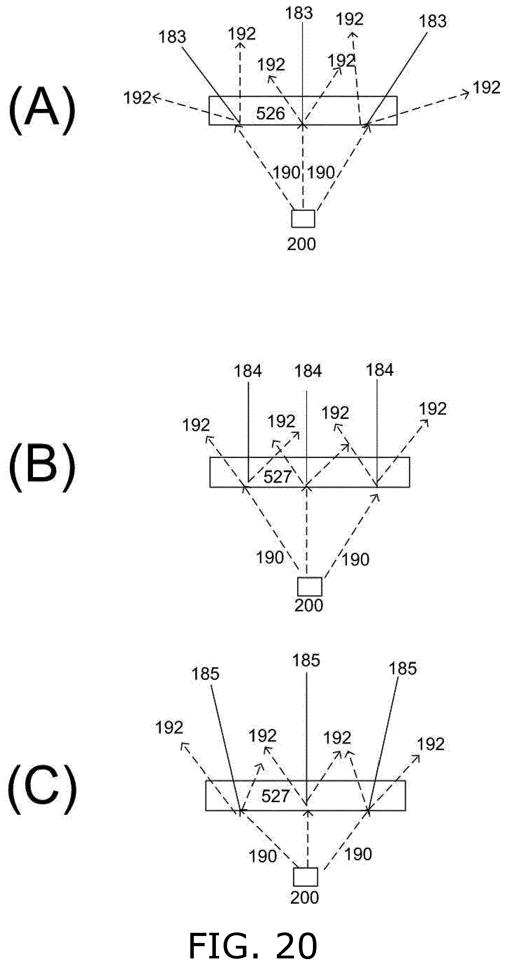

Reference is made to **FIG. 20,** which is a simplified illustration of a collimating lens having a surface of micro-lenses facing an emitter. **FIG. 20** shows **(A)** a flat glass **526** having micro-lenses etched on a surface facing an emitter **200.** Light beams **190** enter glass **526** at various angles. At each entry point, a micro-lens refracts an incoming beam into a wide arc **192.** Lines **183** show how the middle of each arc is oriented in a different direction, depending on the angle of approach of the beam into glass **526.**

**FIG. 20** also shows **(B)** a collimating lens **527** having micro-lenses etched on a surface facing an emitter **200.** A focus point of the lens, without the micro-lenses, is determined, and emitter **200** is positioned at that point. Light beams **190** enter collimating lens **527** at various angles. At each entry point, a micro-lens refracts the incoming beams into a wide arc **192.** Lines **184** show how the middle of each arc is oriented in the same direction, irrespective of the angle of approach of the beams into collimating lens **527.** This type of lens is referred to as a "multi-directional collimating lens", because it outputs arcs of light, not parallel beams, but all of the arcs are substantially uniformly directed.

**FIG. 20** also shows **(C)** the same collimating lens **527,** but with emitter **200** positioned between the lens and the focus point. The output arcs **192** are oriented in directions between those of the arcs of **(A)** and the arcs of **(B),** indicated by lines **185.**

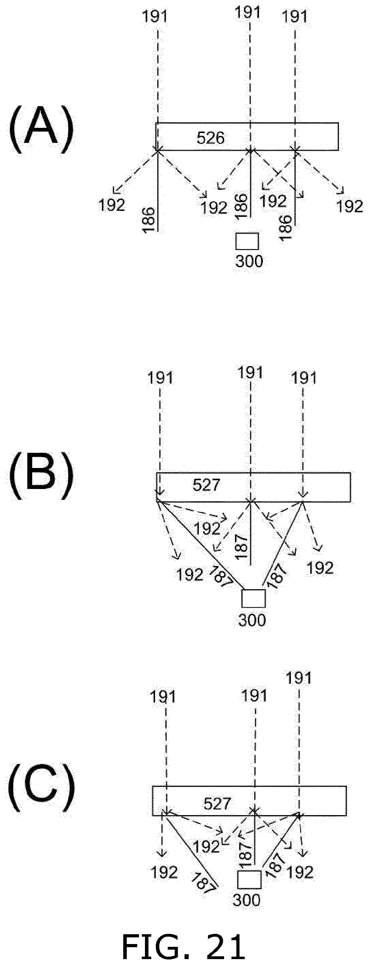

Reference is made to **FIG. 21,** which is a simplified illustration of a collimating lens having a surface of micro-lenses facing a receiver. **FIG. 21** shows **(A)** a flat glass **526** having micro-lenses etched on a surface facing a receiver **300.** Light beams **191** are shown entering glass **526** as parallel beams. At each exit point, a micro-lens refracts a beam into a wide arc **192.** Lines **186** show how the middle of each arc is oriented in the same direction. The arcs do not converge on receiver **300.**

**FIG. 21** also shows **(B)** a multi-directional collimating lens **527** having micro-lenses etched on a surface facing receiver **300.** A focus point of the lens, without the micro-lenses, is determined, and receiver **300** is positioned at that point. Light beams **191** enter lens **527** as substantially parallel beams. At each exit point, a micro-lens refracts an incoming beam into a wide arc **192.** Lines **187** show how the middle of each arc is oriented towards receiver **300.**

**FIG. 21** also shows **(C)** the same lens **527,** but with receiver **300** positioned between the lens and the focus point.

As used through the present specification, the term "collimating lens" includes a multi-directional collimating lens.

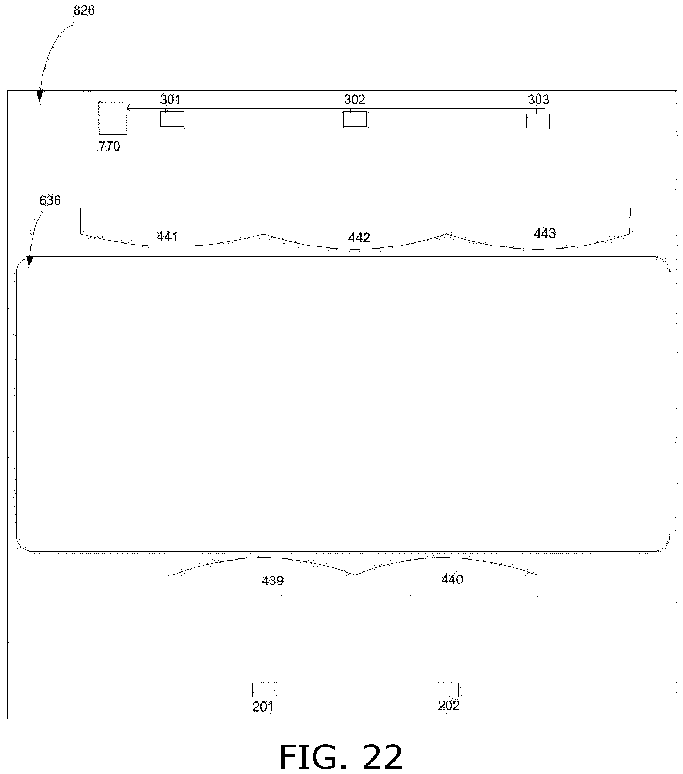

Reference is made to **FIG. 22,** which is a simplified diagram of an electronic device with a wide-beam touch screen. Shown in **FIG. 22** is an electronic device **826** with two emitters, **201** and **202,** and three receivers, **301, 302** and **303,** the emitters and receivers being placed along opposite edges of a display **636.** Light intensities detected at each of receivers **301, 302** and **303,** are communicated to a calculating unit **770.** Each emitter and receiver uses a respective primary lens, labeled respectively **441, 442, 443, 439** and **440.** Emitters and receivers use the same lens arrangement, to ensure that light emitted by an emitter and re-directed by an emitter lens, is reverse-directed by an opposing lens onto a receiver.

It is desirable that the light beam from each emitter covers its two opposite receiver lenses. Such a condition is achieved by positioning each emitter between its lens and its lens' focal point. As such, the emitter is not in focus and, as a result, its light is spread, instead of being collimated, by its lens. Each receiver is similarly positioned between its lens and its lens' focal point.

Reference is made to **FIG. 23,** which is a diagram of electronic device **826** of **FIG. 22,** depicting overlapping light beams from one emitter detected by two receivers. Shown in **FIG. 23** are two wide light beams from emitter **201,** one of which is detected at receiver **301** and another of which is detected at receiver **302,** respectively. The left and right sides of the one beam are marked **145** and **146,** respectively, and the left and right sides of the other beam are marked **147** and **148,** respectively. The shaded area in **FIG. 23** indicates the area on display **636** at which a touch blocks a portion of both wide beams. As such, a touch in this area is detected by two emitter-receiver pairs; namely, **201-301** and **201-302.**

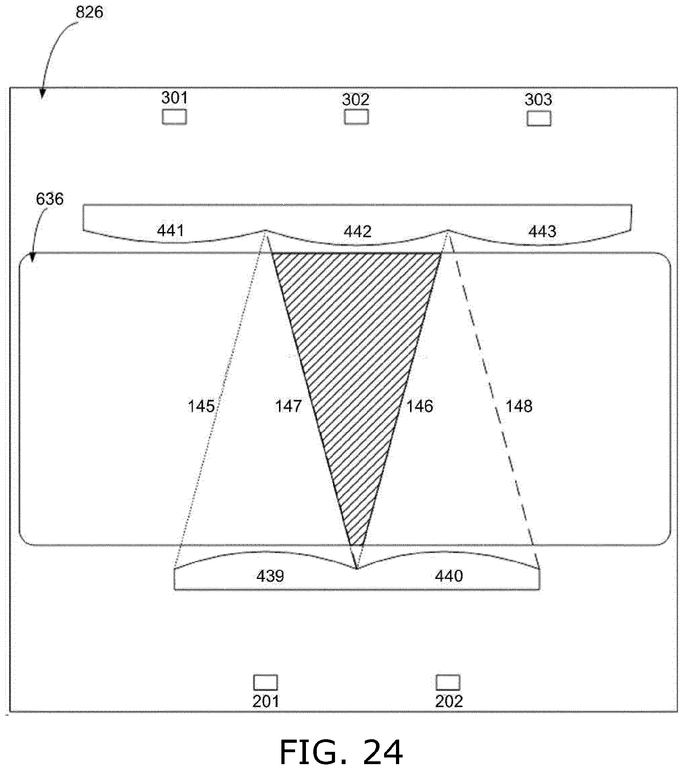

Reference is made to **FIG. 24,** which is a diagram of electronic device **826** of **FIG. 22,** depicting overlapping light beams from two emitters detected by one receiver. Shown in **FIG. 24** are wide beams, one from emitter **201** and another from emitter **202,** that are both detected at receiver **302.** The left and right sides of the one beam are marked **145** and **146,** respectively, and the left and right sides of the other beam are marked **147** and **148,** respectively. The shaded area in **FIG. 24** indicates the area on display **636** at which a touch blocks a portion of both wide beams. As such, a touch in this area is detected by two emitter-receiver pairs; namely, **201-302** and **202-302.**

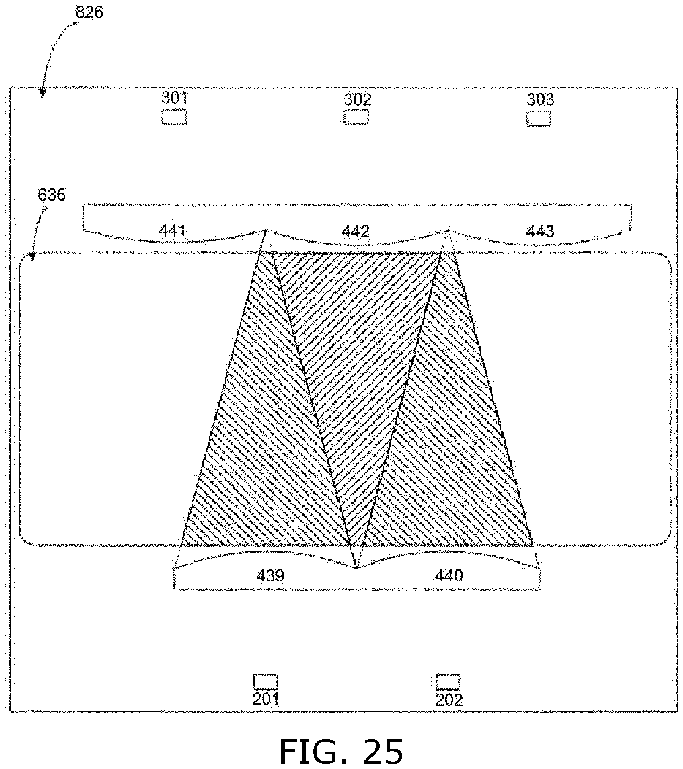

Reference is now made to **FIG. 25,** which is a diagram of the electronic device **826** of **FIG. 22,** showing that points on the screen are detected by at least two emitter-receiver pairs. **FIG. 25** shows the wide beams of **FIGS. 23** and **24,** and illustrates that touches in the shaded wedges on display **636** are detected by at least two emitter-receiver pairs. The two emitter-receiver pairs are either one emitter with two receivers, as in **FIG. 23,** or two emitters with one receiver, as in **FIG. 24.** More specifically, touches that occur near the row of emitters are generally detected by the former, and touches that occur near the row of detectors are generally detected by the latter. By surrounding the screen with similarly arranged emitters, lenses and receivers, any point may be similarly detected by two emitter-receiver pairs.

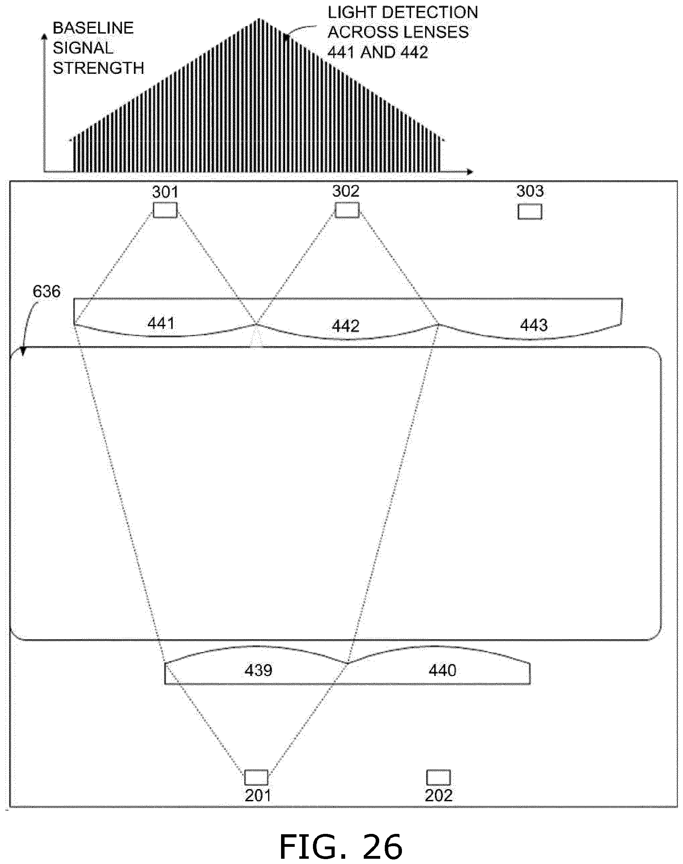

Reference is made to **FIG. 26,** which is a simplified diagram of a wide-beam touch screen, showing an intensity distribution of a light signal. Shown in **FIG. 26** is a wide angle light beam emitted by emitter **201** into lens **439.** The light beam crosses over display **636** and substantially spans lenses **441** and **442.** The light is detected at receivers **301** and **302.**

Shown in **FIG. 26** is a graph of detected light intensity. Total detected light corresponds to a shaded area under the graph. An object touching the screen blocks a portion of this light. If the object touching the screen moves across the wide beam, from left to right, the amount of blocked light increases, and correspondingly the total detected light decreases, as the object progresses from the left edge of the beam to the center of the beam. Similarly, the amount of blocked light decreases, and correspondingly the total detected light increases, as the object progresses from the center of the beam to the right edge of the beam.

It is noted that the detected light intensities at the edges of the light beam are strictly positive, thus ensuring that a touch at these edges is detected.

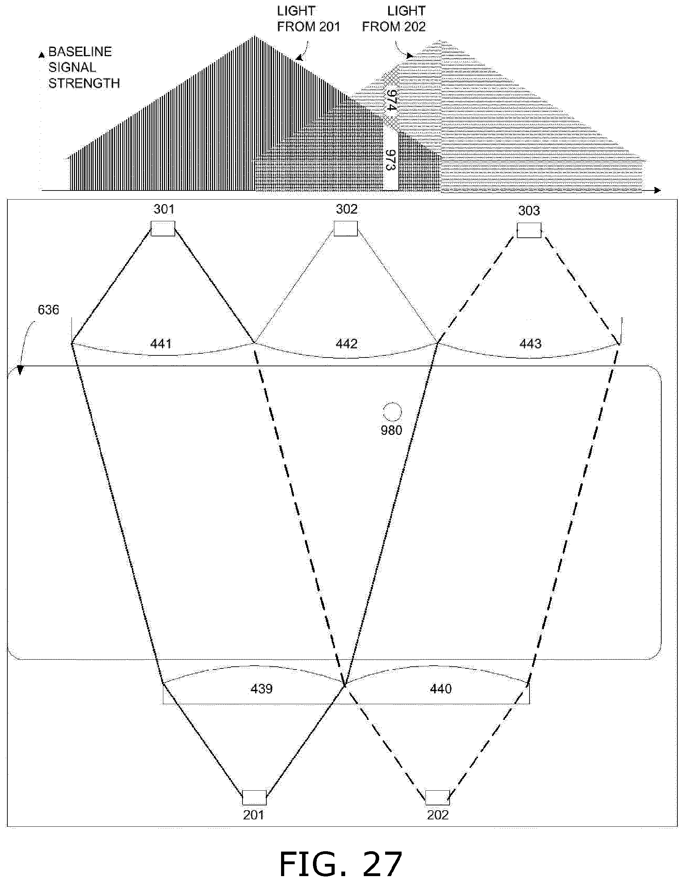

Reference is made to **FIG. 27,** which is a simplified diagram of a wide-beam touch screen, showing intensity distributions of overlapping light signals from two emitters. FIG. 27 shows light detected from emitters **201** and **202.** A touch point **980** on display **636** blocks light from these emitters differently. Area **973** indicates attenuation of light from emitter **201** by touch point **980,** and the union of areas **973** and **974** corresponds to the attenuation of light from emitter **202** by point **980.** By comparing the light attenuation the two emitter-receiver pairs, **201-302** and **202-302,** a precise touch coordinate is determined.

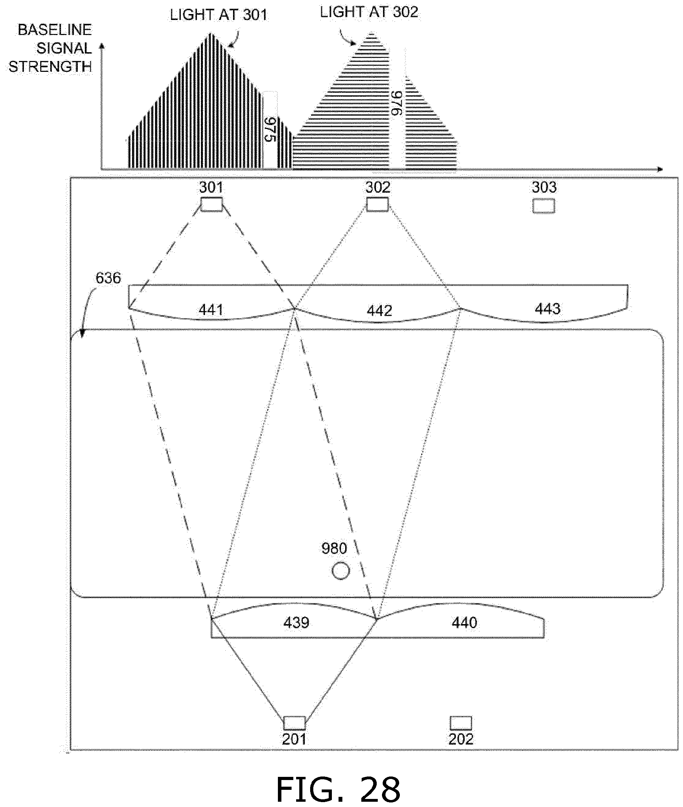

Reference is made to **FIG. 28,** which is a simplified diagram of a wide-beam touch screen, showing intensity distributions of two sets of overlapping light signals from one emitter. As shown in **FIG. 28,** touch point **980** is inside the area detected by emitter-receiver pair **201-301** and emitter-receiver pair **201-302.** The attenuation of the light signal at receiver **302,** depicted as area **976,** is greater than the attenuation at receiver **301,** depicted as area **975.** By comparing the light attenuation in the two emitter-receiver pairs, **201-301** and **201-302,** a precise touch coordinate is determined.

Determining the position of touch point **980** requires determining a position along an axis parallel to the edge along which the emitters are positioned, say, the x-axis, and along an axis perpendicular to the edge, say, the y-axis. An approximate y-coordinate is first determined and then, based on the expected attenuation values for a point having the thus determined y-coordinate and based on the actual attenuation values, a precise x-coordinate is determined. In turn, the x-coordinate thus determined is used to determine a precise y-coordinate. In cases where the touch point **980** is already touching the screen, either stationary or in motion, previous x and y coordinates of the touch point are used as approximations to subsequent x and y coordinates. Alternatively, only one previous coordinate is used to calculate a first subsequent coordinate, with the second subsequent coordinate being calculated based on the first subsequent coordinate. Alternatively, previous coordinates are not used.

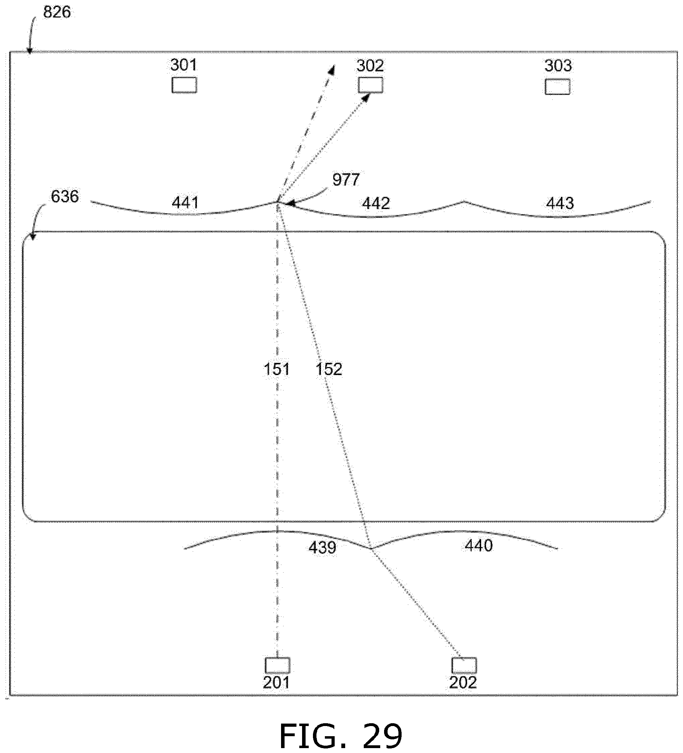

Reference is made to **FIG. 29,** which is a simplified diagram of a wide-beam touch screen with emitter and receiver lenses that do not have micro-lens patterns. Shown in **FIG. 29** is an electronic device **826** with a display **636,** emitters **201** and **202,** corresponding emitter lenses **439** and **440,** receivers **301, 302** and **303,** and corresponding receiver lenses **441, 442** and **443.** Two light beams, **151** and **152,** from respective emitters **201** and **202,** arrive at a point **977** that is located at an outer edge of lens **442.** Since beams **151** and **152** approach point **977** at different angles of incidence, they do not converge on receiver **302.** Specifically, light beam **152** arrives at receiver **302,** and light beam **151** does not arrive at receiver **302.**

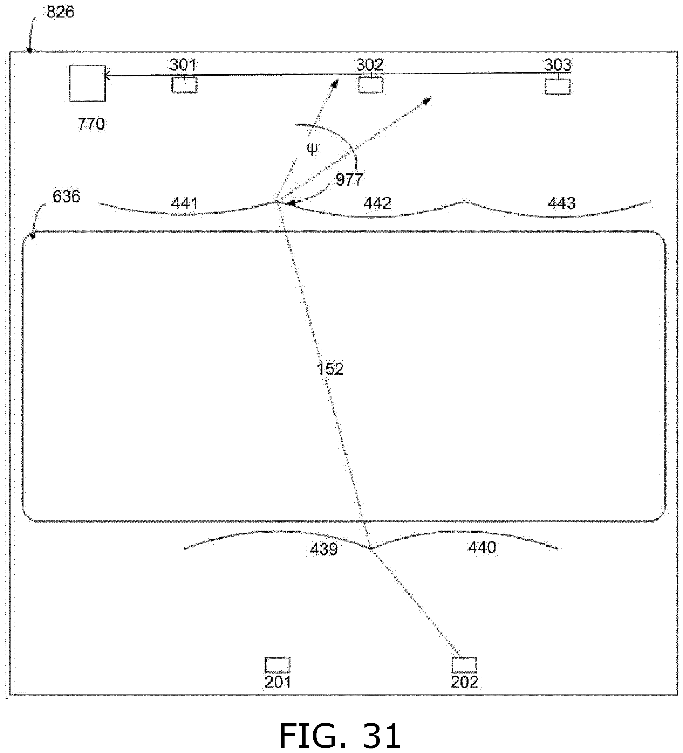

In order to remedy the non-convergence, a fine pattern of micro-lenses is integrated with the receiver lenses, at many points along the surfaces of the lenses. The micro-lenses distribute incoming light so that a portion of the light arriving at each micro-lens reaches the receivers. In this regard, reference is made to **FIGS. 30** and **31,** which are simplified diagrams of a wide-beam touch screen with emitter and detector lenses that have micro-lens patterns. **FIG. 30** shows incoming beam **151** being spread across an angle $\theta$ by a micro-lens at location **977,** thus ensuring that a portion of the beam reaches receiver **302. FIG. 31** shows incoming beam **152** being spread across an angle $\psi$ by the same micro-lens at location **977,** thus ensuring that a portion of this beam, too, reaches receiver **302.** By arranging the micro-lenses at many locations along each receiver lens, light beams that enter the locations from different angles are all detected by the receiver. The detected light intensities are communicated to a calculating unit **770** coupled with the receivers.

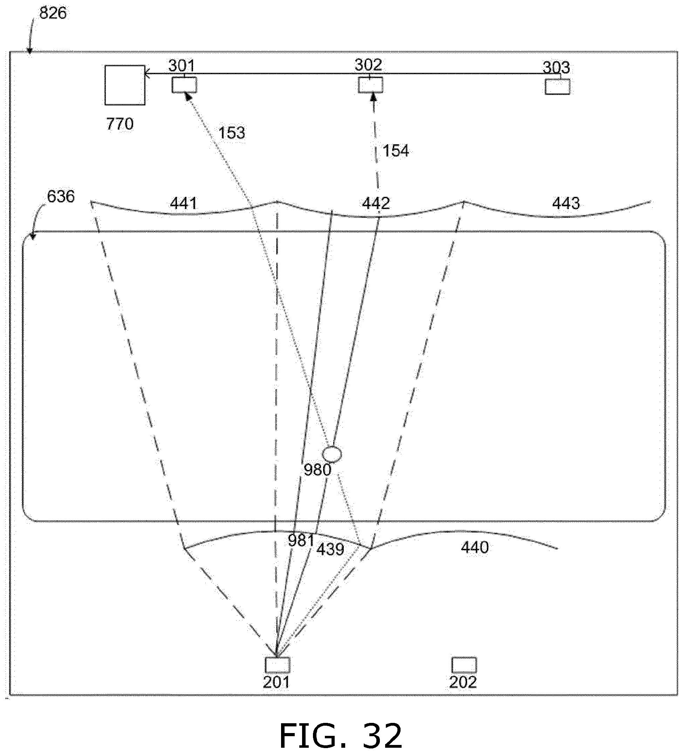

Reference is made to **FIG. 32,** which is a simplified diagram of a wide-beam touch screen with emitter and receiver lenses that do not have micro-lens patterns. Shown in **FIG. 32** is an electronic device **826** with a display **636,** emitters **201** and **202,** corresponding emitter lenses **439** and **440,** receivers **301, 302** and **303,** and corresponding receiver lenses **441, 442** and **443.** Two light beams emitted by emitter **201** and detected by respective receivers **301** and **302,** are desired in order to determine a precise location of touch point **980.** However, lens **439,** without micro-lens patterns, cannot refract a beam crossing point **980** to receiver **301.** I.e., referring to **FIG. 32,** lens **439** cannot refract beam **153** as shown. Only the beam shown as **154,** crossing point **980,** is detected.

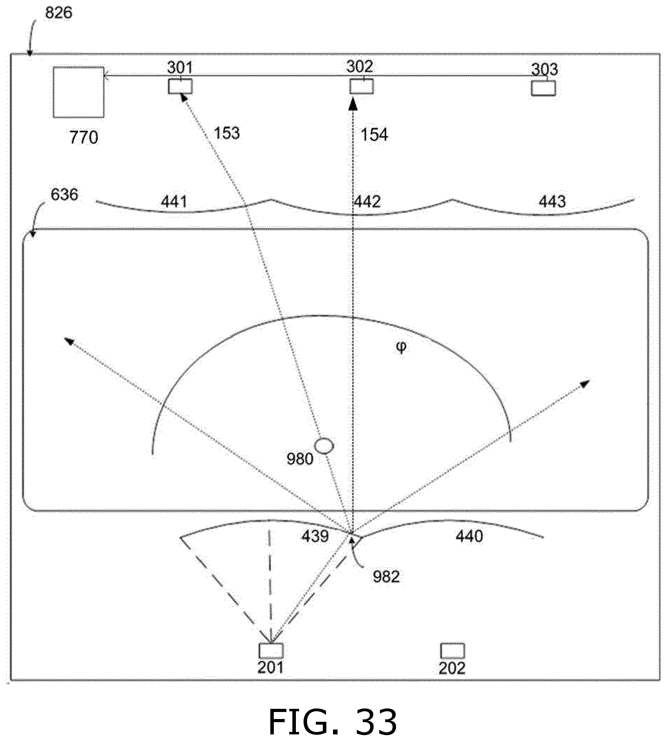

In order to remedy this detection problem, micro-lenses are integrated with the emitter lenses at many points along the surface of the lenses. The micro-lenses distribute outgoing light so that a portion of the light reaches the desired receivers. In this regard, reference is made to **FIG. 33,** which is a simplified diagram of a wide beam touch screen, with emitter and receiver lenses that have micro-lens patterns. **FIG. 33** shows that a portion of light exiting from micro-lens location **982** reaches multiple receivers. As such, a touch at point **980** is detected by receivers **301** and **302.** It will be noted from **FIGS. 32** and **33** that the beams passing through point **980** are generated by micro-lenses at different locations **981** and **982.** Light intensity values detected by the receivers of **FIGS. 32** and **33** are communicated to a calculating unit **770.**

Micro-lens patterns integrated with emitter and receiver lenses thus generate numerous overlapping light beams that are detected. Each point on the touch screen is traversed by multiple light beams from multiple micro-lenses, which may be on the same emitter lens. The micro-lenses ensure that the multiple light beams reach the desired receivers. Reference is made to **FIG. 34,** which is a simplified diagram of two emitters, **201** and **202,** with respective lenses, **439** and **440,** that have micro-lens patterns **444** integrated therein. Reference is also made to **FIG. 35,** which is a simplified diagram of two receivers, **301** and **302,** with respective lenses, **439** and **440,** that have micro-lens patterns **444** integrated therein.

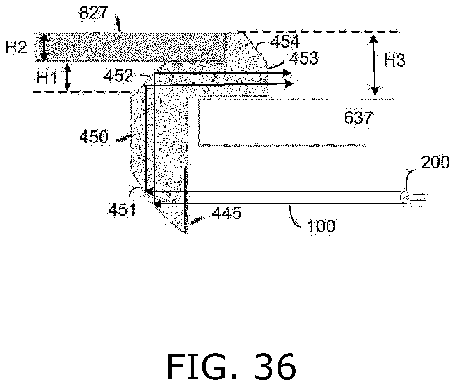

In some cases it is of advantage to avoid having micro-lenses on the outermost surfaces of the emitter and receiver lenses. Since the outermost surfaces are visible to a user, it may be less aesthetic to have the micro-lenses on these surfaces, in order that the visible surfaces appear smooth. Moreover, outermost surfaces are susceptible to scratching and to accumulation of dust and dirt, which can degrade performance of the micro-lenses. As such, the micro-lenses are integrated on surfaces that are not exposed to the user, as shown below in **FIGS. 36, 37** and **40.**

Reference is made to **FIG. 36,** which is a simplified diagram of a side view of a single-unit light guide, in the context of an electronic device having a display and an outer casing. Shown in **FIG. 36** is a cut-away of a portion of an electronic device with a display screen **637,** an outer casing **827** above screen **637,** and an emitter **200** below screen **637.** A light guide **450** receives light beams **100** and reflects them above screen **637** so that they travel across the surface of screen **637** for detection. Light guide **450** includes internal reflective surfaces **451** and **452** for projecting light beams **100** above the surface of screen **637.** A section **445** of light guide **450** serves as a primary lens to collimate light beams **100** when they are received. The surface of section **445** that faces emitter **200,** indicated in bold, has patterns of micro-lenses etched thereon. As such, the micro-lenses are not visible to a user, and are protected from damage and dirt.

The surface of section **445** has a feather pattern for scattering incoming light beams **100** from an emitter **200.** Reflective surfaces **451** and **452** reflect light beams **100.** Reflective surface **451** is concave, and reflective surface **452** is a flat reflector oriented at a 45° angle with respect to incoming light beams **100.**

Light beams **100** exit light guide **450** through flat surface **453.** Surface **454** serves to connect light guide **450** to outer casing **827.** Surface **454** is located above the plane of active light beams used by the touch system, and is angled for aesthetic purposes.

The reflective characteristics of surface **452** require that dust and dirt not accumulate on surface **452,** and require that outer casing **827,** which may be made inter alia of metal or plastic, not make contact with surface **452;** otherwise, reflectivity of surface **452** may be impaired. As such, outer casing **827** is placed above surface **452,** thereby protecting surface **452** from dust and dirt, and outer casing **827** is not flush with surface **452,** so that casing material does not touch surface **452.** Being a flat reflector at a 45° angle relative to incoming light beams, surface **452** is positioned above the upper surface of display **637.** As such, the device height, **H3,** above display **637** due to light guide **450,** comprises the height, **H1,** of surface **452** plus the thickness, **H2,** of outer casing **827.**

At the receiving side, a light guide similar to **450** is used to receive light beams 100 that are transmitted over screen **637,** and to direct them onto corresponding one or more receivers. Thus, light beams enter light guide **450** at surface **453,** are re-directed by surface **452** and then by surface **451,** and exit through the micro-lens patterned surface of section **445** to one or more receivers. At the receiving side, the surface of section **445** has a pattern that scatters the light beams as described hereinabove.

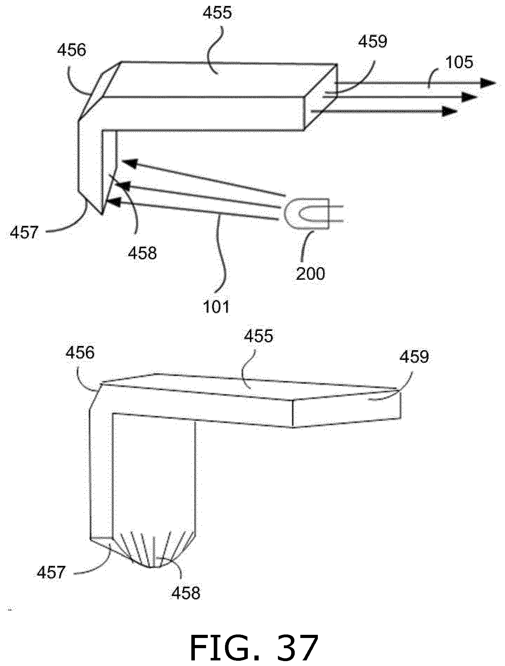

Reference is made to **FIG. 37,** which is a simplified diagram of side views, from two different angles, of a lens with applied feather patterns on a surface. Shown in **FIG. 37** is a light guide **455** having an internal reflective section **456,** an internal collimating lens **457,** and etched micro-lenses **458.** Light beams **101** entering light guide **455** at lens **457** exit the light guide through a surface **459** as light beams **105.**

Similar light guides are used for receiving beams that have traversed the screen, to focus them onto receivers. In this case, light beams enter at surface **459,** are reflected below the screen surface by internal reflective section **456,** are re-focused onto a receiver by collimating lens **457,** and re-distributed by micro-lenses **458.** In general, the same lens and micro-lenses are used with an emitter and a detector, in order that the light beam be directed at the receiving side in reverse to the way it is directed at the emitting side.

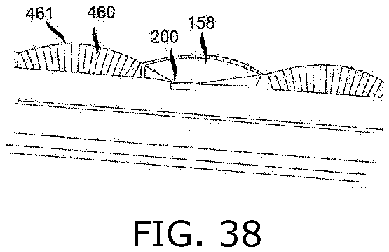

Collimating lens **457** has a rounded bottom edge, as shown at the bottom of **FIG. 37.** In order to properly refract incoming light on the emitter side, the micro-lenses **458** are formed in a feather pattern, spreading as a fan, as shown at the bottom of **FIG. 37** and in **FIG. 38.**

Reference is made to **FIG. 38,** which is a simplified diagram of a portion of a wide-beam touch screen. A feather pattern **460** is shown applied to the surface of a lens 461. A similar neighboring lens is associated with an emitter **200** emitting a wide beam 158.

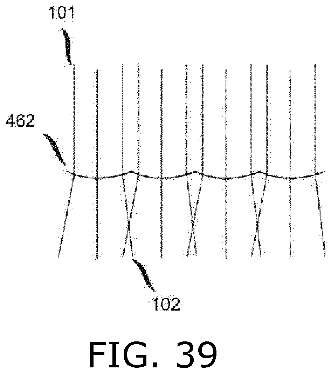

Reference is made to **FIG. 39,** which is a top view of light beams entering and exiting micro-lenses etched on a lens. Substantially collimated light beams **101** are shown in **FIG. 39** entering micro-lenses **462** and being refracted to light beams **102,** such that each micro-lens acts as a light source spreading a wide beam across a wide angle.

**Touch Screen System Configuration No. 3**

Several challenges arise in the manufacture of the micro-lenses in configuration no. 2. One challenge is the difficulty of accurately forming the fan-shaped feather pattern of micro-lenses. It is desirable instead to use micro-lenses arranged parallel to one another, instead of the fan/feather pattern.

A second challenge relates to the mold used to manufacture the light guide in configuration no. 2. Referring to **FIG. 36,** it is desirable that the outer surface of section **445,** facing emitter **200,** be vertical, so that the front surface of section **445** is parallel with the straight back surface portion of light guide **450.** However, it is difficult to manufacture exactly parallel surfaces. Moreover, if the light guide **450** were to be wider at its bottom, then it would not be easily removable from its mold. As such, the two surfaces generally form a wedge, and the surface of section **445** facing emitter **200** is not perfectly vertical. To compensate for this, the micro-lenses are arranged so as to be perpendicular to a plane of incoming light beams.

A third challenge is the constraint that, for optimal performance, the micro-lenses be positioned accurately relative to their corresponding emitter or receiver. The tolerance for such positioning is low. As such, it is desirable to separate section **445** of the light guide so that it may be positioned accurately, and to allow more tolerance for the remaining portions of the light guide as may be required during assembly or required for robustness to movement due to trauma of the electronic device.

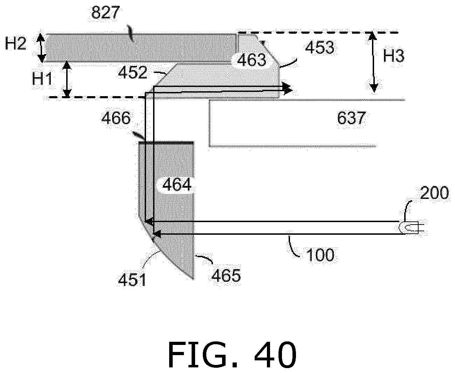

Configuration no. 3, as illustrated in **FIGS. 40 - 42** and **48,** serves to overcome these, and other, challenges.

Reference is made to **FIG. 40,** which is a simplified diagram of a side view of a dual-unit guide, in the context of an electronic device having a display 637 and an outer casing **827.** Shown in **FIG. 40** is an arrangement similar to that of **FIG. 36,** but with light guide **450** split into an upper portion **463** and a lower portion **464.** The micro-lenses are located at an upper surface **466** of lower portion **464.** As such, the micro-lenses are not embedded in the collimating lens portion of light guide **464.**

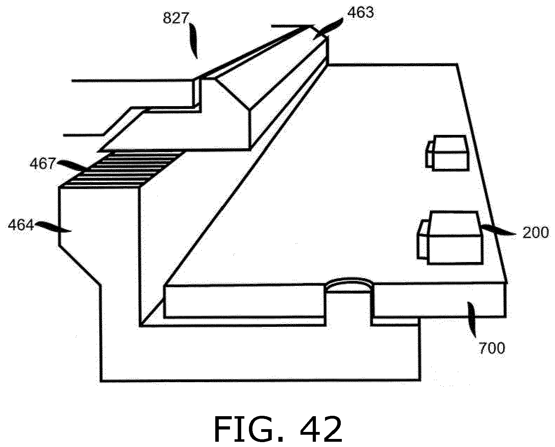

In configuration no. 2, the curved shape of the collimating lens necessitated a fan/feather pattern for the micro-lenses etched thereon. In distinction, in configuration no. 3 the micro-lenses are etched on rectangular surface **466,** and are arranged as parallel rows. Such a parallel arrangement, referred to herein as a "tubular arrangement", is shown in **FIG. 42.** Specifically, a parallel series of micro-lenses **467** is shown along an upper surface of light guide **464** in **FIG. 42.**

An advantage of configuration no. 3 is that the flat upper surface of the light guide may be molded as nearly parallel with the screen surface as possible, since the mold is one flat surface that lifts off the top of light guide **464.** Furthermore, in configuration no. 3, only portion **464** of the light guide has a low tolerance requirement for positioning. Portion **463** has a higher tolerance, since its surfaces are not placed at a focal point of an element.

As shown in **FIG. 40,** light beams **100** emitted by emitter **200** enter light guide unit **464** at surface **465,** are reflected by reflective surface **451** through surface **466,** and into light guide unit **463.** Inside light guide unit **463,** light beams **100** are reflected by surface **452,** and exit through surface **453** over display **637.**

**FIG. 40** indicates that the height, **H3,** added by the light guide over display **637** comprises the sum of the height, **H1,** of internal reflective surface **452,** and the height, **H2,** of the thickness of outer casing **827.**

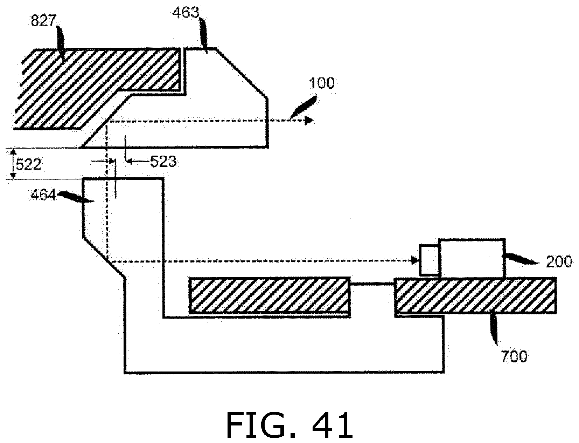

Reference is made to **FIG. 41,** which is a picture of light guide units **463** and **464,** within the context of a device having a PCB **700** and an outer casing **827.** The tubular pattern on the upper surface of light guide unit **464** is a fine pattern. In order for this pattern to distribute the light beams correctly, light guide **464** is placed precisely relative to its respective LED or PD. By contrast, light guide unit **463** has a flat reflective surface and, as such, does not require such precision placement. **FIG. 41** indicates the relative positioning of light guide units **463** and **464.** Their alignment is represented by a distance **523,** and has a tolerance of up to 1 mm. A distance **522** represents the height between the light guide units.

Reference is made to **FIG. 42,** which is a top view of light guide units **463** and **464** of **FIG. 41.** Tubular pattern **467** appears on the upper surface of light guide unit **464.**

**Touch Screen System Configuration No. 4**

Configuration no. 4 uses a reflective light guide and lens that reduce the height of a light guide above a display. The reflective light guide and lens of configuration 4 are suitable for use with the feather pattern lenses of configuration no. 2, with the tubular pattern lenses of configuration no. 3, and also with the alternating reflective facets of configuration no. 5. Many electronic devices are designed with a display surface that is flush with the edges of the devices. This is often an aesthetic feature and, as such, when integrating light-based touch screens with electronic devices, it is desirable to minimize or eliminate the raised rims. Less visibly prominent rims result in sleeker, more flush outer surfaces of the devices.

Moreover, in light-based touch screens, the raised rim occupies a width around the display, beyond the edges of the display. Many electronic devices are designed with display surfaces that seamlessly extend to the edges of the devices. This is often an aesthetic feature and, as such, when integrating light-based touch screens with electronic devices, it is desirable to design the reflective raised rims in such a way that they appear as seamless extensions of the display.

Configuration no. 4 achieves these objectives by reducing bezel height and providing a seamless transition between a display edge and an outer border of a device, resulting in a more appealing aesthetic design. The light guide of configuration no. 4 integrates with an outer casing having an elongated rounded edge, thereby softening sharp angles and straight surfaces.

Configuration no. 4 employs two active mirror surfaces; namely, a parabolic reflective surface that folds and focuses incoming light to a focal location, and an elliptical refractive surface that collects light from the focal location and collimates the light into beams across the screen.

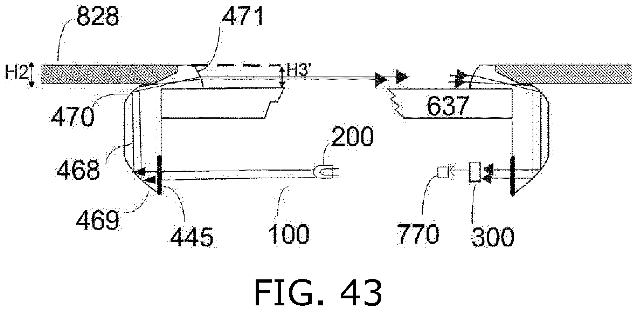

Reference is made to **FIG. 43,** which is a simplified diagram of a side view of a light guide within an electronic device. Shown in **FIG. 43** is a light guide **468** between an outer casing **828** and a display **637.** Light beams from an emitter **200** enter light guide **468** through a surface **445.** A feather pattern of micro-lenses is present on a lower portion of surface **445,** in order to scatter the light beams **100.** Light beams **100** are reflected by an internal concave reflective surface **469** and by a parabolic reflective surface **470,** and exit light guide **468** through an elliptical refractive surface **471.** Elliptical refractive surface **471** redirects at least a portion of light beams **100** in a plane parallel with the surface of display **637.** Light beams **100** are received at the other end of display **637,** by a similar light guide that directs the beams onto a light receiver **300.** The light intensity detected by light receiver **300** is communicated to a calculating unit **770.**

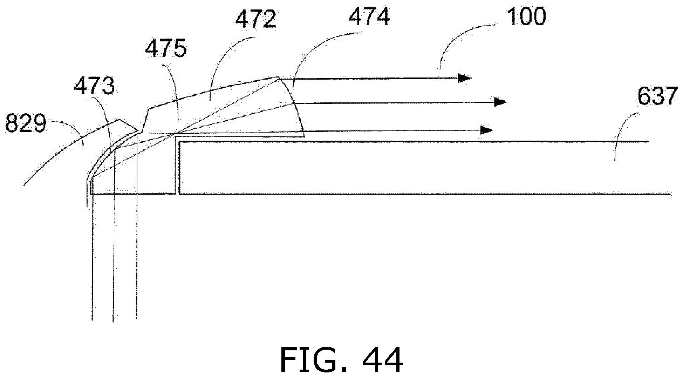

Reference is made to **FIG. 44,** which is a simplified diagram of a side view cutaway of a portion of an electronic device and an upper portion of a light guide with at least two active surfaces for folding light beams. Shown in **FIG. 44** is an upper portion of a light guide **472.** Surface **473** is part of a parabola, or quasi-parabola, or alternatively is a free form, having a focal line **475.** Focal line **475,** and surfaces **473** and **474** extend along the rim of display **637.** Surface **474** is part of an ellipse, or quasi-ellipse, or alternatively a free form, having focal line **475.**

On the emitter side, light beams enter the light guide, and parabolic mirror **473** reflects the beams to a focal point inside the light guide. Refracting elliptical lens **474** has the same focal point as parabolic mirror **473.** Elliptical lens **474** refracts the light from the focal point into collimated light beams over display **637.** On the receiver side, collimated light beams enter the light guide, and are refracted by elliptical lens **474** into a focal point. Parabolic mirror **473** reflects the beams from the focal point inside the light guide, to collimated output beams.

Surface **469** in **FIG. 43** folds light beams **100** upwards by 90°. Surface **469** is formed as part of a parabola. Surface **469** is corrected for aberrations due to input surface **445** being slightly inclined rather than perfectly vertical, and also due to the light source being wider than a single point.

Surfaces **469** and **470** use internal reflections to fold light beams. Thus these surfaces need to be protected from dirt and scratches. In **FIG. 44,** surface **473** is protected by outer casing **829.** The lower portion (now shown) of light guide **472** is deep within the electronic device, and is thus protected.

Using configuration no. 4, substantially all of reflective surface **473** is located below the upper surface of display **637.** Thus, this configuration adds less height to an electronic device than does configuration no. 2. Referring back to **FIG. 43,** the height, **H3',** added by the light guide in the present configuration is approximately the thickness, **H2,** of the outer casing, which is less than the corresponding height, **H3,** in configuration no. 2. Moreover, the convex shape of surface **471** of **FIG. 43** and surface **474** of **FIG. 44** is easier for a user to clean than is the perpendicular surface **453** of **FIG. 36.** Thus a user can easily wipe away dust and dirt that may accumulate on display **637** and on surface **471.** It is noted that configuration no. 4 eliminates the need for surface **454** of **FIG. 36,** since outer casing **828** is flush with the height of surface **471,** instead of being above it.

The convex shape of surface **471** of **FIG. 43** makes the bezel less visibly prominent than does the perpendicular surface **453** of **FIG. 36.**

Some electronic devices are covered with a flat sheet of glass that extends to the four edges of the device. The underside of the glass is painted black near the device's edges, and the display is viewed through a clear rectangular window in the middle of the glass. Examples of such devices include the IPHONE®, IPOD TOUCH® and IPAD®, manufactured by Apple Inc. of Cupertino, CA, and also various models of flat-panel computer monitors and televisions. In some cases, the light guides surrounding the various touch screens described herein may appear non-aesthetic, due to (a) the light guide being a separate unit from the screen glass and thus the border between them is noticeable, and (b) the light guide extending below the screen and thus, even if the underside of the light guide is also painted black, the difference in heights between the bottom of the light guide and the screen glass is noticeable. A two-unit light guide is employed to overcome this problem.

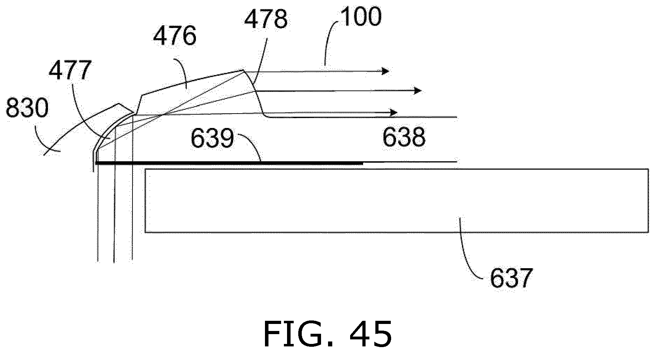

In one case, the upper unit of the light guide is merged with the screen glass. In this regard, reference is made to **FIG. 45,** which is a simplified drawing of a section of a transparent optical touch light guide **476,** formed as an integral part of a protective glass **638** covering a display **637.** A daylight filter sheet **639** on the underside of protective glass **638** serves, instead of black paint, to hide the edge of display **637,** without blocking light beams **100.** Light guide **476** has an outer elliptical surface **478** and an inner parabolic surface **477,** and merges smoothly with an outer casing **830.** Light beams **100** pass through light guide **476** as in **FIG. 44.**

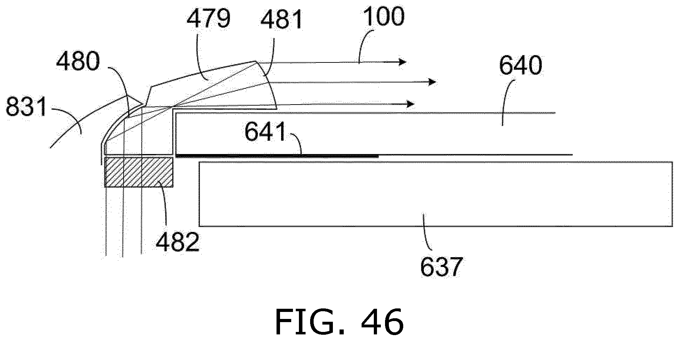

In some cases, the cost of manufacturing a protective glass cover with an integrated reflective lens may be expensive. As such, a black object is placed between the upper and lower units of the light guide. The height of the black object is aligned, within the electronic device, with the height of the black paint on the underside of the protective glass. In this regard, reference is made to **FIG. 46,** which is a simplified illustration of the electronic device and light guide of **FIG. 44,** adapted to conceal the edge of the screen. Shown in **FIG. 46** is black paint, or alternatively a daylight filter sheet **641,** on the underside of protective glass **640,** covering display **637.** A black plastic element **482** is aligned with black paint/daylight filter sheet **641,** so that the edge of protective glass **640** is not discernable by a user. Black plastic element **482** transmits infra-red light to allow light beams **100** to pass through.

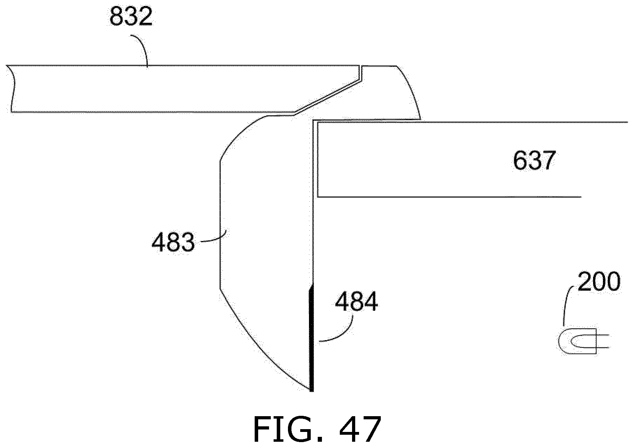

Reference is made to **FIG. 47,** which is a simplified diagram of a light guide **483** that is a single unit extending from opposite an emitter **200** to above a display **637.** A portion of an outer casing **832** is shown flush with the top of light guide **483.** The lower portion of light guide **483** has a feather pattern of micro-lenses **484** to scatter the light beams arriving from emitter **200.** At the receiving side, the light beams exit through the bottom of a light guide similar to light guide **483,** towards a receiver. The same feather pattern **484** breaks up the light beams en route to the receiver.

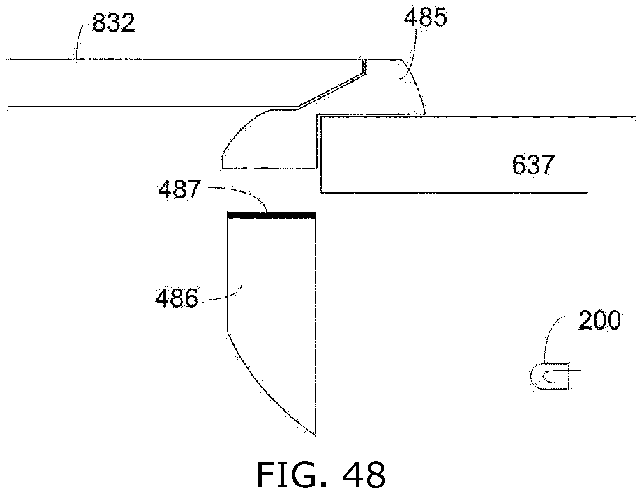

Reference is made to **FIG. 48,** which is a simplified diagram of a dual-unit light guide. Shown in **FIG. 48** is a light guide with an upper unit **485** and a lower unit **486.** A portion of an outer casing **832** is flush with the top of light guide unit **485.** A display **637** is shown to the right of light guide unit **485.** The top surface of light guide unit **486** has a tubular pattern of micro-lenses **487** to break up light beams arriving from an emitter **200.** At the receiving side, the light beams exit through the bottom of a light guide similar to the light guide shown in **FIG. 48,** towards a receiver. The same tubular pattern **487** breaks up the light beams en route to the receiver.

As explained hereinabove with reference to **FIGS. 36** and **40,** the positioning of light guide unit **486** with tubular pattern **487** requires high precision, whereas the positioning of light guide unit **485** does not require such precision. The effect of tubular pattern **487** on the light beams depends on its precise placement relative to its respective emitter or receiver. The active surfaces in light guide unit **485** are more tolerant, since they are largely self-contained; namely, they are both focused on an internal focal line, such as focal line **475** of **FIG. 44.**

It is noted that placement of emitters and receivers underneath a device screen, and placement of a collimating reflective element opposite each emitter or receiver, imposes restrictions on the thickness of the device. A first restriction is that the thickness of the device be at least the sum of the screen thickness and the emitter or receiver thickness. A second restriction is that in order to properly collimate light that is reflected upward above the screen, the reflective element opposite the emitter or receiver be curved into a convex "smile" shape, as shown inter alia in **FIGS. 37** and **38.** The convex shape adds to the total thickness of the device.

Designers of tablets and e-book readers strive to achieve as slim a form factor as possible. As such, the receivers and collimating lenses are placed inside a border surrounding the screen, instead of being placed underneath the screen. This is particularly feasible for tablets and e-book readers that provide a non-screen border area for holding the device.

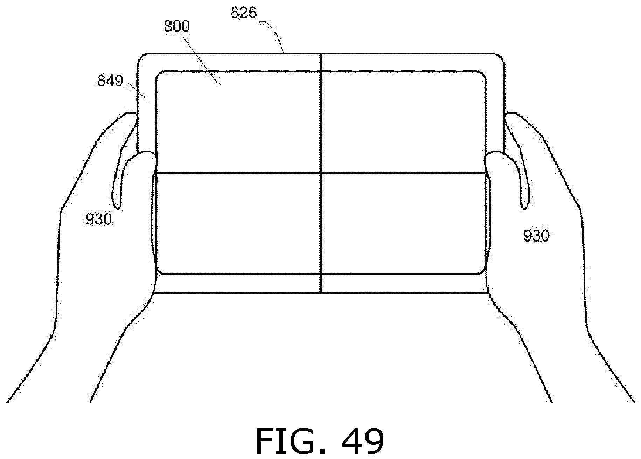

Reference is made to **FIG. 49,** which is a simplified diagram of a touch screen device held by a user. Shown in **FIG. 49** is a device **826** with a touch screen **800** surrounded by a frame **849** held by hands **930.**

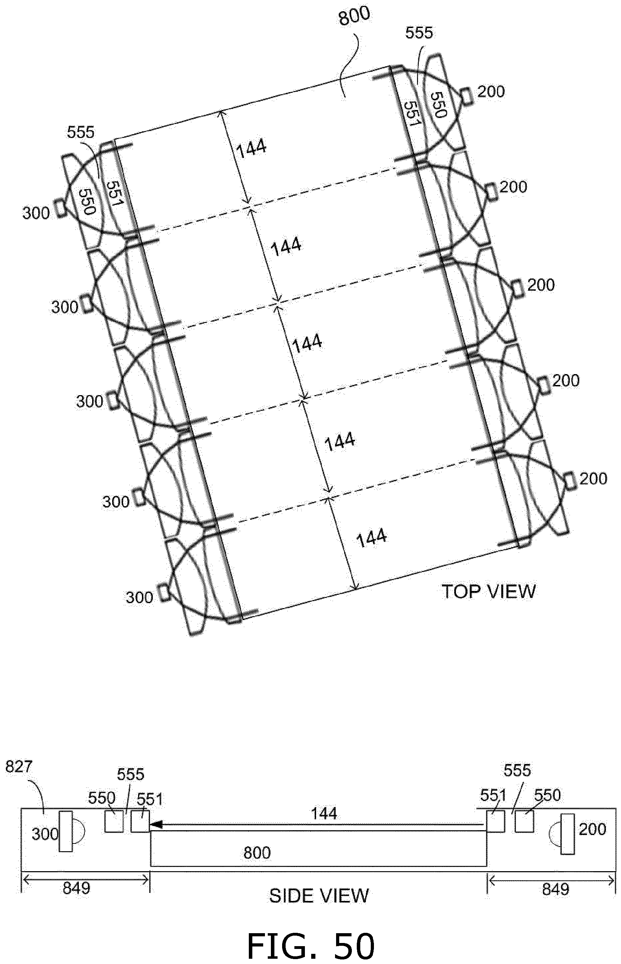

Reference is made to **FIG. 50,** which is a simplified diagram of a touch screen with wide light beams covering the screen. **FIG. 50** shows a top view and a side view of a touch system with a touch screen **800,** in the context of an electronic device such as a tablet or an e-book reader. **FIG. 50** also shows emitters **200** and receivers **300,** each coupled with a pair of lenses **550** and **551,** separated by an air gap **555,** for collimating light. The side view shows a device casing **827** and a frame **849** surrounding touch screen **800.** Frame **849** provides a grip for a user to hold the device, and is wide enough to encase elements **200, 300, 550** and **551.**

Light is more efficiently collimated over a short distance using multiple air-to-plastic interfaces than with a solid lens. The emitter, receiver and lenses are substantially coplanar with the surface of touch screen **800.** The flat non-curved profile of lenses **500** and **551** along the height of the device is lower than the profile of the lenses of **FIGS. 37** and **38,** due to the fact that in the case of lenses **500** and **551** light is projected only along the plane of the screen surface. The only height added to the device form factor is the height of the bezel, or lens **551,** above touch screen **800** for directing light across the screen. If micro-lens patterns are used, e.g., to create overlapping beams, then a third lens is added that includes the micro-lens patterns. Alternatively, the micro-lens patterns may be formed on one of the two lenses **500** and **551.**

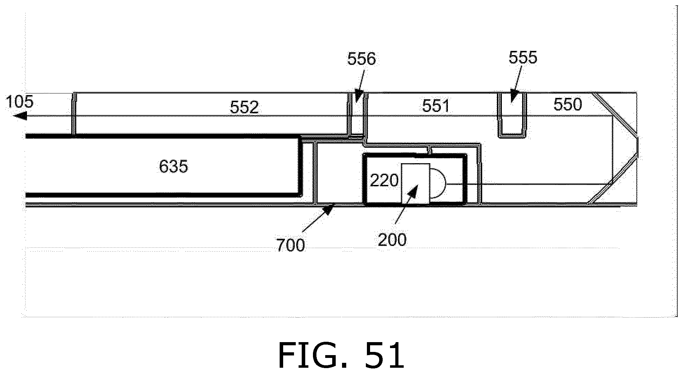

Reference is made to **FIGS. 51 - 53,** which are respective simplified side, top and bottom views of a light guide in the context of a device. **FIG. 51** is a side view showing a display **635** and a side-facing emitter **200** that is substantially coplanar with display **635.** A multi-lens assembly reflects light above display **635** and outputs a wide beam. **FIG. 51** shows the multi-lens assembly with three sections **550 - 552** separated by air gaps **555** and **556.** Sections **550** and **551** are connected beneath air gap **555** and form part of a rigid frame that surrounds display **635.** The frame includes a cavity **220** for accommodating side-facing emitter **200** or a similar shaped receiver. Lens sections **550** and **551** together produce a wide collimated beam as described hereinabove. Lens section **552** includes a tubular pattern of micro-lenses as described hereinabove with reference to **FIGS. 41** and **42. FIG. 51** shows rays of a beam **105** crossing above display **635.** A PCB **700** forms a substrate for supporting emitters **200,** display **635,** and the light guide frame.

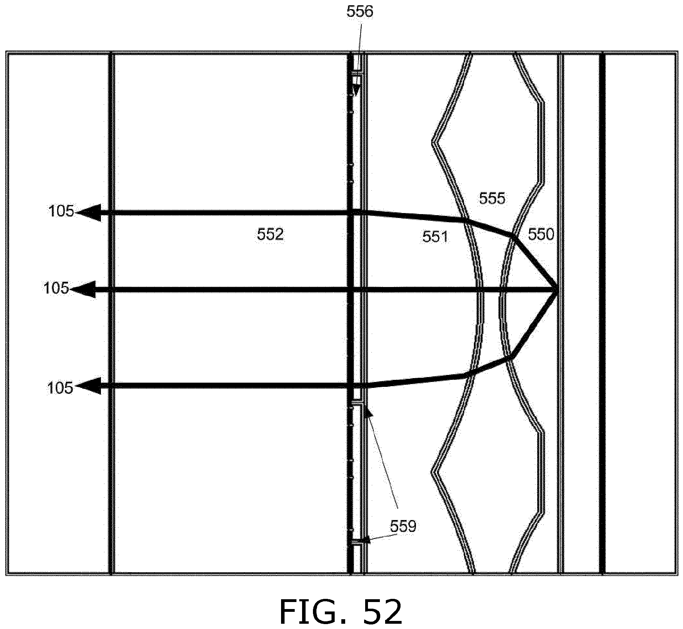

**FIG. 52** is a top view showing lens sections **550 - 552** separated by air gaps **555** and **556. FIG. 52** shows three collimated beams **105,** to illustrate how lens sections **550** and **551** collimate a wide light beam. **FIG. 52** also shows small connectors **559** that connect lens section **552** to the rigid frame formed by lens sections **550** and **551.** As such, all three sections **550 - 552** may be formed from a single piece of plastic.

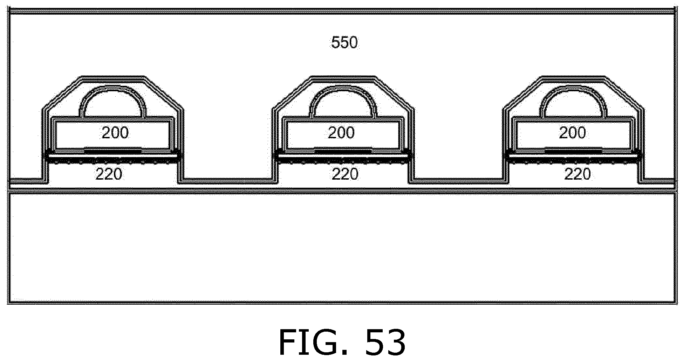

**FIG. 53** is a bottom view showing lens section **500** with emitter/receiver cavities **220** containing three emitters **200.**

## Touch Screen System Configuration No. 5

High resolution touch sensitivity is achieved by combining two or more emitter-receiver pair signals that span a common area, as described hereinabove with reference to configurations nos. 2 and 3. Configuration no. 5 provides alternative optical elements and alternative arrangements of emitters and receivers for providing overlapping detection.

Various approaches may be used to provide overlapping detection beams. One approach is to provide two separate wide beams that are projected at slightly different heights across the screen. Both beams cover a common screen area, and thus provide multiple detection signals for touches in that area. Another approach is to provide optical elements that interleave rays of two wide beams when both beams are activated at once, which can be achieved using diffractive structures to interleave minute rays from two beams, or using slightly larger alternating facets to interleave beams on the order of 0.1 - 0.6 mm from two sources. Generally, the two beams are activated separately. As such, they cover a common screen area but are not actually interleaved. This latter alternative is described in what follows.

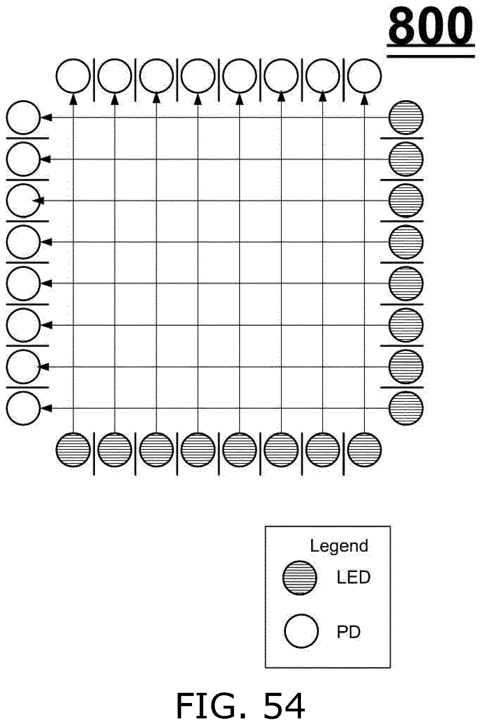

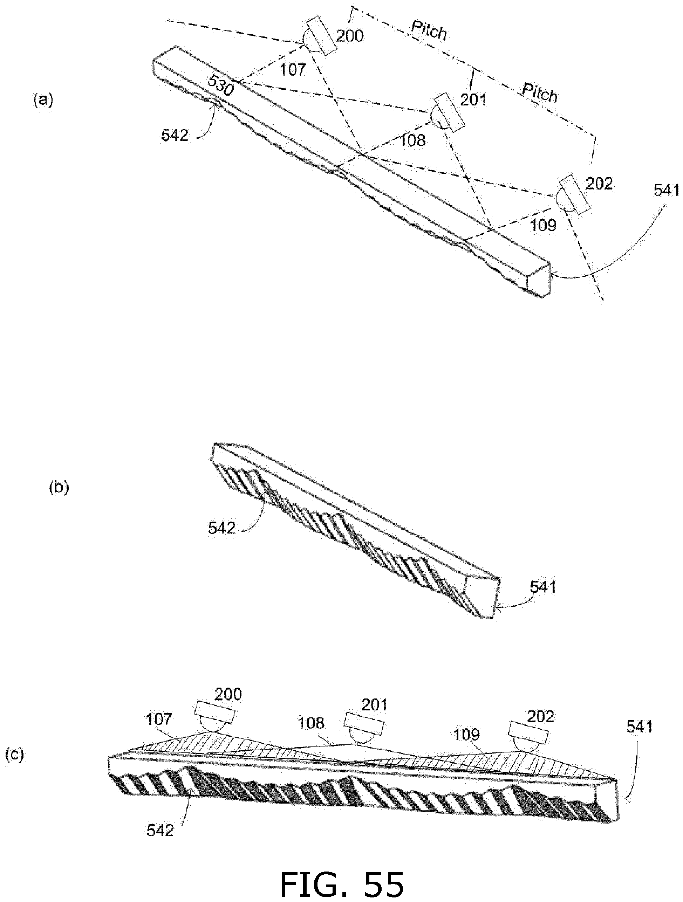

Reference is made to **FIG. 54,** which is a simplified illustration of a touch screen **800** surrounded by emitters and receivers. Reference is also made to **FIG. 55,** which is a simplified illustration of an optical element **530** with an undulating angular pattern of reflective facets, shown from three angles. Shown in **FIG. 55** are three views, (a), (b) and (c), of optical element **530.** Light from the emitters enters optical element **530** as wide angled overlapping beams. **FIG. 55** shows emitters **200 - 202** facing a surface **541** of element **530.** Wide beams **107 - 109** from respective emitters **200 - 202** enter element **530** through surface **541. FIG. 55** also shows the distance, or pitch, between neighboring emitter elements.

Each of wide beams **107 - 109** spans two pitches and, as such, the wide beams overlap in the area between neighboring emitters. A surface **542** of element **530** is formed as a wave-like pattern of facets, alternatingly directed at neighboring emitters. **FIG. 55(c)** shows alternating shaded and non-shaded facets on surface **542.** In element **530** between emitters **200** and **201,** shaded facets aimed at emitter **200** are interleaved with non-shaded facets aimed at emitter **201.** In element **530** between emitters **201** and **202,** shaded facets aimed at emitter **202** are interleaved with non-shaded facets aimed at emitter **201.**

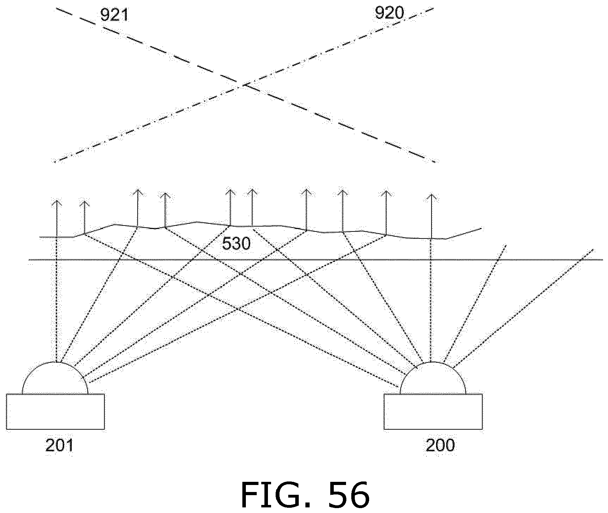

Reference is made to **FIG. 56,** which is a simplified illustration of an optical element reflecting, collimating and interleaving light from two neighboring emitters. As shown in **FIG. 56,** each reflective facet of element **530** collimates rays from its corresponding emitter, thereby interleaving collimated rays from two emitters. **FIG. 56** shows optical element **530** reflecting and collimating light from two neighboring emitters **200** and **201.** Alternating facets of element **530** focus on these two elements. By interleaving collimated rays, element **530** collimates light from two emitters across the screen in overlapping wide beams. Elements **530** at an opposite screen edge direct the wide beams onto respective receivers.

Each facet on surface **542** is precisely angled to focus on its element. The surface areas of each facet are also configured so that sufficient amounts of light are provided for detection.

Alternatively, optical element **530** collimates and interleaves incoming wide beams through refraction instead of reflection. In such case, the wave-like multi-faceted surface is situated at an input or output surface of optical element **530.** In the case of reflecting facets, the facets re-direct light inside the optical element.

At times, it is desirable to run a touch screen in a low frequency mode, e.g., in order to save power. Configuration no. 5 enables an accurate low-frequency scan mode. Two detection signals along a screen axis are provided for each touch location. In low frequency mode, during a first scan every other emitter-receiver pair is activated, thus activating only half of the pairs along only one screen axis, but nevertheless covering the entire screen. During a second scan, the remaining emitter-receiver pairs along this axis are activated. As such, odd emitter-receive pairs are first activated, then even emitter-receiver pairs, thus providing two full screen scans and spreading usage evenly across all emitter and receiver elements. In order to keep power consumption at a minimum, only emitter-receiver pairs along the shorter edge of a rectangular screen are activated.

Alternatively, both axes of a screen are scanned, and each scanned axis provides initial touch information about the screen. As such, instead of sequentially activating multiple scans of a single axis, sequential activation of scans of separate axes are activated. A sequence of four scans are activated at four sampling intervals; namely, (i) a first half of the emitter-receiver pairs along a first screen axis are scanned; (ii) a first half of the emitter-receiver pairs along a second screen axis are activated, (iii) the second half of the emitter-receiver pairs along the first screen axis are activated, and (iv) the second half of the emitter-receiver pairs along the second screen axis are activated.

**Design of Reflective Elements**

A goal in designing alternating reflective or refractive facets of an optical element, is to generate a light distribution that provides good gradients as a basis for interpolation, by way of a linear signal gradient, S(x), from an emitter to a receiver. A number of parameters affect the light distribution.

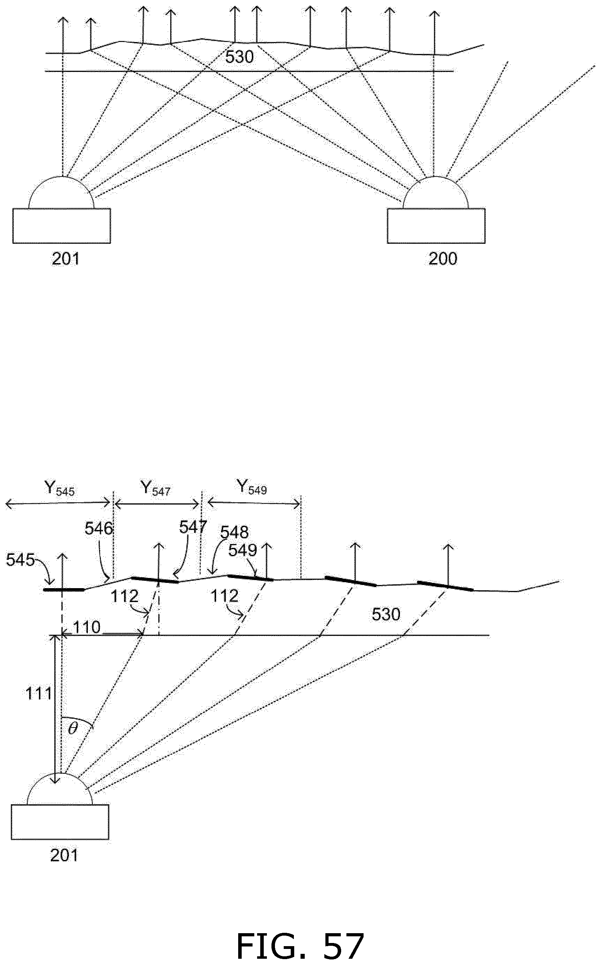

Reference is made to **FIG. 57,** which is a simplified diagram of a multi-faceted optical element **530.** Shown in **FIG. 57** are parameters that control light from each facet of the optical element, as described in what follows.

The light intensity distribution depends on a polar angle, $\theta$, in accordance with the third power, $\cos^3\theta$. The angle $\theta$ is a function of distance **110** between beams of a single emitter or receiver element that go to different facets, and of distance **111** between the emitter or receiver element and element **530.**

The facet width, **B,** is a readily adjustable parameter.

The Fresnel loss, **F,** is the amount of light lost due to reflection caused by the refractive index of element **530,** when a beam enters optical element **530.** Variation of Fresnel loss F between different angles $\theta$ under Brewster's angle is less than 1%, and is therefore negligible.

Facet beam width, **Y,** is the total width covered by a single facet beam. The alternating facets generate gaps in the light from emitter **201,** as neighboring facets are focused on neighboring emitter **202.** Light from each facet covers the gaps. Facet beam width, **Y,** depends on facet width **B** and on the widths of neighboring facets. **FIG. 57** shows facets **545, 547** and **549** aimed at emitter **201** and respective facet-beam widths $Y_{545}$, $Y_{547}$ and $Y_{549}$ that together cover the neighboring facets **548** and **546** aimed at emitter **202.**

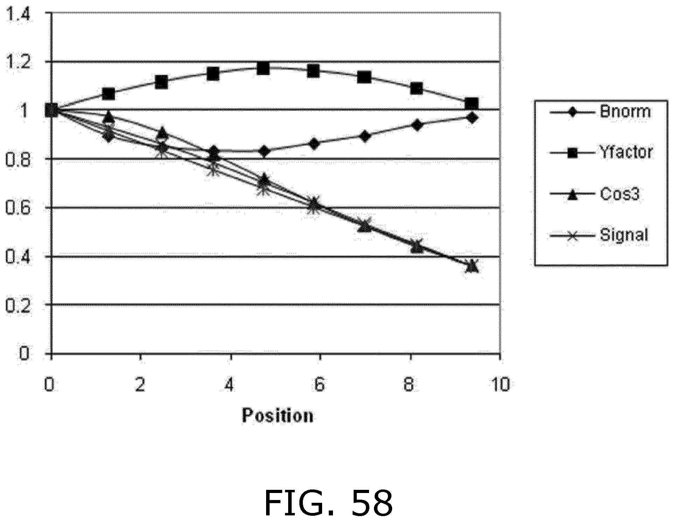

Reference is made to **FIG. 58,** which is a simplified graph showing the effect of reflective facet parameters $\theta$, Y and B on light distribution for nine facets. The graph of FIG. 58 also shows actual light distribution, and a reference linear function. As seen in **FIG. 58,** the actual light distribution signal is approximately linear. The data in the graph is normalized based on the central facet, located at location 0 on the x-axis, being assigned a value of 1 in all aspects. As such, the facet width **B** is labeled **Bnorm** in the graph, and facet widths are normalized relative to the width of the central facet. Generally, the angular parameter $\theta$ provides a sloped curve, which is flat for small values of $\theta$, as seen in **FIG. 58** in the flat portion of the $\theta$ curve, labeled **cos3,** between positions 0 and 2 along the x-axis. The gradient for small $\theta$ is increased by adjusting parameter **B,** which in turn affects parameter **Y,** labeled **Yfactor.** The complete signal is labeled **signal** in the graph, and it is approximately linear.

Light intensity for facet k, as a function of parameters $\theta$, **B, F** and **Y,** is described in accordance with

$$\frac{S_k}{S_1} = \frac{cos^3(\theta_k)}{cos^3(\theta_1)} \cdot \frac{B_k}{B_1} \cdot \frac{F_k}{F_1} \cdot \frac{Y_k}{Y_1}, \qquad (1)$$

where the lighting of facet k is normalized based on $\theta = 0$ for the central facet.

**TABLE I** lists parameters for each facet in a series of nine facets that are focused on one emitter or receiver element. In **TABLE I,** x-pos denotes the distance in millimeters from the central facet, B denotes the facet width in millimeters, B-norm denotes the normalized facet width, based on the central facet having a width of 1, Yfactor denotes the facet beam width, normalized to the width of the central facet beam, Signal denotes the normalized signal value for each facet, and Line denotes signal values for a reference straight line.

| TABLE I: Facet parameters for nine facets | | | | | | | |
|---|---|---|---|---|---|---|---|
| Facet no. | x-pos | B | B-norm | Yfactor | $\cos^3\theta$ | Signal | Line |
| 1 | 0 | 0.66 | 1 | 1 | 1 | 1 | 1 |
| 2 | 1.265 | 0.59 | 0.893939 | 1.065574 | 0.973981 | 0.927774 | 0.913516 |
| 3 | 2.46 | 0.56 | 0.848485 | 1.11588 | 0.907237 | 0.858978 | 0.831817 |
| 4 | 3.605 | 0.55 | 0.833333 | 1.150442 | 0.817261 | 0.78351 | 0.753537 |
| 5 | 4.725 | 0.55 | 0.833333 | 1.171171 | 0.717801 | 0.700557 | 0.676966 |
| 6 | 5.835 | 0.57 | 0.863636 | 1.160714 | 0.618698 | 0.620205 | 0.601079 |

(continued)

| Facet no. | x-pos | B | B-norm | Yfactor | $\cos^3\theta$ | Signal | Line |
|---|---|---|---|---|---|---|---|
| 7 | 6.965 | 0.59 | 0.893939 | 1.135371 | 0.524528 | 0.532371 | 0.523824 |
| 8 | 8.13 | 0.62 | 0.939394 | 1.087866 | 0.438568 | 0.448188 | 0.444177 |
| 9 | 9.35 | 0.64 | 0.969697 | 1.027668 | 0.362027 | 0.360769 | 0.360769 |
| | 10 | | | | | | |

**TABLE II** lists parameters for a series of alternating facets focused on two neighboring elements, such as an emitter and a neighboring receiver. In **TABLE II,** facets nos. 1 - 5 are focused on an emitter, and facets nos. 6 - 9 are focused on a neighboring receiver. Three values are listed for each facet; namely, its width, B, its location, x-pos, along the x-axis relative to the center of the central facet for the emitter, and the location, border_pos, of the facet's outer edge. All facet values are specified in millimeters.

| TABLE II: Nine alternating facets | | | |
|---|---|---|---|
| | | | |
| Facet no. | B | x-pos | border pos |
| 1 | 0.66 | 0 | 0.33 |
| 9 | 0.64 | 0.65 | 0.97 |
| 2 | 0.59 | 1.265 | 1.56 |
| 8 | 0.62 | 1.87 | 2.18 |
| 3 | 0.56 | 2.46 | 2.74 |
| 7 | 0.59 | 3.035 | 3.33 |
| 4 | 0.55 | 3.605 | 3.88 |
| 6 | 0.57 | 4.165 | 4.45 |
| 5 | 0.55 | 4.725 | 5 |
| | | 5 | |

**Signals Generated by Element 530**

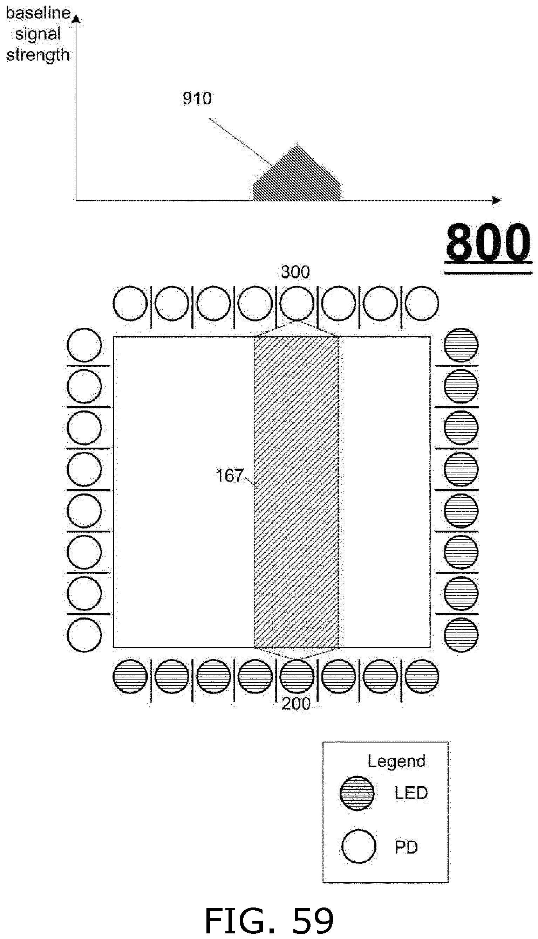

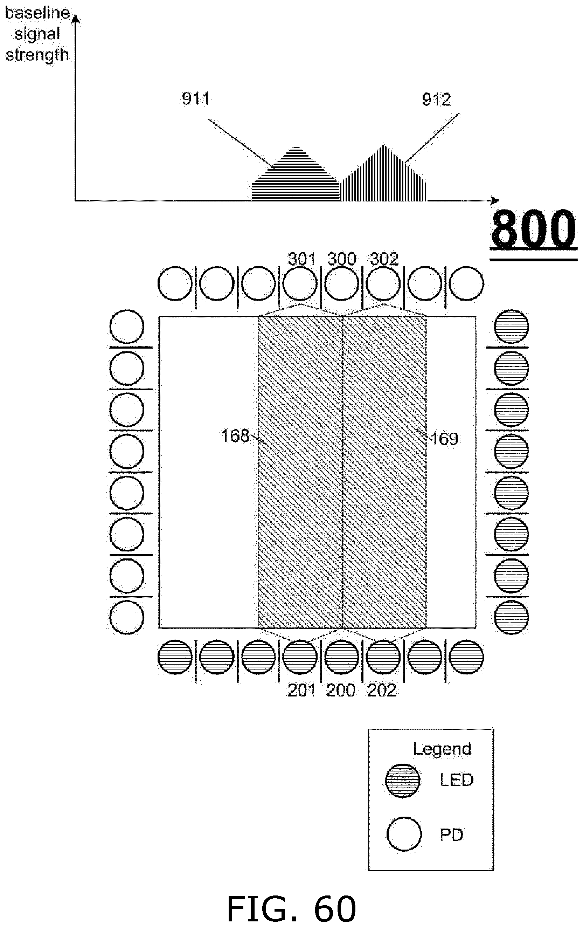

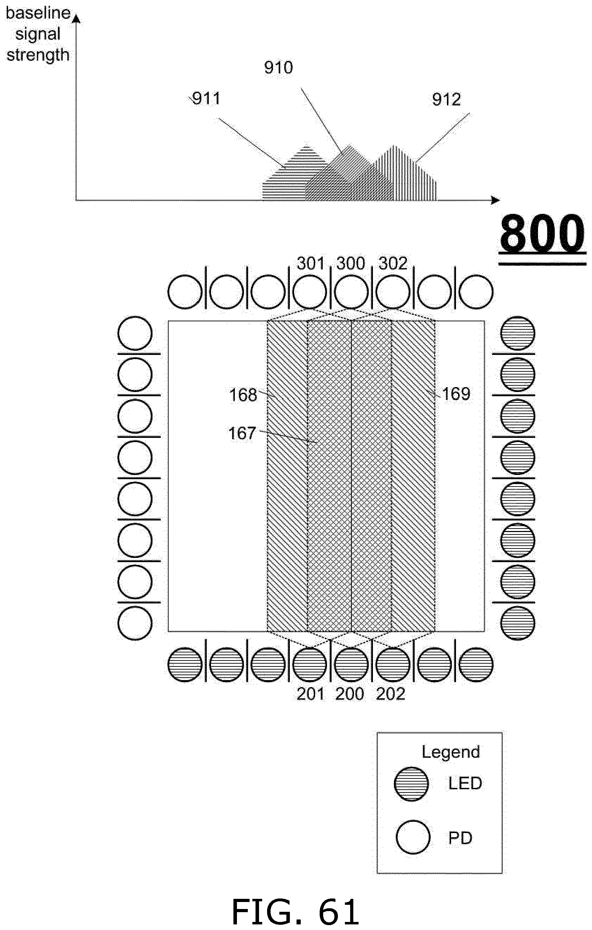

Reference is made to **FIG. 59,** which is a simplified illustration of a touch screen with a wide light beam crossing the screen. Reference is also made to **FIG. 60,** which is a simplified illustration of a touch screen with two wide light beams crossing the screen. Reference is also made to **FIG. 61,** which is a simplified illustration of a touch screen with three wide light beams crossing the screen. As shown in **FIG. 59,** a screen **800** is surrounded with emitters and receivers. A wide beam **167** is shown representing a wide detection area on screen **800,** that is detected by an emitter-receiver pair **200-300.** Wide beam **167** is generated by optical elements, such as element **530** described hereinabove but not shown in **FIGS. 59 - 61.** A first element **530** collimates light from emitter **200,** and a second element **530** focuses wide beam **167** onto receiver **300.** A graph **910** shows the gradient of signal intensities detected across the width of wide beam **167.**

**FIG. 60** shows neighboring wide beams **168** and **169,** representing wide detection areas on screen **800** detected by respective emitter-receiver pairs **201-301** and **202-302.** Respective graphs **911** and **912** illustrate the gradient of signal intensities detected across the widths of wide beams **168** and **169.**

**FIG. 61** shows the three wide beams of **FIGS. 59** and **60.** As seen in **FIG. 61,** the left half of beam **167** is overlapped by half of beam **168,** and the right half of beam **167** is overlapped by half of beam **169.** The intensity gradients in graphs **910 - 912** indicate that a touch at any location along the width of beam **167** is detected along two gradients of two overlapping wide beams. Similarly, a touch at any location on the screen is detected in both the vertical and the horizontal axis along two gradients of two overlapping wide beams on each axis. A precise touch coordinate is calculated by interpolating touch locations of the two signals based on the detection signal gradients. **FIG. 56** shows the light signal attenuation gradients **920** and **921** across the widths of the two overlapping beams. Light signal attenuation gradient **920** corresponds to the beam emitted from emitter element **200,** and light signal attenuation gradient **921** corresponds to the beam emitted from emitter element **201.** As such, the beam has maximum intensity directly above the element, and tapers off at either side. Having two different sloping gradients for the overlapping beams is of advantage for calculating a precise touch location, as described hereinbelow.

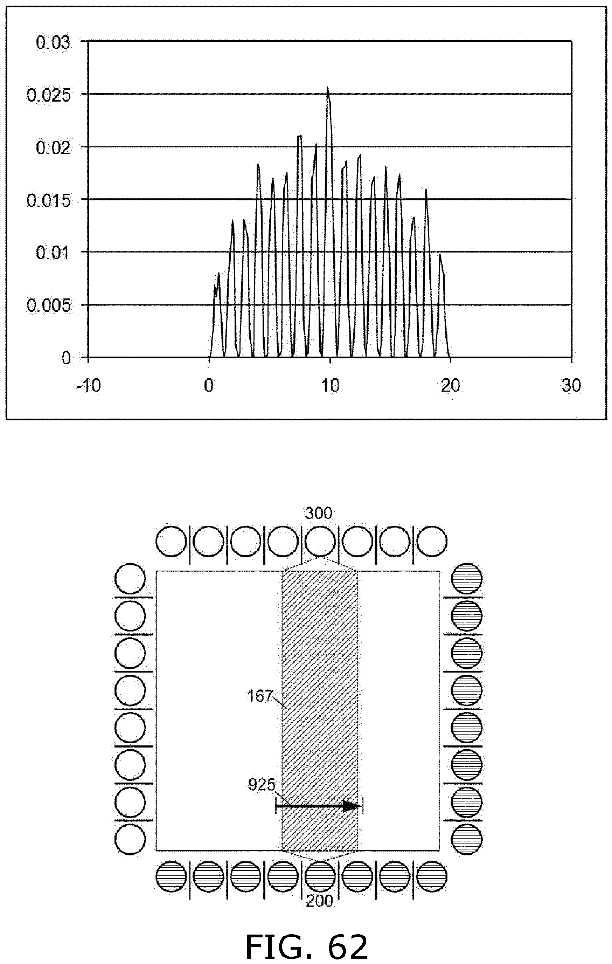

Reference is made to **FIGS. 62,** which is a simplified graph of light distribution of a wide beam in a touch screen. The lower portion of **FIG. 62** shows a path across wide beam **167,** and the upper portion of **FIG. 62** is a graph depicting signal intensity distribution along this path. The graph's x-axis represents the horizontal screen dimension in units of millimeters. The graph's y-axis represents the baseline signal intensity detected by emitter-receiver pair **200-300** situated at 10 mm along the screen axis. The signal corresponds to a screen with emitter and receiver elements arranged at a pitch of 10 mm. As such, the detected wide beam spans 20 mm. The spikes in the graph are caused by the alternating facets of optical element **530** described above, which alternately focus rays at neighboring elements. As such, spikes correspond to facets belonging to the measured emitter-receiver pair, and the neighboring troughs correspond to facets belonging to a neighboring emitter-receiver pair. Despite these spikes, detection signals of a finger or another object along the measured screen axis have a relatively smooth gradient along the entire 20 mm span of the beam since the finger is wider than the narrow spike and trough channels. As such, a finger blocks a series of spikes which remain substantially uniform as the finger slides long the screen axis. E.g., a fingertip is approximately 6 mm wide, whereas there are 8 - 9 spikes in 10 mm in the graph of **FIG. 62.**

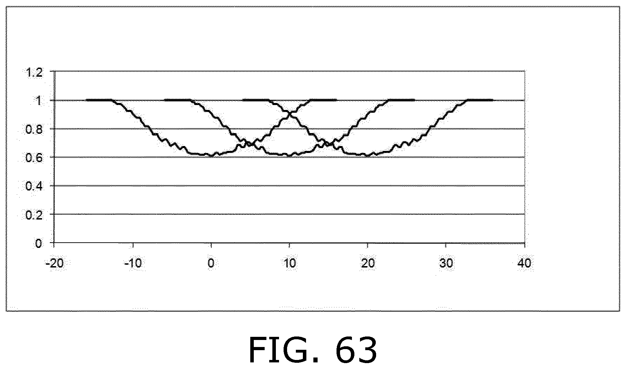

Reference is made to **FIG. 63,** which is a simplified illustration of detection signals from three wide beams as a fingertip moves across a screen. Shown in **FIG. 63** are three detection signals of a fingertip as it moves across three neighboring wide beams along a screen axis. From each of the signals it is apparent that as the finger enters a wide beam, the finger blocks a small portion of the beam. As the finger moves along the axis toward the center of the beam, it blocks progressively more of the beam until it blocks roughly 40% of the beam intensity, indicated in the graph by a minimum detection of 60% of the expected baseline signal. As the finger moves further along, it blocks progressively less of the beam. The shape of the detection curve is relatively smooth, despite the peaks and troughs in the light beam shown in **FIG. 62.** There are slight fluctuations along the detection curves of **FIG. 63** that are at least partially due to the peaks, but these fluctuations are minimal and do not significantly distort the trend of the signal.

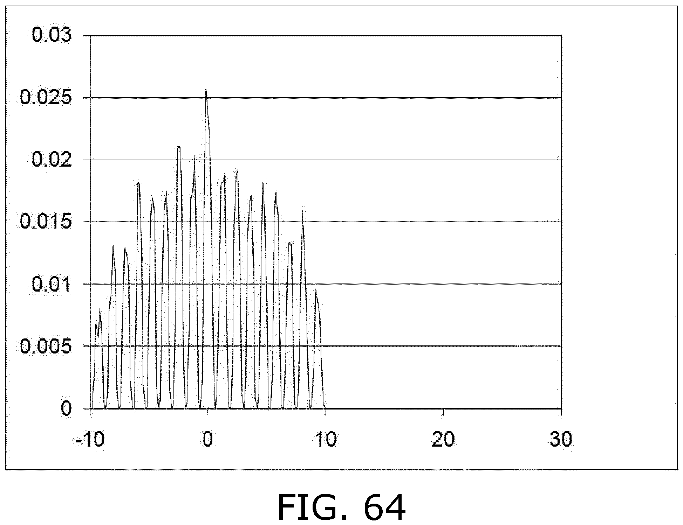

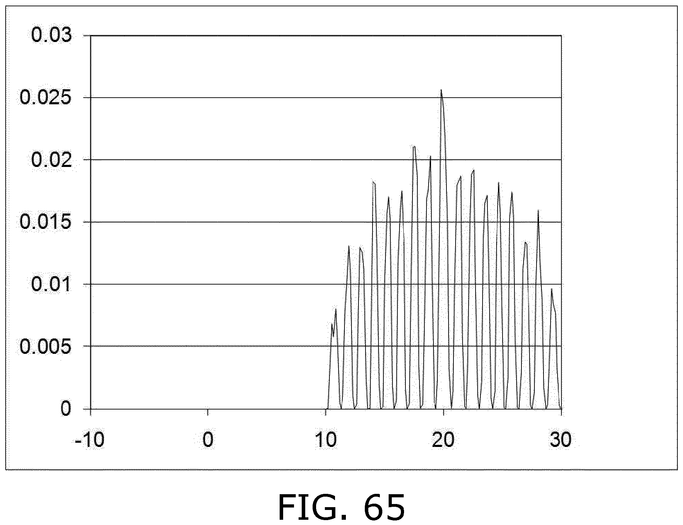

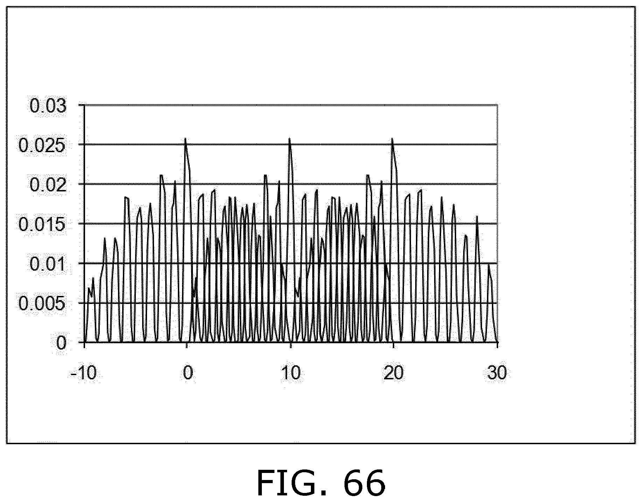

Reference is made to **FIGS. 64 - 66,** which are simplified graphs of light distribution in overlapping wide beams in a touch screen. Taken together, **FIGS. 62** and **64 - 66** show a light distribution across three neighboring wide light beams on a screen with emitter-receiver pairs spaced 10 mm apart. As seen in these figures, the facets of optical element **530** provide overlapping touch detection by two emitter-receiver pairs. **FIG. 64** shows the light signal from an emitter-receiver pair situated at location 0 along the measured screen axis. **FIG. 65** shows the light signal from an emitter-receiver pair situated at a location 20 mm along the measured screen axis. **FIG. 66** shows the light signals from the three emitter-receiver pairs of **FIGS. 62, 64** and **65,** and shows how these light beams cover overlapping areas of the screen surface. **FIG. 63** shows three detection signals for the three emitter-receiver pairs of **FIG. 66,** as a fingertip moves along the screen axis.

Touch detection signals are less smooth when using a fine-point stylus than when using a finger. E.g., a 2 mm stylus tip moving across a screen generates more fluctuations in a detection signal than does a 6 mm finger, since the stylus tip covers fewer peaks in the light signal and, therefore, moving in and out of a signal peak changes a larger part of the blocked signal. Nevertheless, stylus touch locations are determined with a high level of accuracy, by interpolating multiple detection signals.

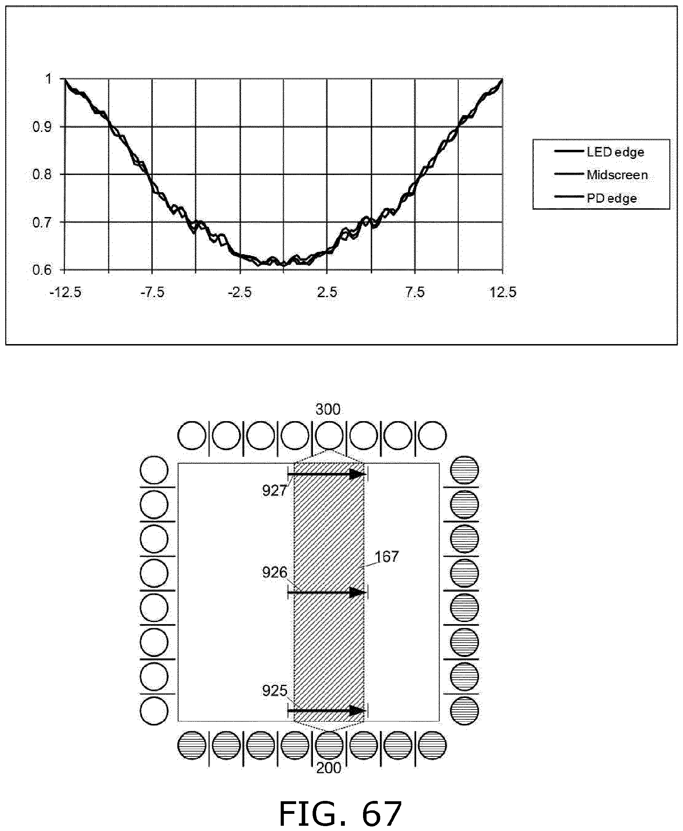

Reference is made to **FIG. 67,** which is a simplified graph of detection signals from a wide beam as a fingertip moves across a screen at three different locations. Shown at the bottom of **FIG. 67** are three paths **925 - 927** traced by a finger across a wide beam **167.** Path **925** is near LED **200,** path **926** is mid-screen, and path **927** is near a PD **300.** The graph in the upper portion of **FIG. 67** shows three detection signals of a fingertip as it traverses the three paths **925 - 927,** labeled in the graph legend as LED edge, Midscreen and PD edge, respectively. The three detection signals in the graph are substantially overlapping. As such, the signal is uniformly detected along its depth, and the signal varies as a function of the touch along only one axis of the screen. Thus determining a touch location along a first axis is independent of the detection signal along a second axis. Moreover, the intensity of the signal is uniform along the second axis, making the signal robust.

**Supporting Various Screen Sizes**

Configuration no. 5 may include optical elements with alternating facets that are focused on two neighboring light emitting or receiving elements. When such an optical element is separate from the light emitters or receivers, the emitters or receivers are generally spaced at a particular pitch. When such an optical element is formed as a rigid module together with an emitter or a receiver, the embedded emitter or receiver is precisely positioned with respect to the reflective facets. The facets aimed at a neighboring module, are aimed in accordance with the embedded emitter or receiver in the neighboring module that is similarly situated in its module. Such positioning potentially restricts the size of a screen to integral multiples of the pitch. E.g., with a pitch of 10 mm between emitters, the screen dimensions must be integral multiples of 10 mm.

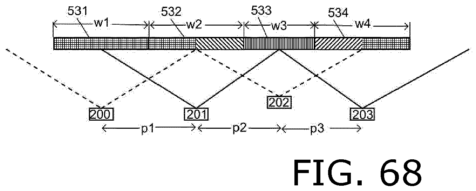

Reference is made to **FIG. 68,** which is a simplified diagram of four optical elements and four neighboring emitters. Shown in **FIG. 68** are four optical elements **531** - **534** arranged in a row. Each element is positioned opposite a respective one of emitters **200 - 203**. The same configuration is assembled for receivers, or for alternating emitters and receivers. In the case of receivers, emitters **200 - 203** are replaced by receivers; and in the case of alternating emitters and receivers, emitters **200** and **202** are replaced by receivers.

Optical elements **531, 532** and **534** are all of the same width, e.g., 10 mm; i.e., **w1 = w2 = w4.** The pitch, **P1,** between emitters **200** and **201** is a standard distance, e.g., 10 mm. The facets of optical element **531** are constructed for emitters that are at a standard pitch of 10 mm. Pitches **P2** and **P3** may be nonstandard. By enabling a device manufacturer to insert a single emitter at a non-standard pitch, the manufacturer can accommodate any screen size. The width, **w3,** of optical element **533** is customized for a non-standard screen size; e.g., for a screen length of 96 mm, **w3** is 6 mm instead of 10 mm, and pitches **P2** and **P3** are each 8 mm. Optical element **532** is a hybrid element - the left half of element **532** has facets aimed at emitters **200** and **201,** which are positioned according to a standard 10 mm pitch, and the right half of element **532** is special having facets aimed at emitters **201** and **202,** where emitter **202** has a non-standard placement. Optical element **534** is also a hybrid element, as its left half has facets aimed at emitters **202** and **203,** whereas its right half is aimed at two standard pitch emitters. Optical element **533** is non-standard throughout -- it is not as wide as the standard elements and has every other of its facets aimed at emitter **202.** In this example, the width of the beam from emitter **202** is roughly 16 mm, as compared to the standard 20 mm width. As such, emitter **202** is placed slightly closer to optical element **533.**

### Diffractive Surfaces

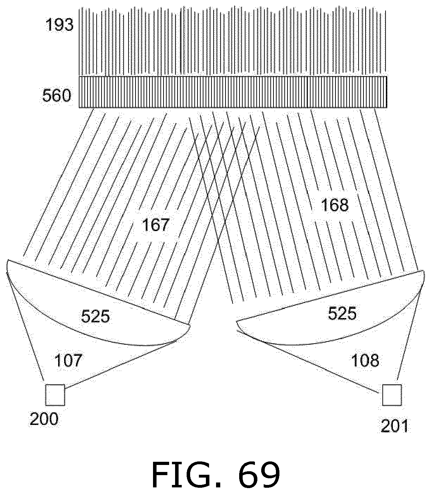

As described hereinabove, diffractive surfaces are used to direct beams from two emitters along a common path. Reference is made to **FIG. 69,** which is a simplified diagram of a diffractive surface that directs beams from two emitters along a common path. Shown in **FIG. 69** are emitters **200** and **201** emitting arcs of light **107** and **108** into two collimating lenses **525**. Wide beams **167** and **168** exit lenses **525** and enter refractive surface **560,** which directs both beams **167** and **168** into a wide beam **193** that crosses the screen. A similar optical arrangement splits wide beam **193** onto two receivers at the opposite screen edge. Each emitter is activated separately with a respective opposite receiver. Beams from the two emitters have different signal gradients along the width of beam **193,** as explained hereinabove. The two detection signals are used to calculate a touch location from **EQS. (2)** and **(3)** provided hereinbelow.

### Parallel Overlapping Beams

As described hereinabove, parallel wide beams projected at slightly different heights over a screen are used to provide multiple detection signals for a touch event on the screen.

### Alternating Emitters and Receivers

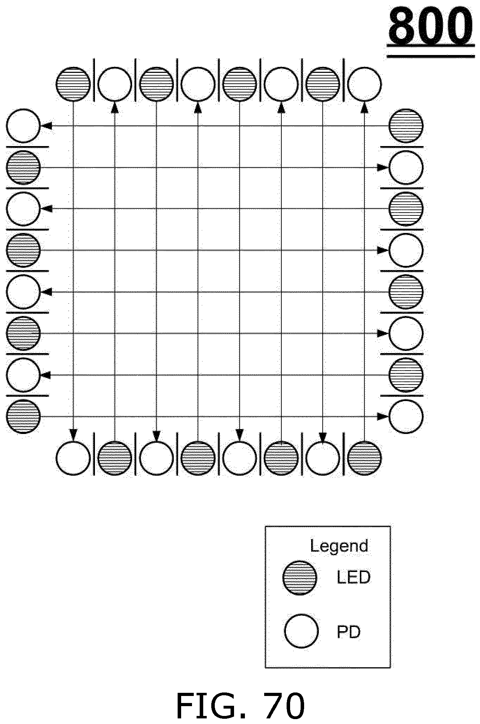

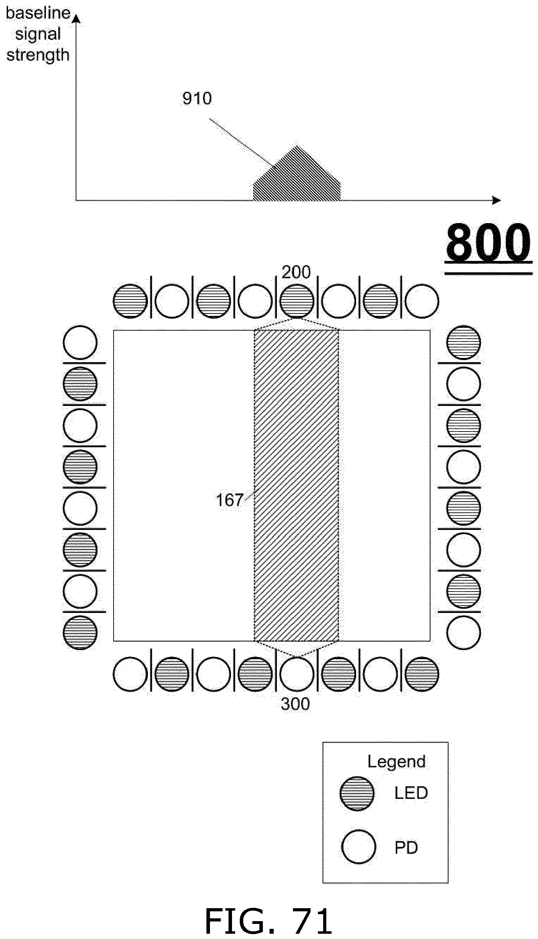

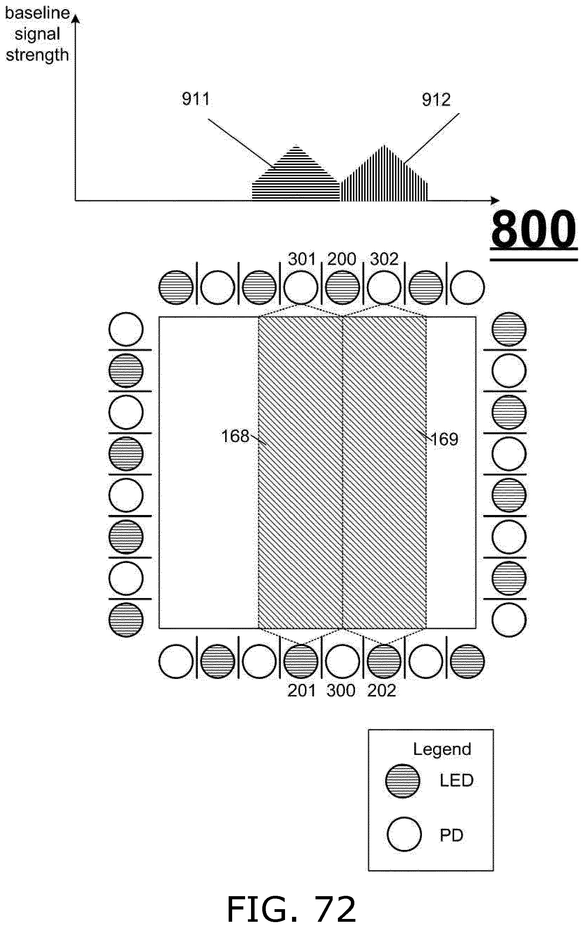

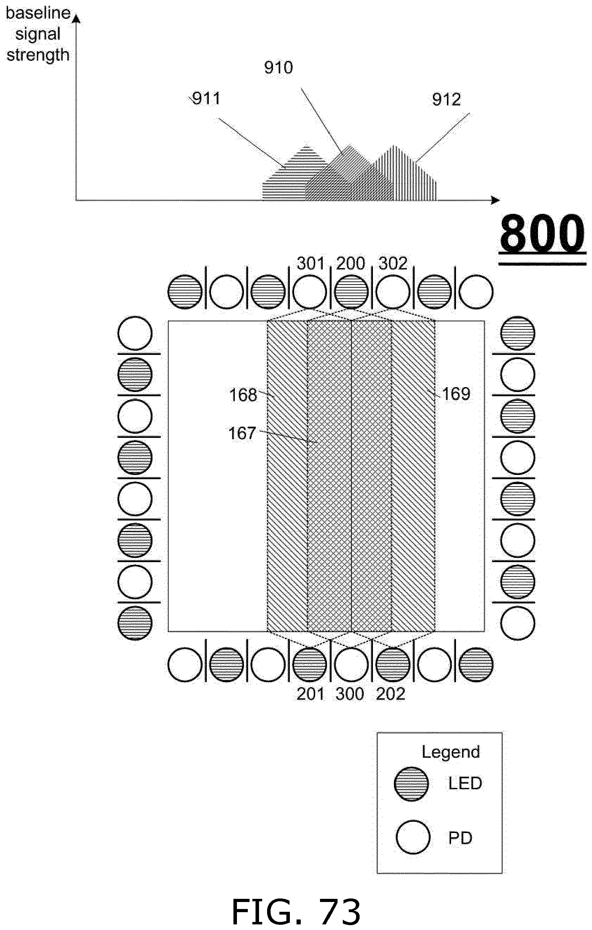

Emitters and receivers are positioned alternately along each screen edge. Reference is made to **FIG. 70,** which is a simplified diagram of a touch screen surrounded with alternating emitters and receivers. Reference is also made to **FIG. 71,** which is a simplified illustration of a touch screen surrounded with alternating emitters and receivers, and a wide beam crossing the screen. Reference is also made to **FIG. 72,** which is a simplified illustration of a touch screen surrounded with alternating emitters and receivers and two wide beams crossing the screen. Reference is also made to **FIG. 73,** which is a simplified illustration of a touch screen surrounded with alternating emitters and receivers and three wide beams crossing the screen. **FIGS. 71 - 73** show overlapping wide beams, similar to those of **FIGS. 59 - 61** described hereinabove.

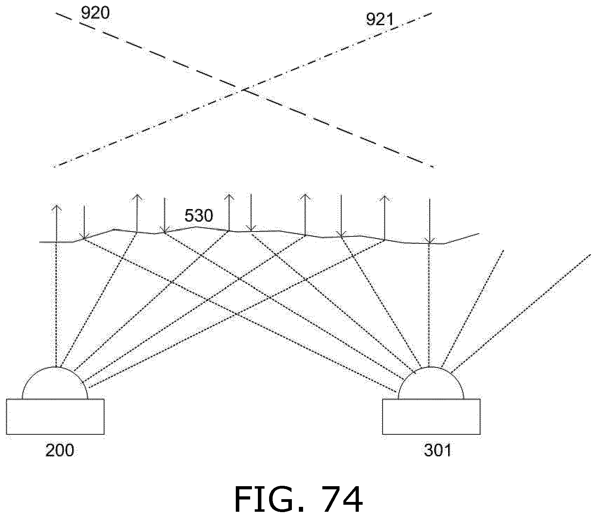

Reference is made to **FIG. 74,** which is a simplified illustration of a collimating optical element reflecting and interleaving light for an emitter and a neighboring receiver. **FIG. 74** shows optical element **530** interleaving neighboring light beams, wherein a first beam is outgoing from emitter **200** and a second beam is incoming to neighboring receiver **301. FIG. 74** also shows signal gradient **920** for the first beam and signal gradient **921** for the second beam. When a touch is detected on both beams, the sloping gradients enable determination of a precise touch location by interpolation, as described hereinbelow.

As indicated hereinabove with reference to **FIG. 67,** the detection signal does not vary with depth of touch location within a wide beam. Therefore, the opposing directions of the adjacent overlapping wide beams do not affect the touch detection signal. In turn, this enables interpolating signals from overlapping beams without regard for direction of each beam.

**Multi-Touch Detection**

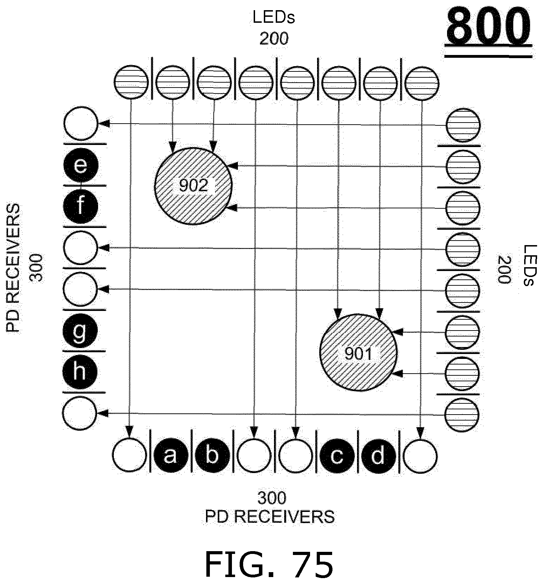

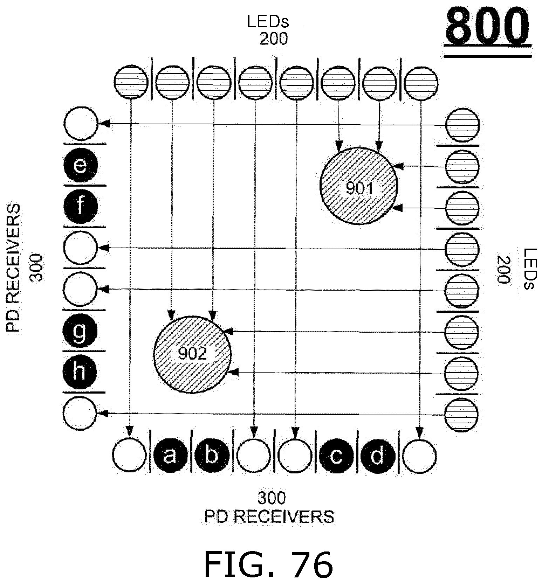

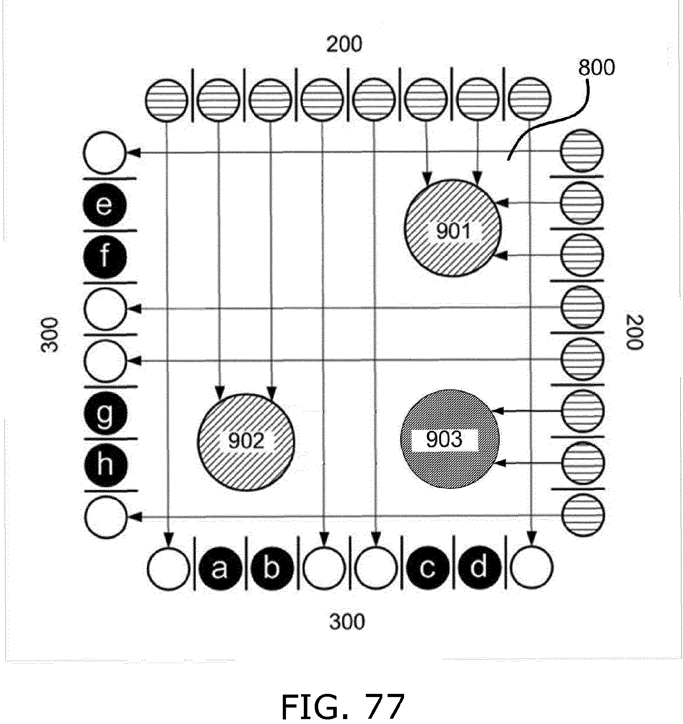

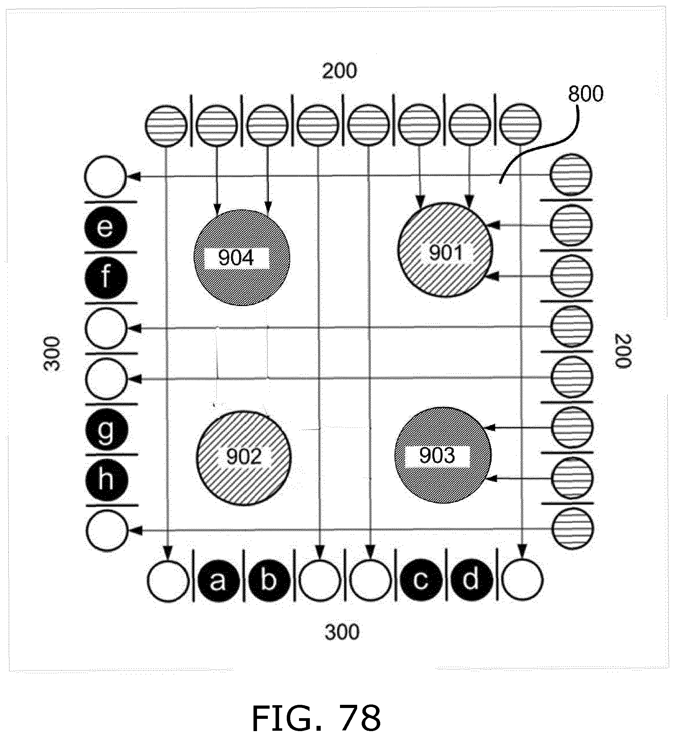

Multi-touch locations are often difficult to identify unambiguously via light emitters that emit light in directions parallel to two axes. Reference is made to **FIGS. 75 - 78,** which are illustrations of multi-touch locations that are ambiguous vis-à-vis a first orientation of light emitters. As shown in **FIGS. 75** and **76,** there is ambiguity in determining the locations of a diagonally oriented multi-touch. There is further ambiguity if a multi-touch includes more than two pointers. For example, the two-touch cases shown in **FIGS. 75** and **76** are also ambiguous vis-à-vis the three-touch case shown in **FIG. 77** and vis-à-vis the four-touch case shown in **FIG. 78.** In each of these cases, row and column indicators **a - h** show an absence of light in the same locations. Such ambiguity is caused by "ghosting", which refers to an effect where the shadow of one pointer obscures a portion of another pointer.

Ghosting is resolved by use of two sets of grid orientations for touch detection.

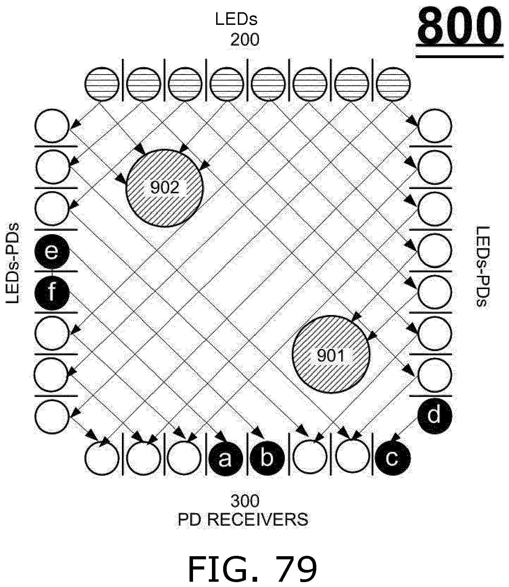

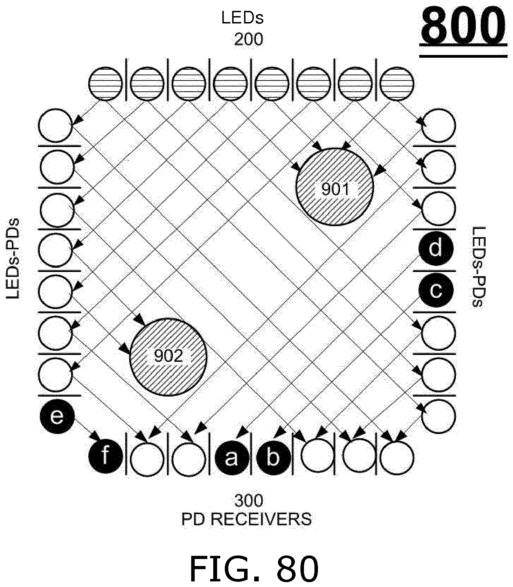

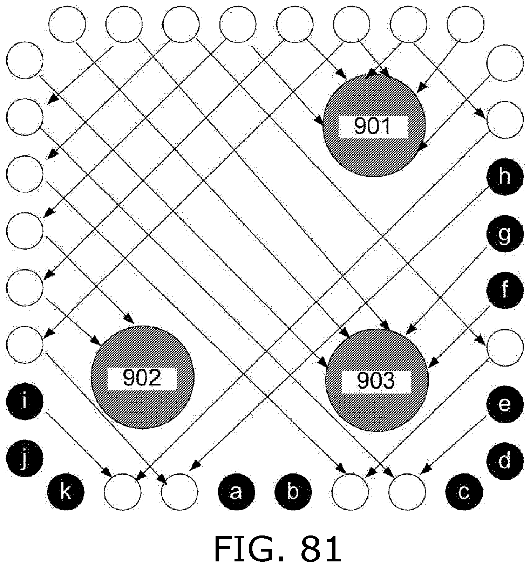

Reference is made to **FIGS. 79 - 81,** which are illustrations of the multi-touch locations of **FIGS. 75 - 77** that are unambiguous vis-à-vis a second orientation of light emitters. Use of an arrangement of alternating emitters and receivers, as described hereinabove with reference to **FIGS. 70** and **71,** and use of additional optical elements to generate two sets of detection axes, provide important advantages. One advantage is generating a robust set of overlapping wide beams, whereby multiple detection signals may be interpolated in order to determine touch coordinates with high precision. Another advantage is generating overlapping wide beams on the second axis set, such that touch detection on the second axis set is also precise.

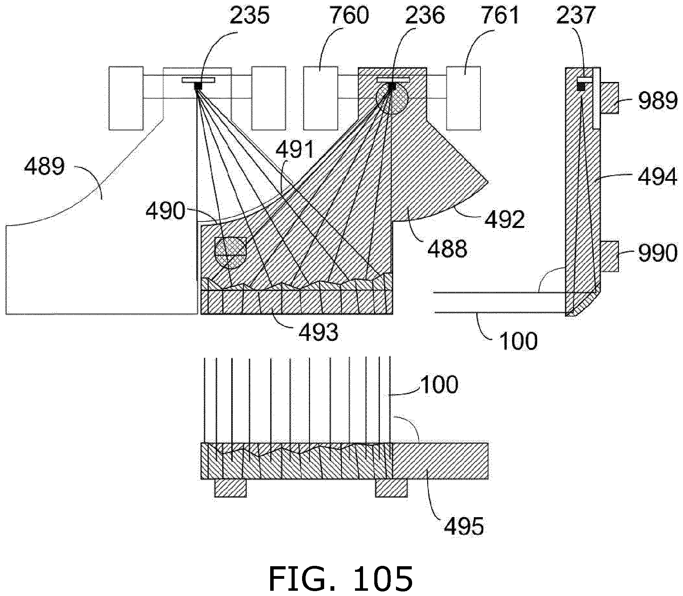

A dual-unit light guide is described hereinabove with reference to **FIGS. 41** and **42.** As described there, the lower portion **464** of the light guide contains reflective facets or lenses that are focused on the emitters and receivers, and the upper portion **463** includes reflective surface and lenses that do not require precision placement vis-à-vis the emitters and receivers. In Configuration No. 5, the alternating reflective or refractive facets form part of the lower portion. A three-sided refractive cavity for distributing light beams in three directions is formed as part of the upper portion. In Configuration No. 5, use of micro-lenses **467** is not required. Alternatively, the alternating facets are formed in transparent plastic modules that include an emitter or receiver, as described hereinbelow with reference to **FIG. 105.** An arrangement of these modules replaces lower portion **464,** and upper portion **463** remains.

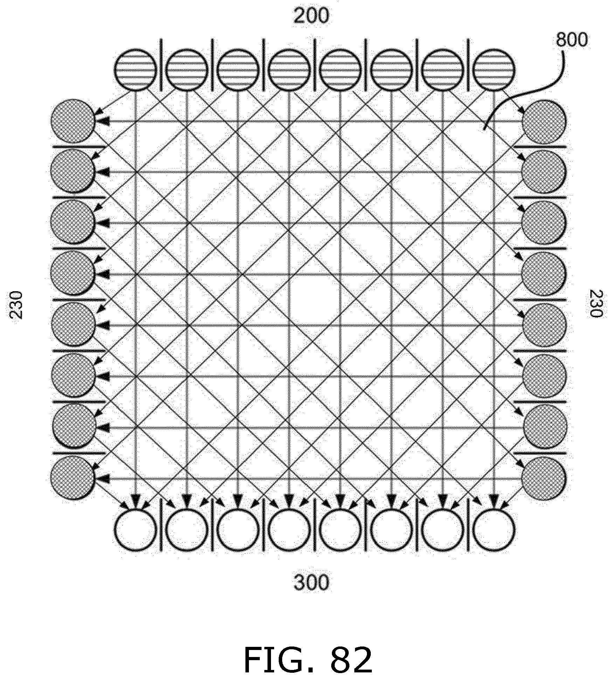

Reference is made to **FIG. 82,** which is a simplified illustration of a touch screen with light beams directed along four axes. Shown in **FIG. 82** is a row of light emitters **200** along the top edge of a screen **800,** and a row of light receivers **300** along the bottom edge of screen **800.** The left and right edges of screen **800** include opposing rows of combined emitter-receiver elements **230.** Elements **230** act as emitters and as receivers. An emitter and a receiver may be combined in a single unit, such as the reflective and transmissive sensor manufactured by VISHAY® Corporation of Malvern, PA, or an LED is used for both light emission and detection. An integrated circuit that both emits and detects light using an LED and a current limiting resistor, is described in Dietz, P.H., Yerazunis, W.S. and Leigh, D.L., "Very low cost sensing and communication using bidirectional LEDs", International conference on Ubiquitous Computing (UbiComp), October, 2003.

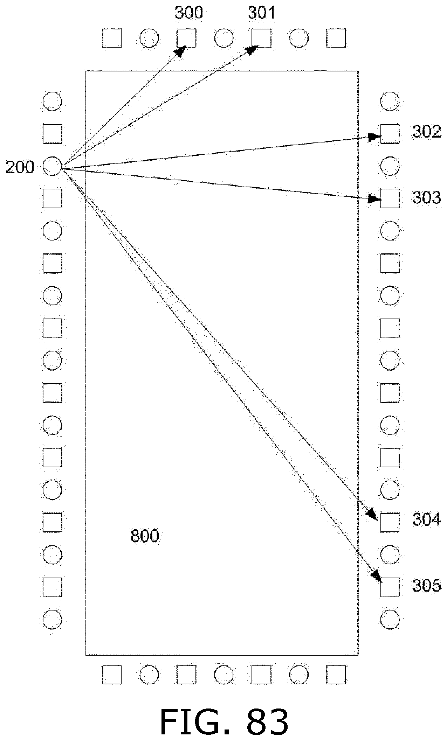

Reference is made to **FIG. 83,** which is a simplified illustration of an alternate configuration of light emitters and light receivers with two grid orientations. Shown in **FIG. 83** are light emitters **200** in an alternating pattern with light receivers **300** around a screen perimeter. Light emitted by each emitter is detected by two receivers at an opposite screen edge, the two receivers being separated by an emitter therebetween.

In order that the light from an emitter arrive at the outer edges of two opposite receivers, the wide beams emitted from each emitter must span a distance of three optical lenses. This is in contrast to the configuration described above with shift-aligned emitters and receivers, where the two receivers that detect light from a common emitter are positioned adjacent one another, and thus the wide beams emitted from each emitter need only span a distance of two optical lenses.

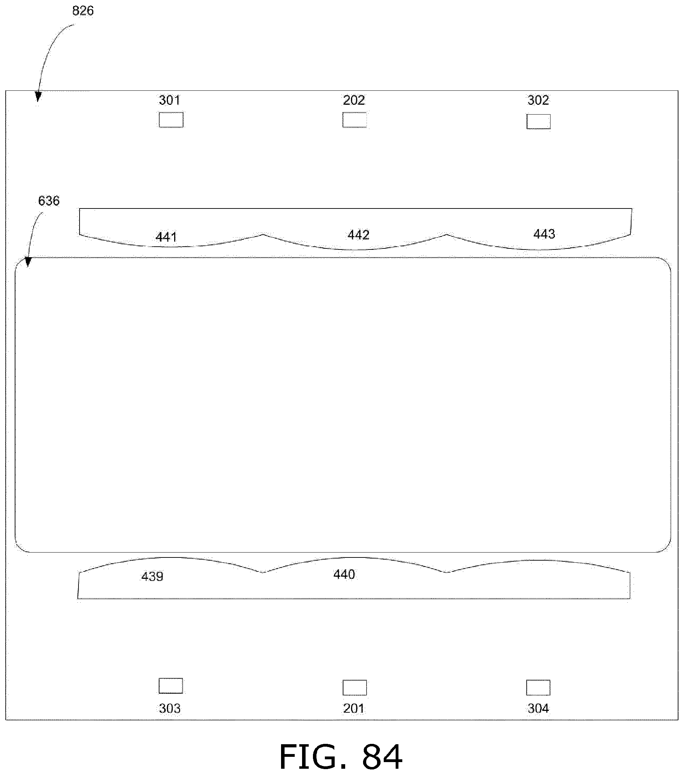

Reference is made to **FIG. 84,** which is a simplified illustration of a configuration of alternating light emitters and light receivers. As shown in **FIG. 84,** emitter **201** is situated between receivers **303** and **304** along the bottom screen edge, and emitter **202** is situated between receivers **301** and **302** along the top screen edge. Light from emitter **201** is detected by receivers **301** and **302,** and light from emitter **202** is detected by receivers **303** and **304.**

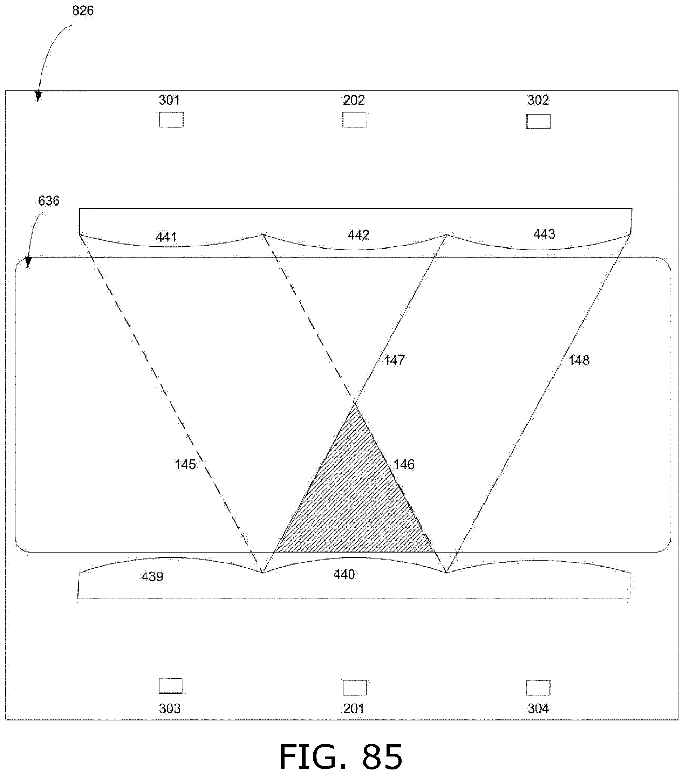

Reference is made to **FIG. 85,** which is a simplified illustration of two wide light beams from an emitter being detected by two receivers. Shown in **FIG. 85** are two wide beams from emitter **201** that exit lens **440** and arrive at lenses **441** and **443** for detection by receivers **301** and **302,** respectively. One wide beam is bordered by edges **145** and **146,** and the other wide beam is bordered by edges **147** and **148.** A cross-hatched triangular area indicates an overlap where a touch is detected at receivers **301** and **302.**

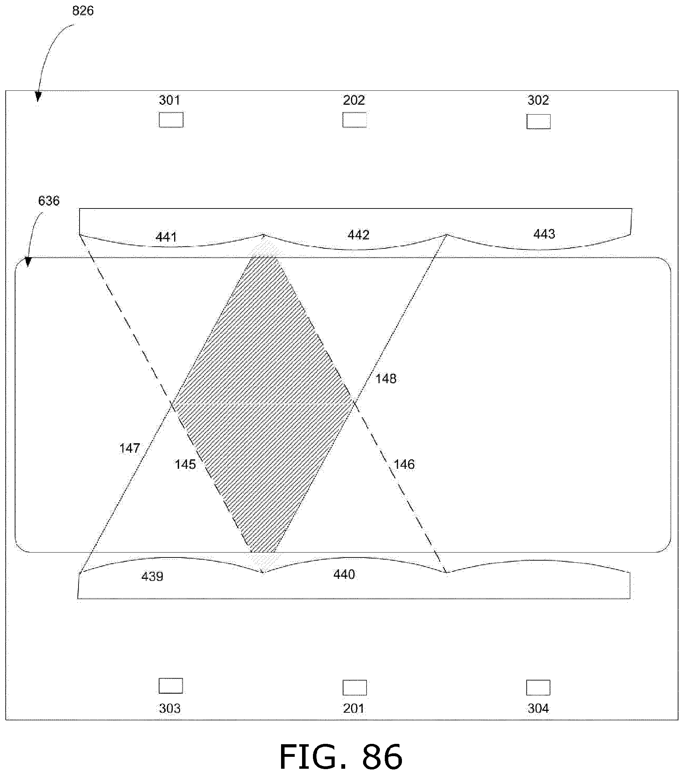

Reference is made to **FIG. 86,** which is a simplified illustration of two wide beams and an area of overlap between them. One wide beam, from emitter **201,** exits lens **440** and arrives at lens **441** for detection by receiver **301.** The wide beam is bordered by edges **145** and **146.** Another wide beam, from emitter **202** to receiver **303,** is bordered by edges **147** and **148.** A cross-hatched diamond-shaped area indicates an overlap where a touch is detected at receivers **301** and **303.**

It will thus be appreciated by those skilled in the art that any location on the screen is detected by two emitter-detector pairs, when the emitter-detector pairs are situated at opposite screen edges and, as such, an accurate touch location may be calculated as described hereinabove.

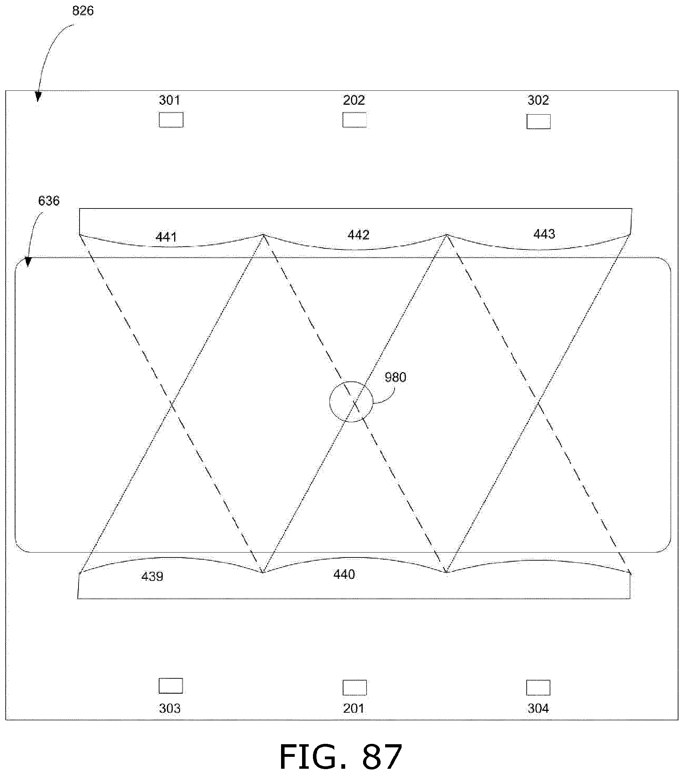

Reference is made to **FIG. 87,** which is a simplified illustration of a touch point **980** situated at the edges of detecting light beams. **FIG. 87** shows that it is desirable that the light beams extend to the edges of the emitter and receiver lenses, in order to accurately determine the location of touch point **980.**

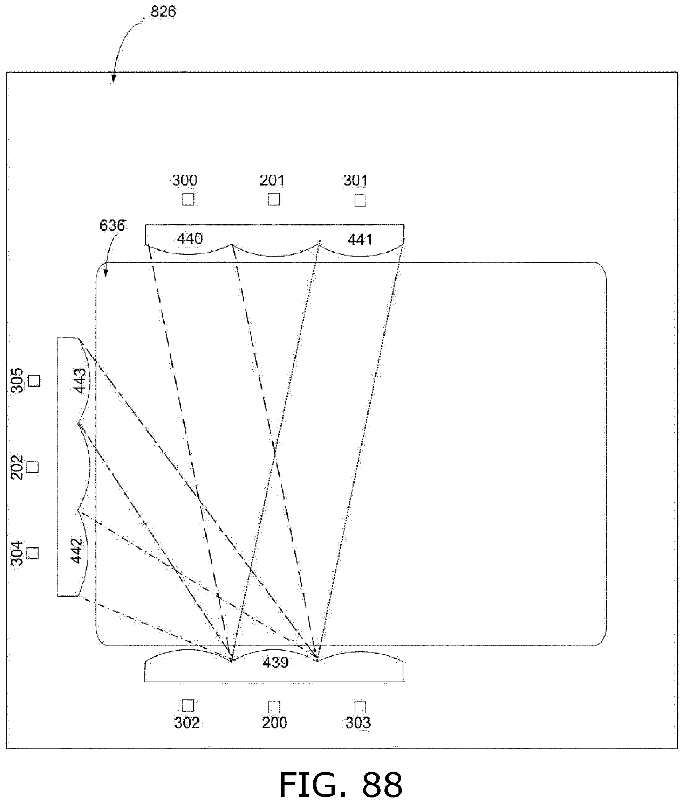

Reference is made to **FIG. 88,** which is a simplified illustration of an emitter along one edge of a display screen that directs light to receivers along two edges of the display screen. Shown in **FIG. 88** are a first pair of light beams emitted from an emitter **200** at one edge of a display screen to receivers **300** and **301** along the opposite edge of the display screen, and a second pair of light beams emitted from emitter **200** to receivers **304** and **305** along the adjacent left edge of the display screen. A third pair of light beams (not shown) is emitted from emitter **200** to receivers at the adjacent right edge of the display screen. The second and third pairs of light beams are each oriented at an angle of approximately 45° relative to the first pair of light beams.

Also shown in **FIG. 88** is a lens **439,** used to refract light from emitter **200** to lenses **442** and **443,** which are oriented at approximately 45° to the left of lens **439.** Lens **439** is made of a plastic material, which has an index of refraction on the order of 1.4 - 1.6. As such, an angle of incidence of approximately 84° is required in order for the light to be refracted at an angle of 45°. However, for such a large angle of incidence, the amount of light lost due to internal reflection is large. In order to improve throughput, two air/plastic interfaces are used to achieve an angle of refraction of approximately 45°, as described hereinabove.

**Tri-Directional Micro-Lenses**

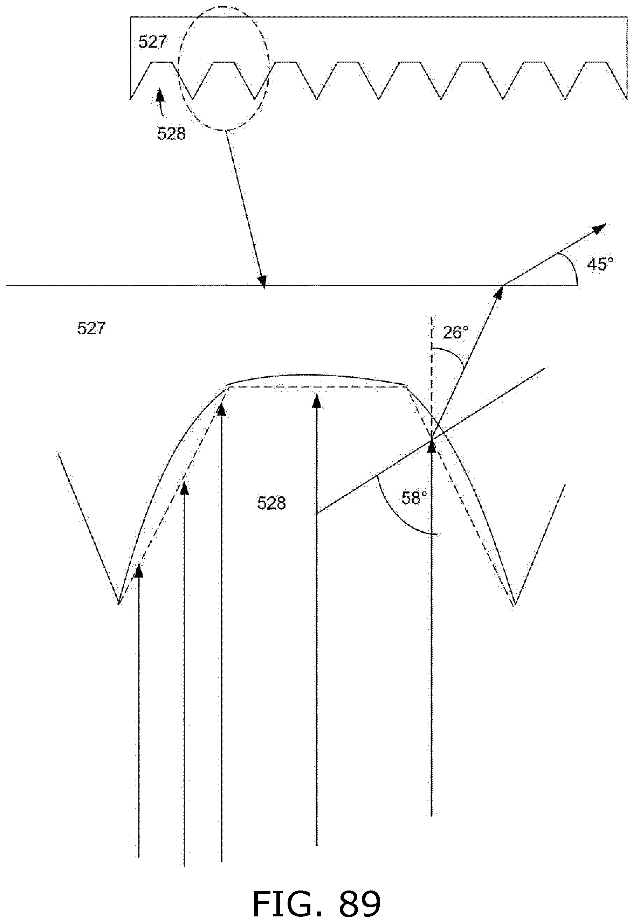

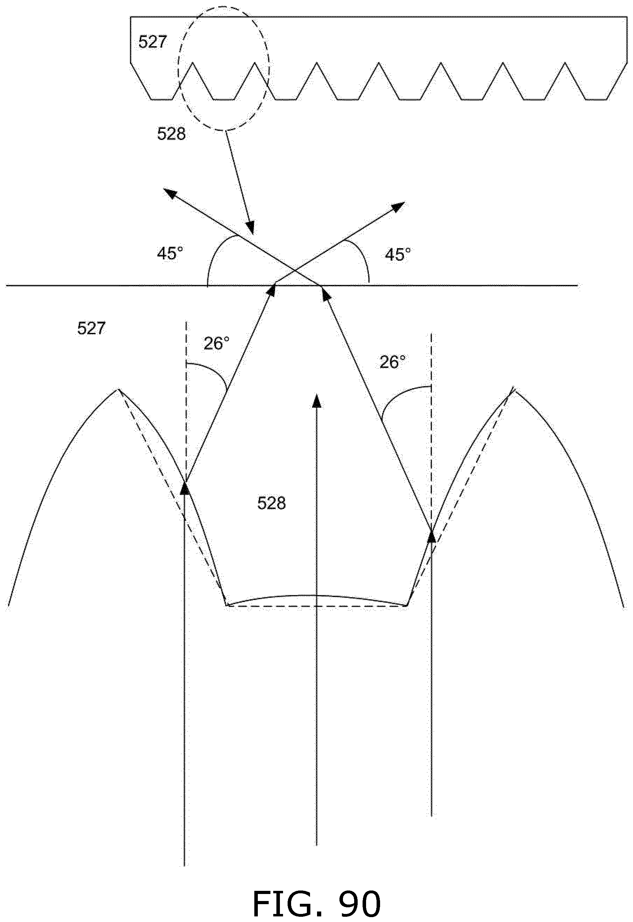

Reference is made to **FIGS. 89** and **90,** which are simplified illustrations of a lens for refracting light in three directions, having a lens surface with a repetitive pattern of substantially planar two-sided and three-sided recessed cavities, respectively. The flat surface opposite the emitter or receiver is distal to the emitter or receiver in **FIG. 89** forming a three-sided cavity, and is proximal thereto in **FIG. 90** separating two two-sided cavities.

Such three-sided lenses are used in several cases. In a first case, the lens is used without an additional optical component with alternating facets for interleaving neighboring beams. In this case, wide beams cover the screen but do not necessarily overlap to provide two or more detection signals for interpolation. A typical use case for this is finger input, but not stylus input. The tri-directional lens enables detection on four different axes, to eliminate ambiguity and ghosting in multi-touch cases. The tri-directional lens also provides additional touch location information; namely, four axes instead of two, and the additional information increases the precision of the touch location, even for a single touch.

In a second case, the lens is used with an additional optical component with alternating facets for interleaving neighboring beams, or with an alternative arrangement providing overlapping detection signals. In this case, overlapping wide beams provide two or more detection signals for interpolation. Typical use cases for this are finger and stylus input. The tri-directional lenses and the interleaving facets may be formed in two distinct components. The interleaving facets component is positioned closer to its emitter or receiver than the tri-directional component, since the tolerance for imprecise placement of the interleaving facets component is low, whereas the tolerance for imprecise placement of the tri-directional lens component is high. Alternatively, the tri-directional lenses and the interleaving facets may be formed in a single rigid component. For example, a diffractive grating interleaves signals from two sources and also splits the beams in three directions.

Shown in **FIG. 89** is a lens **527** with a pattern of micro-lenses **528** on its bottom surface. The micro-lens pattern shown in **FIG. 89** has three substantially planar sides, each side refracting light in a different direction. The pattern of micro-lenses **528** forms a saw-tooth repetitive pattern along the bottom edge of the upper section of the lens. The three walls of each micro-lens **528** are slightly curved, in order to spread the light in a wider arc as it exits the lens toward an intended receiver.

A collimating lens section (not shown) is situated beneath lens **527,** to direct the light in parallel beams into micro-lenses **528.**

In some cases, lens **527** is part of a two-lens arrangement, with lens **527** forming the upper of the two lenses, farther from the emitter or receiver, and nearer to the screen surface. In distinction, the two-section lens shown in **FIG. 41** has a micro-lens pattern on the top of the lower section.

In order to properly interleave collimated beams from the alternating facets component, the pitch of the three-sided cavities needs to be much smaller than the pitch of the alternating facets. Ideally, the pitch of the cavities should be made as small as possible. With alternating facets of about 0.6 mm, the cavities should be 0.2 mm or smaller. The dihedral angle between each pair of adjacent planes is approximately 122°, to achieve a 45° refraction using plastic having a refractive index of 1.6. However, different angles may be desired for a different set of diagonal axes, or plastic having a different refractive index may be desired, in which case the dihedral angle will be different.

As shown in **FIG. 89,** incoming collimated light is refracted through two air/plastic interfaces, to emerge at an angle of refraction that is approximately 45°. The first interface, along an inner plane of the micro-lens, refracts the incoming light to an angle of refraction that is approximately 58°, and the second interface refracts the light to emerge at an angle of refraction that is approximately 45°.

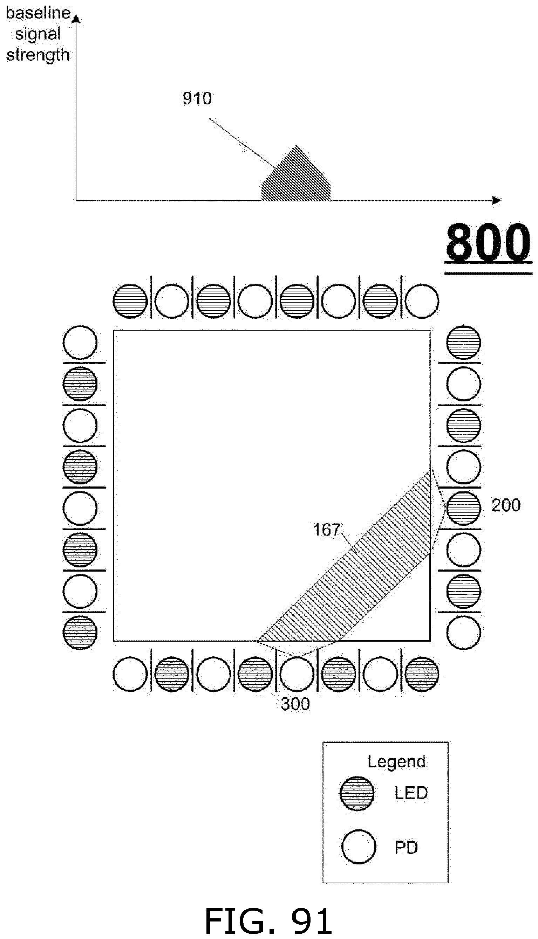

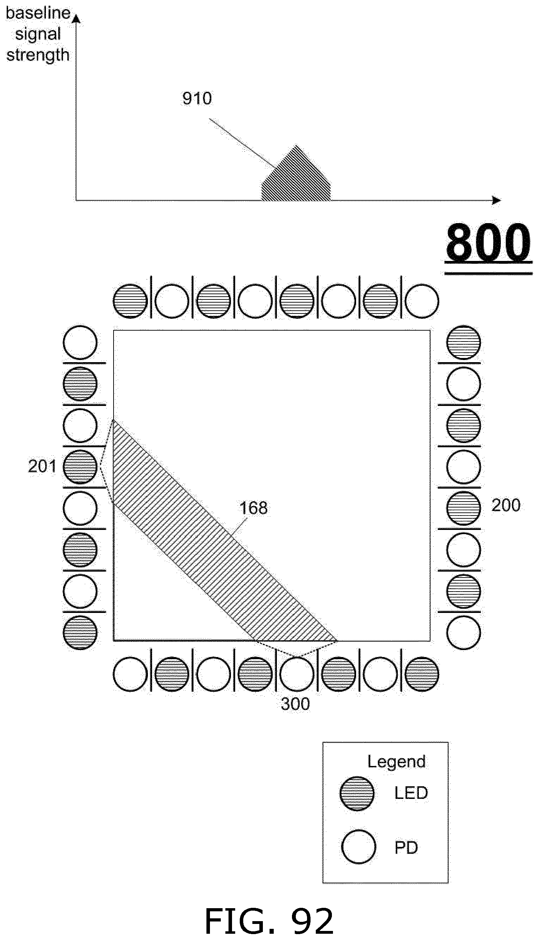

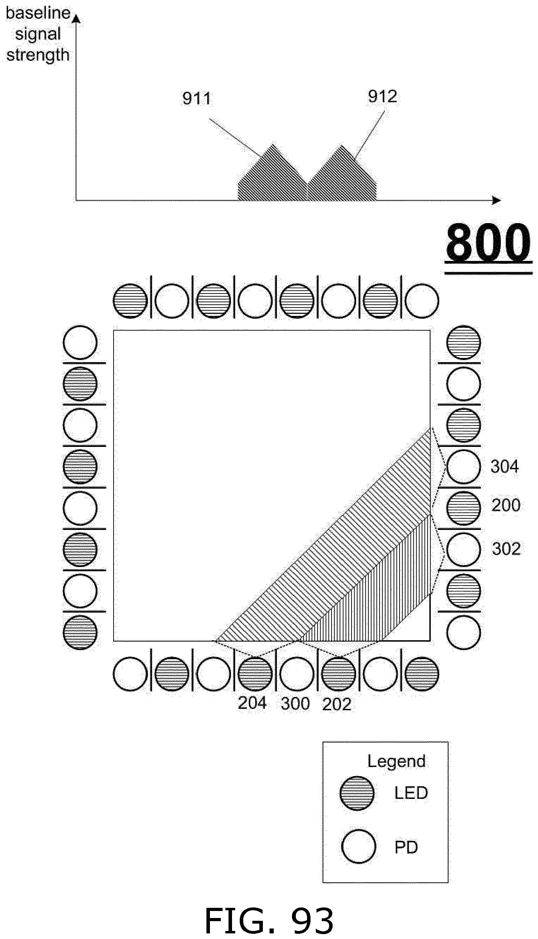

Reference is made to **FIGS. 91 - 93,** which are simplified illustrations of a touch screen surrounded with alternating emitters and receivers and diagonal wide beams crossing the screen. **FIGS. 91** and **92** show diagonal wide beams from emitter **200** and **201** to receiver **300,** and a corresponding signal gradient **910. FIG. 93** shows diagonal wide beams from emitters **202** and **204** to receivers **302** and **304,** and corresponding signal gradients **911** and **912.** These wide beams overlap wide beam **167** of **FIG. 91,** thereby providing multiple touch detections for interpolation.

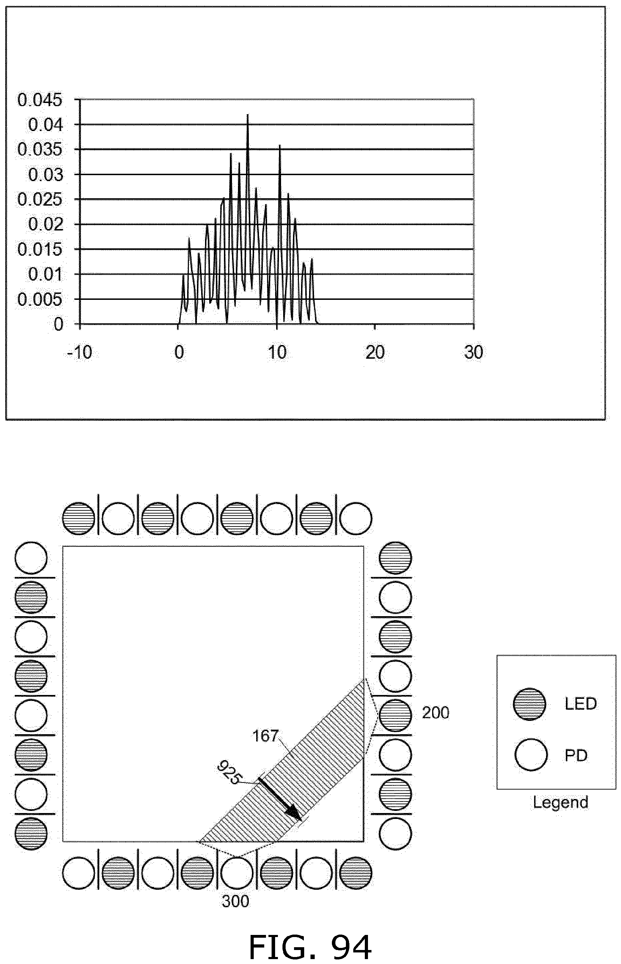

Reference is made to **FIG. 94,** which is a simplified graph of light distribution across a diagonal wide beam in a touch screen. The lower portion of **FIG. 94** shows a wide beam **167** and a path **925** crossing this beam according to a second axis system. If the pitch between elements is 1 unit, then the width of this beam is $1/\sqrt{2}$ units. Thus if the pitch between elements is 10 mm, then the beams along the diagonal axes are approximately 7 mm across. The upper portion of **FIG. 94** shows the distribution of light across wide beam **167.** The signal spans across approximately 14 mm of the diagonal beam, as compared with 20 mm of the vertical beam in **FIG. 60.** As described above with reference to **FIG. 62,** the signal gradient across the width of the beam enables interpolating multiple detection signals to determine a precise touch position.

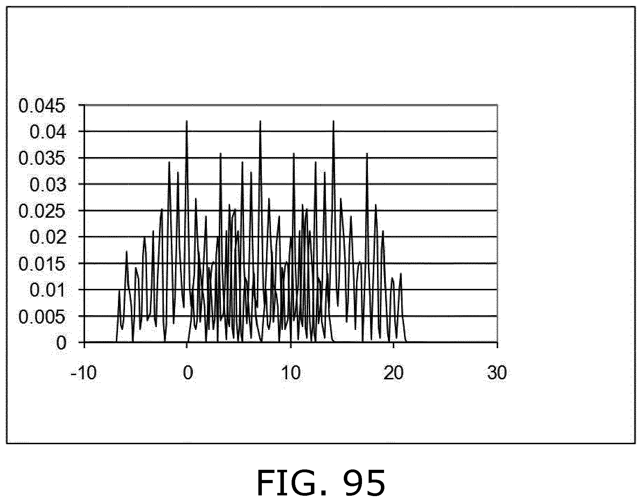

Reference is made to **FIG. 95,** which is a simplified graph of light distribution across three overlapping diagonal wide beams in a touch screen. **FIG. 95** shows a signal distribution across three overlapping beams in a second axis system, similar to **FIG. 66.** Different widths are covered by these two sets of beams.

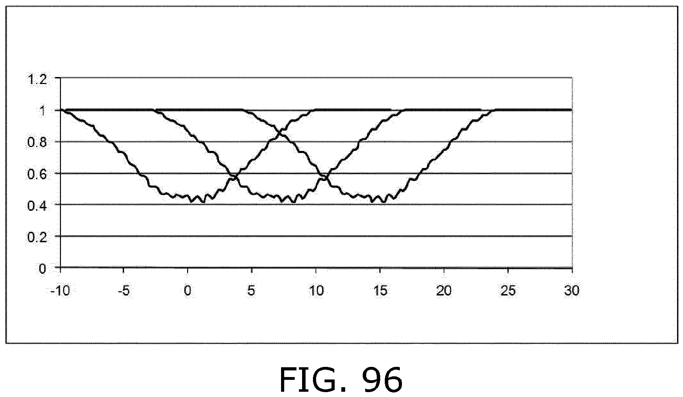

Reference is made to **FIG. 96,** which is a simplified graph of touch detection as a finger glides across three overlapping diagonal wide beams in a touch screen. **FIG. 96** shows how reception of a finger passing across three adjacent overlapping beams is detected by each beam. The maximum detection signal is approximately 40% of the baseline signal intensity, and this occurs when the finger is in the middle of the beam. In this case, the finger blocks approximately 60% of the total light of the beam. This is greater than the amount of light blocked by the same finger in **FIG. 63;** namely, 40%. The difference is due to the diagonal beam being narrower than the vertical beam. Therefore a 6 mm fingertip blocks a greater portion of light in the beam. The detection signals are substantially smooth and robust for determining touch locations.

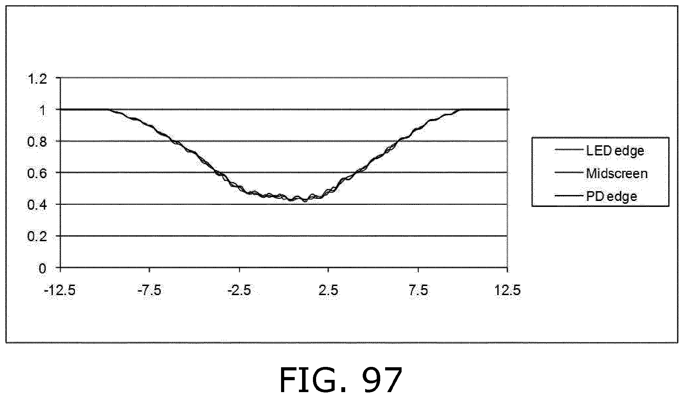

Reference is made to **FIG. 97,** which is a simplified graph of detection signals from a diagonal wide beam as a fingertip moves across the screen at three different locations. **FIG. 97** shows that touch detection remains stable along depth of a wide beam, and varies only according to its location across the width of the beam, as described hereinabove with reference to **FIG. 67.**

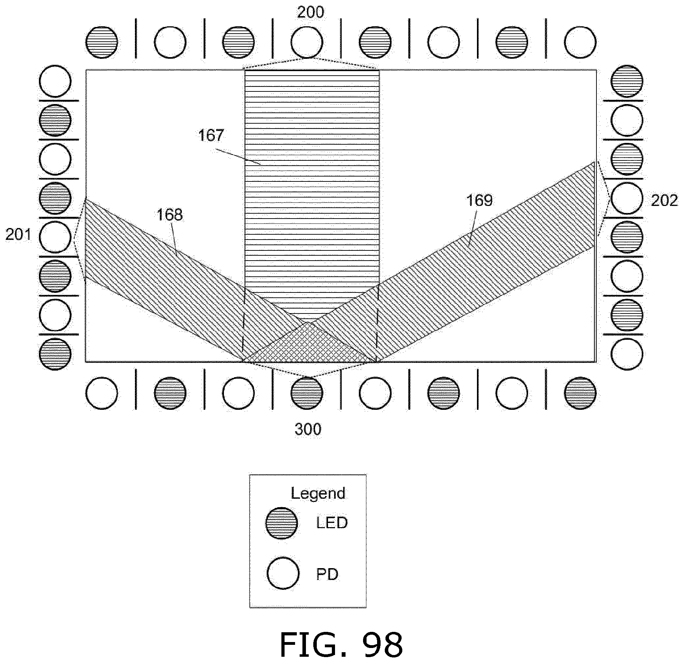

Reference is made to **FIG. 98,** which is a simplified illustration of a first touch screen surrounded with alternating emitters and receivers, whereby diagonal and orthogonal wide beams crossing the screen are detected by one receiver. **FIG. 98** shows an equal number of elements positioned along each screen edge. Three beams **167 - 169** are shown for one receiver **300;** namely, one directed to an opposite emitter 200 and the other two directed to emitters **201** and **202** on adjacent screen edges. The diagonal beams generate two axes that are not perpendicular to one another.

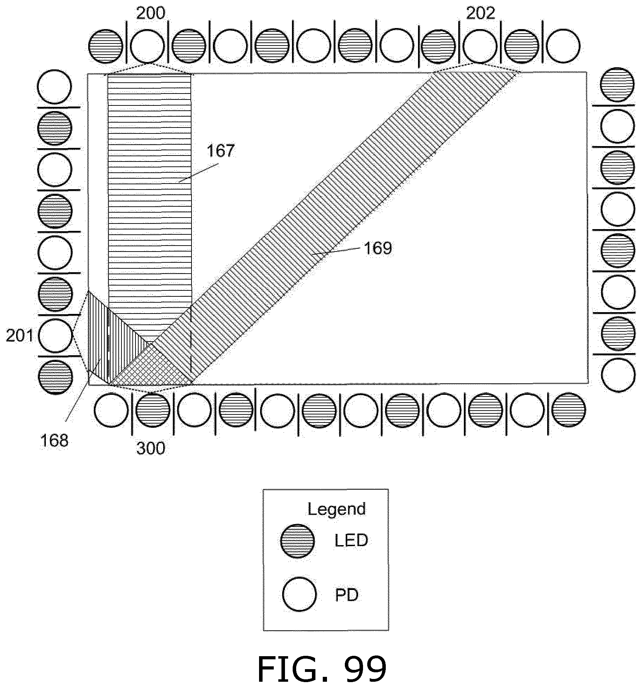

Reference is made to **FIG. 99,** which is a simplified illustration of a second touch screen surrounded with alternating emitters and receivers, whereby diagonal and orthogonal wide beams crossing the screen are detected by one receiver. **FIG. 99** shows different numbers of elements positioned along adjacent screen edges. Three beams **167 - 169** are shown for one receiver **300;** namely, one directed to an opposite emitter **200,** and the other two directed at substantially 45° angles to emitters **201** and **202,** one of which is on an opposite edge and another of which is positioned on an adjacent edge. These diagonal beams generate two axes that are perpendicular to one another.

**Palm Rejection**

When a user rests his hypothenar muscles, located on the side of his palm beneath his little finger, on a touch screen when writing with a stylus, ghosting generally occurs. This part of the palm blocks a large area of the touch screen, and often blocks a series of light beams along the screen's vertical axis, thereby hiding the stylus' touch position along the vertical axis.

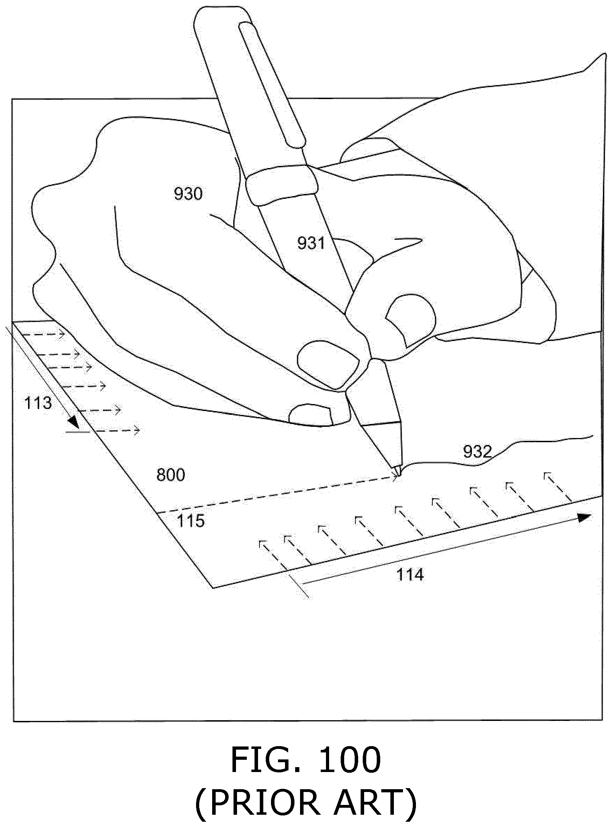

Reference is made to **FIG. 100,** which is a simplified illustration of a user writing on a prior art touch screen with a stylus. Shown in **FIG. 100** is a hand **930** holding a stylus **931,** and drawing a line **932** on a touch screen **800.** The user's palm is resting on screen **800,** blocking two series of light beams depicted as dotted lines; namely, a series **113** along the screen's horizontal axis, and a series **114** along the screen's vertical axis. The location of the stylus tip on the vertical axis is within series **114.** Beam **115** does detect the tip of the stylus, but it only provides a horizontal axis location.

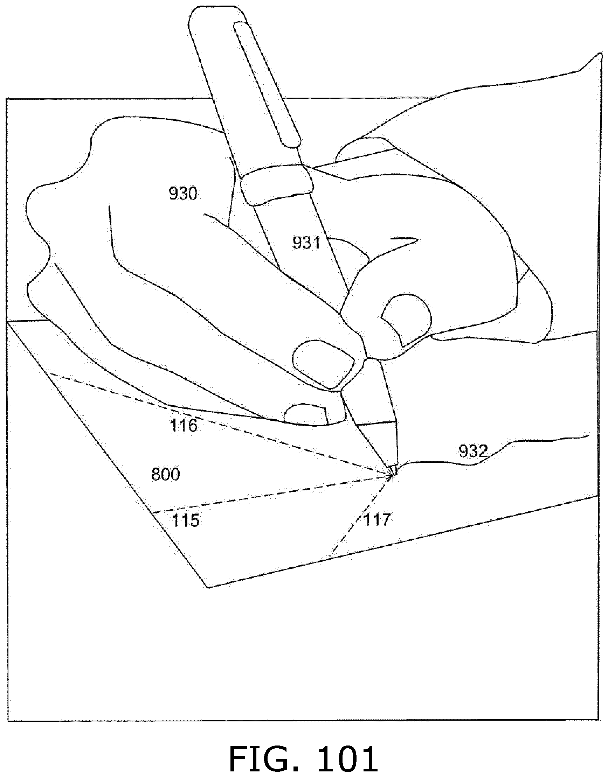

Reference is made to **FIG. 101,** which is a simplified illustration of light beams detecting location of a stylus when a user's palm rests on a touch screen. By providing two sets of detection axes; namely, an orthogonal set and a diagonal set, a two-dimensional location of a stylus is determined. **FIG. 101** shows that beams **115** and **116** uniquely detect a stylus. Since each detection comprises overlapping wide beams whose signals are interpolated, as described hereinabove, the stylus position is determined with high precision, despite beams **115** and **116** not being perpendicular to one another. When the bottom of the user's palm does not block diagonal beam **117,** then beam **117** also detects the stylus location separately from the palm. In such case, beams **116** and **117** are used to detect the stylus location. Alternatively, all three detecting beams **115 - 117** may be used.

Another challenge with touch screens that support both stylus and finger input arises when a user places his palm on the screen in order to write with a stylus, is misinterpretation of the initial contact between palm and screen as being a tap on an icon, in response to which the device launches an unintended application whose icon was tapped. Once the palm is resting on the screen, an area of contact is used to reject the palm touch as a screen tap. Nevertheless, the initial contact may cover a small surface area of the screen and thus be misinterpreted as a screen tap.

Light beams above the screen are used to detect a palm as it approaches the screen. In one case this is accomplished by projecting light from each emitter at several heights above the screen, as illustrated in **FIG. 14** showing an approaching finger **900** blocking beam **101** but not beam **102**. In another case, multiple layers of emitters and receivers are arranged around the screen, and used to detect objects at different heights above the screen, as described hereinabove with reference to a user input gesture cavity and, in particular, with the cavity frame folded on top of the screen.

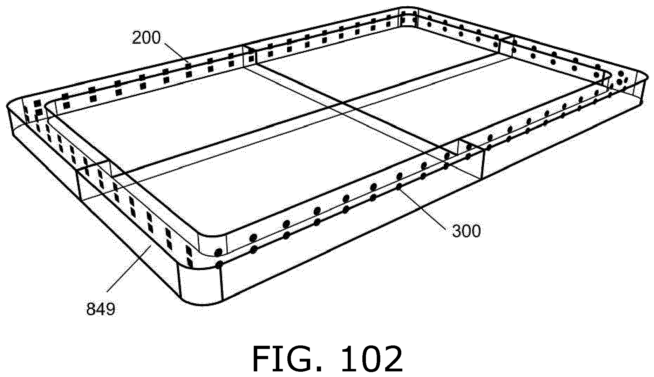

Reference is made to **FIG. 102,** which is a simplified illustration of a frame surrounding a touch screen. **FIG. 102** shows a frame **849** surrounding a touch screen, similar to frame **849** of **FIG. 49.** Two stacked rows of emitters **200** and receivers **300** are provided in the frame. When assembled together with a display in an electronic device, the stacked rows of emitters and receivers are raised above the display surface and provide object detection at two heights, namely, on the screen by the lower row of emitters and receivers, and above the screen by the upper row of emitters and receivers. When a user's palm begins to touch the screen, a large palm area is detected hovering above the screen. This enables the device to determine that a palm is approaching the screen, and that any screen tap is inadvertent.

In another case, only one row of emitters and receivers is provided for detecting a palm hovering above the screen, and touches on the screen are detected by conventional detection systems imposed on the display including inter alia capacitive or resistive touch sensors.

A user interface disables screen taps for activating functions when a palm is detected. When the palm is detected, the user interface is configured to launch applications in response to a user touching an icon and gliding his finger away from the touched location along the touch screen. I.e., two sets of user interface gestures are provided. When no palm is detected, the first set of gestures is used. With the first set of gestures, a tap on an icon activates an application or function associated with the icon. When a palm is detected hovering above the screen, the second set of gestures is used. With the second set of gestures, the user is required to touch an icon and then glide his finger away from the touch location along the touch screen in order to activate the application or function associated with the icon. In this way, the device does not launch an unintended application when a user places his palm on the screen. The second set of gestures does not disable activation of icons; it enables the user to activate the application or function associated with the icon, if he desires to do so, by a touch and glide gesture.

## Situating Elements around Corners

Screen corners present several challenges for arranging emitters and receivers. One challenge is that two emitters need to be placed in the same location - one for each screen edge. The challenge is complicated by the layout illustrated in **FIG. 40,** whereby the emitter and receiver elements are positioned under the screen surface, and therefore the rectangle formed by these elements is smaller than the frame of lenses surrounding the screen. One approach to overcoming this challenge is placement of two emitters at approximately the same location on the PCB, with one of the emitters placed on the top surface of the PCB and the other emitter placed on the bottom surface of the PCB. However, this approach introduces complications with connectors and positioning of optical elements.

Another challenge is extending overlapping beams to the edges of the screen. Although the emitters and receivers are underneath the screen, touch detection covers the entire area bordered by the inner edges of the optical elements that surround the screen.

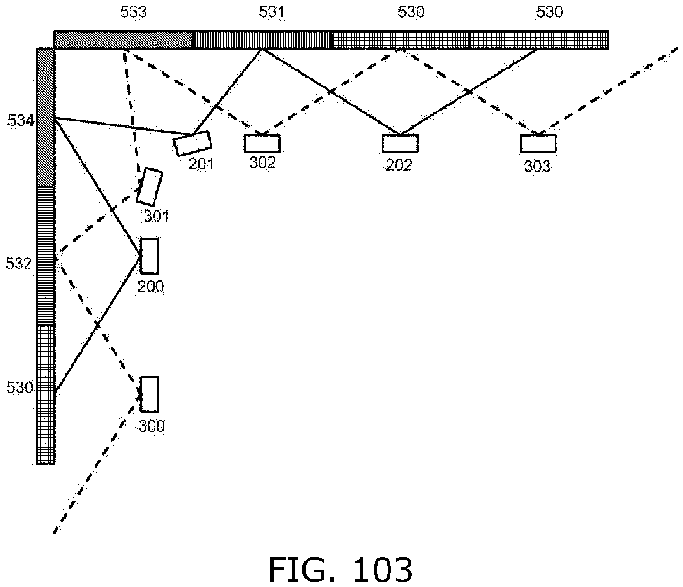

Reference is made to **FIG. 103,** which is a simplified illustration of a first arrangement of emitters, receivers and optical elements for a corner of a touch screen.

**FIG. 103** shows a first corner arrangement of emitter or receiver elements and their respective optical elements. Receivers **300 - 303** and emitters **200 - 202** are arranged alternatingly along two adjacent screen edges. Solid lines indicate light beams from the emitters, and dashed lines indicate light beams arriving at the receivers. Emitters and receivers **300, 200, 302, 202** and **303** are positioned according to a standard pitch, and optical elements **530** are configured accordingly. Receiver **301** and emitter **201** are oriented at an angle, and their wide beams are divided such that half of a beam traverses the screen in a first direction, e.g., along the screen's vertical axis, and the other half of the beam traverse the screen in a second direction, e.g., along the screen's horizontal axis. Moreover, in systems that include a second lens having three-sided cavities for splitting beams, as described hereinabove, half of the wide beam is split into a first pair of diagonal beams that originate along one screen edge, and the other half of the beam is split into a second pair of diagonal beams that originate along an adjacent screen edge. A hybrid optical element **531** is provided in order to overlap beams for emitter **201** and receiver **302.** Optical element **531** is referred to as a "hybrid optical element" because the right half of the element is the same as the right half of element **530,** but a portion of the reflective or refractive facets on the left half are directed at the non-standard location and orientation of emitter **201.** Similarly, a hybrid optical element **532** is provided in order to overlap beams for emitter **200** and receiver **301.** The lower half of hybrid optical element **532** is similar to the left half of element **530.** Both halves of corner element **533** are uniquely configured; namely, the left half overlaps beams for emitter **201** and receiver **301,** and the right half overlaps beams for emitter **201** and receiver **302.** Both halves of corner optical element **534** are also uniquely configured for emitters **200** and **201** and for receiver **301.**

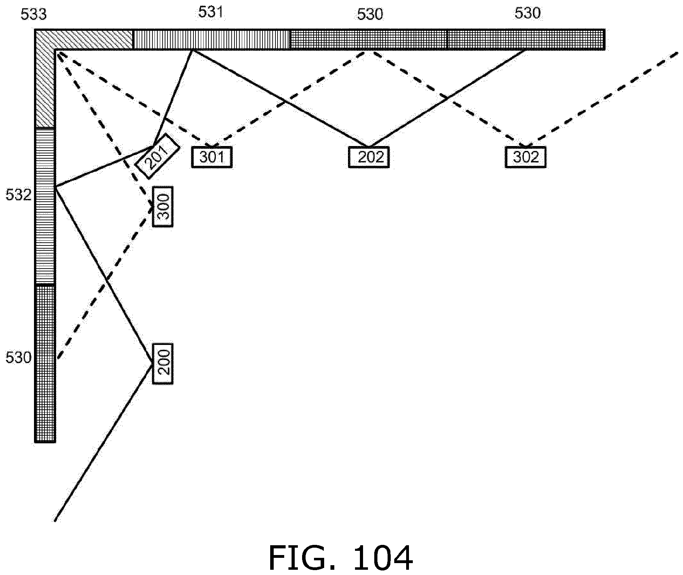

Reference is made to **FIG. 104,** which is a simplified illustration of a second arrangement of emitters, receivers and optical elements for a corner of a touch screen. **FIG. 104** shows an alternative corner arrangement of emitter or receiver elements and their respective optical elements. In the arrangement shown in **FIG. 104,** only one emitter **201** is placed at a non-standard pitch and orientation. Standard optical elements **530** are used together with hybrid optical elements **531** and **532** and unique corner optical elements 533. Optical elements **531 - 533** are configured for the emitter-receiver arrangement shown, and are therefore different than elements **531 - 533** of **FIG. 103.**

## Integrated Modules

In general, there is low tolerance for assembly errors for touch systems using alternating reflective or refractive facets aimed at two foci. An offset in placement of an emitter or a receiver causes it to be out of the reflective facet's focus, which can degrade accuracy and performance of such systems. Rigid modular blocks containing reflective or refractive facets and an emitter or a receiver are prepared, in order to ensure the required assembly precision. Such modular blocks are useful for simplifying the process of integrating touch screen components, and for minimizing the tolerance chain for a manufacturer. These modular blocks are formed so as to be easily positioned together in a row along an edge of a display, for fast assembly of a touch screen. The high tolerance requirements of placing an emitter or receiver in exactly the correct position vis-à-vis the reflective or refractive facets, are handled during manufacture of the modular blocks, thus removing the burden of high precision assembly from a device manufacturer.

Simplified manufacturing is achieved by integrating optical elements and electronic components into a single unit. As such, complex surfaces may be gathered into one component, thereby reducing the need for high assembly tolerances.

Reference is made to **FIG. 105,** which is an illustration of optical components made of plastic material that is transparent to infrared light. Shown in **FIG. 105** is an optical component **488** that includes a forward-facing LED **236,** and electronics to handle the LED signal. Optical component **488** is connected to electrical pads **760** and **761.** Optical component **488** is used to transmit collimated light beams from two emitters; namely, emitter **235** and emitter **236.** Emitter **235** is included in a neighboring optical component **489.** In the alternating emitter-receiver arrangement described hereinabove, optical component **488** is used to transmit collimated light beams for one emitter and one receiver. E.g., neighboring module **489** includes a receiver instead of emitter **235.**

Light beams from emitter **235** exit optical component **489** through a tight-fitting surface **491,** and enter optical component **488** through a tight-fitting surface **490. FIG. 105** shows non-parallel light beams from emitters **235** and **236** hitting alternating facets on a wave-like multi-faceted reflective surface **493.** Components **488** and **489** are substantially identical, and fit together. A device manufacturer can thus use these components as building blocks to create a touch screen, by arranging a series of these building blocks in a row along each edge of the display. Typical arrangements are (a) two adjacent display edges are lined with emitter components, and the other two edges are lined with receiver components, and (b) all four display edges are lined with alternating emitter/receiver components, i.e., each emitter has a neighboring receiver. Indeed, the emitter and receiver components, being of substantially identical shape, can be positioned together in the same row.

An optical component **494** is similar to optical component **488,** except that an LED **237** is side-facing instead of forward-facing. **FIG. 105** shows collimated light beams **100** exiting optical component **494.** Pins **989** and **990** guide optical component **494** on a printed circuit board.

Optical component **495** is optical component **488** as viewed from the front. **FIG. 105** shows collimated light beams **100** exiting optical component **495.**

Similar optical components (not shown) are also provided for receiving light beams that traverse the screen surface. For these components, the emitters are replaced by receivers, and the electrical components handle the receiver signals. Such optical components receive collimated light beams, and direct the beams onto two different receivers.

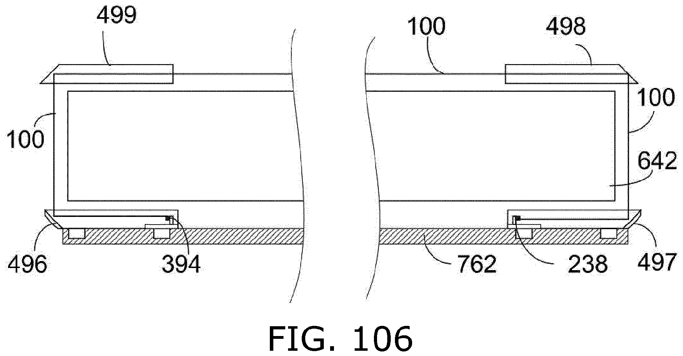

Reference is made to **FIG. 106,** which is a simplified diagram of a side view of a touch screen with light guides. Shown in **FIG. 106** are a display **642,** an optical element **496,** a photo diode **394** within optical element **496,** an optical element **497,** and an emitter **238** within optical element **497.** Optical elements **496** and **497** are connected to a printed circuit board **762.** Emitter **238** emits non-parallel light beams and, as described hereinabove with reference to **FIG. 105,** the non-parallel beams are converted into collimated beams, or substantially collimated beams, before exiting optical element **497.** Another portion of the non-parallel beams is collimated by a neighboring module, not shown in **FIG. 105.** The beams **100** that exit optical element **497** are directed upwards and are reflected over display **642** by a light guide **498.** Three-way refracting cavities are etched, or otherwise formed, on the lower surface of optical element **498** to refract the light beams in three directions in order to provide two coordinate systems for determining a touch location. The light beams **100** enter a light guide **499** on the opposite side of screen **642,** and are reflected below display **642** into optical element **496.** In systems supporting the two coordinate systems, the three-way refracting cavities are present on the underside of optical element **499** as well. As described hereinabove, optical element **496** and its neighboring optical element, not shown, focus the incoming light beams on photo diode **394.** In one case, the light guides **498** and **499** are constructed as a frame that surrounds display **642.**

In the touch screen of **FIG. 106,** two types of light beam redirection occur. A first redirection requires multiple facets directed at a single focus point. A second redirection uniformly redirects incoming beams at a 90ọ angle, or folds incoming light beams into a narrow waist or focus, as described hereinabove with reference to configuration no. 4. In some cases, the collimated beams are refracted in three directions, in between the first and second redirections, by refracting cavities.

The first type of redirection requires that the emitter or receiver be positioned at a specific location relative to the focal point of many facets. As such, the positioning of the emitter or receiver and its reflective surfaces, is sensitive to variations in placement. Thus the assembly of the emitter or receiver, together with its corresponding surface of reflective facets, has a low tolerance of error. The second type of redirection, involving reflection and, in some cases, uniform refraction in three directions, is robust to variations in position of the reflector and to the pattern of refracting cavities located in the light guide. Thus assembly of this portion of the light guide has a high tolerance for error.

The light guides that reflect light above the screen surface may be manufactured separately and assembled with other touch screen components. Thus in **FIG. 106** light guides **498** and **499** are shown separate from optical elements **496** and **497.**

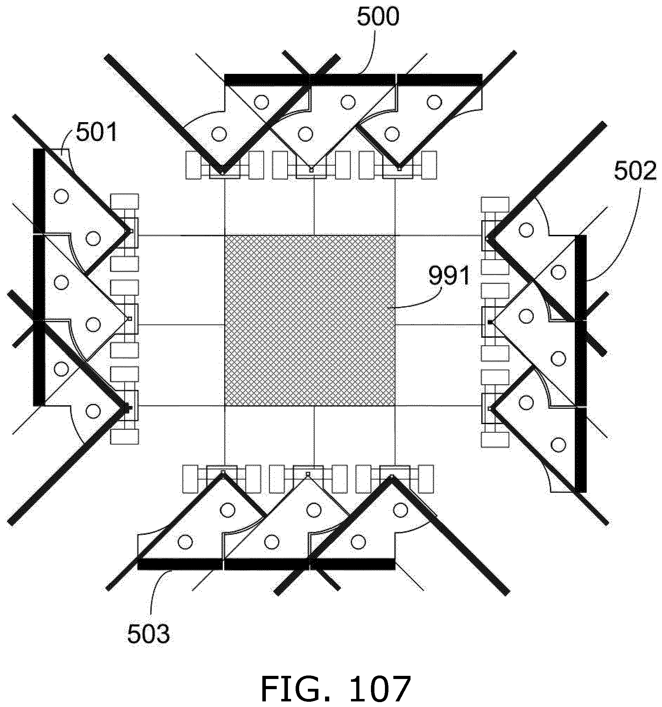

Reference is made to **FIG. 107,** which is an illustration of a touch screen with a block of three optical components on each side. Blocks **500** and **501** are emitters, and blocks **502** and **503** are receivers. The blocks create an active area **991,** where an x-y touch position of a stylus or finger may be calculated based on detected blocked light. Adding more optical components of the same type to each block serves to enlarge the active area that is created.

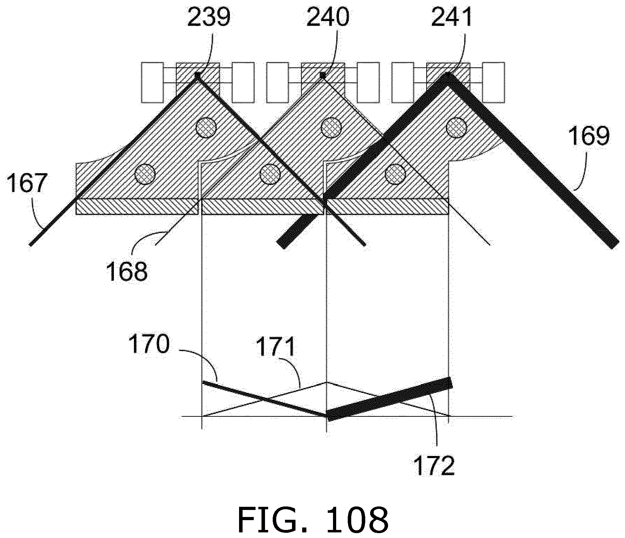

Reference is made to **FIG. 108,** which is a magnified illustration of one of the emitter blocks of **FIG. 107.** Shown in **FIG. 108** are three emitters **239, 240** and **241,** that emit respective wide beams **167, 168** and **169** from one edge of a screen, which are read as respective signals **170, 171** and **172.** The signal gradients are indicated by their diagonal orientations. At the opposite edge of the screen, signals **170, 171** and **172** are each redirected onto respective receivers by respective optical components. An accurate position of an object, such as a finger or stylus, touching the screen, is then determined based on values of blocked light at the receivers, as described hereinbelow.

## Touch Screen System Configuration No. 6

Configuration no. 6 uses a reduced number of components by coupling an emitter or a receiver to one end of a long thin light guide situated along an edge of the screen. Such a light guide is described in U.S. Patent No. 7,333,095 entitled ILLUMINATION FOR OPTICAL TOUCH PANEL.

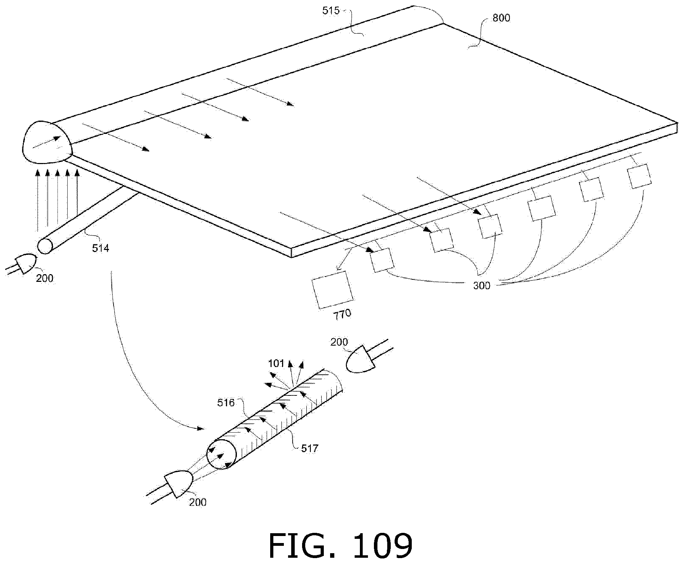

Reference is made to **FIG. 109,** which is an illustration of a touch screen having a long thin light guide **514** along a first edge of the screen, for directing light over the screen, and having an array of light receivers **300** arranged along an opposite edge of the screen for detecting the directed light, and for communicating detected light values to a calculating unit **770.** Light emitters **200** are coupled to both ends of light guide **514.** Light guide **514** is positioned along one edge of a touch screen **800.** Light is emitted into light guide **514** along a screen edge, and is re-directed across the screen surface by a reflector **515.** A plurality of receivers **300** is situated along the opposite edge of touch screen **800,** to enable multiple receivers to detect a touch, as described hereinabove with reference to configuration nos. 2 and 3.

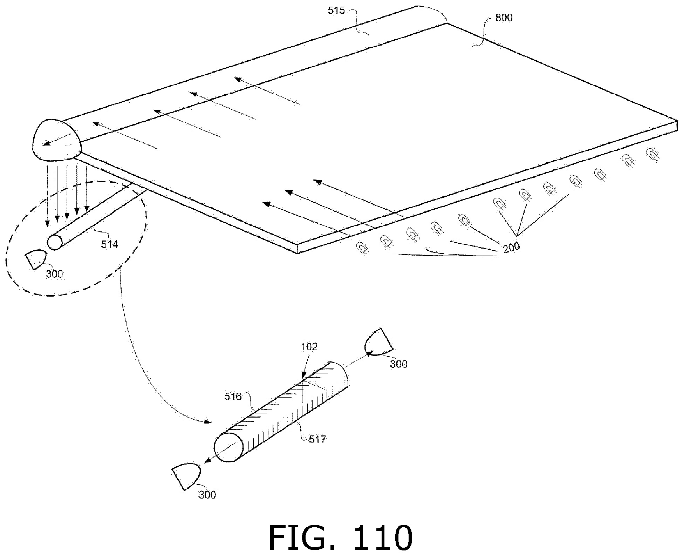

Reference is made to **FIG. 110,** which is an illustration of a touch screen having an array of light emitters **200** along a first edge of the screen for directing light beams over the screen, and having a long thin light guide **514** for receiving the directed light beams and for further directing them to light receivers **300** situated at both ends of light guide **514.** Detected light values at receiver **300** are communicated to a calculating unit (not shown). Alternatively, only one light receiver **300** is coupled to one end of light guide **514.** Light guide **514** is positioned along one edge of a touch screen **800.** A plurality of emitters is situated along the opposite edge of the touch screen, to enable receiver(s) **300** to detect a touch based on serial activation of multiple emitters, as described hereinabove with reference to configuration nos. 2 and 3. Light emitted across the screen surface is re-directed by a reflector **515.** Light is received into light guide **514** along the screen edge and is directed through the length of light guide **514** onto a receiver **300.**

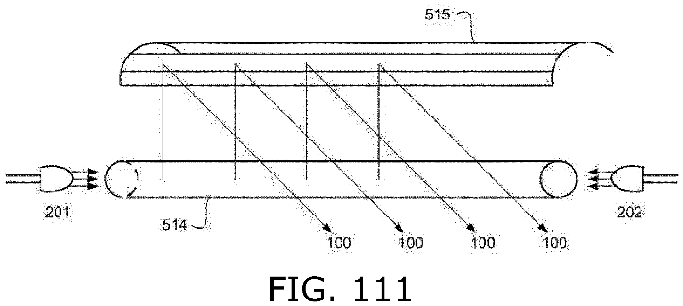

Reference is made to **FIG. 111,** which is an illustration of two light emitters, **201** and **202,** each emitter coupled to an end of a long thin light guide **514.** Light guide **514** is positioned along one edge of a touch screen. Light **100** is emitted into light guide **514** along a screen edge, and is re-directed across the screen surface by a reflector **515.** A plurality of receivers is situated along the opposite edge of the touch screen, to enable multiple receivers to detect a touch, as described hereinabove with reference to configuration nos. 2 and 3. Each emitter **201** and **202** is activated separately, and the receivers thus detect a touch based on blocked light from each of the two emitters. The amount of light **100** emitted at any given location along the length of the light guide decreases as a function of the distance between the location and the emitter. As such, different amounts of detected light from each emitter **201** and **202** are used to calculate the precise location of a touch, as described hereinabove with reference to configuration nos. 2 and 3.

One can improve upon the light guide of U.S. Patent No. 7,333,095, by etching or otherwise forming micro patterns **516** on the outer surface of the light guide, in order to widely refract outgoing light beams **101** of **FIG. 109,** or incoming light beams **102** of **FIG. 110,** as described hereinabove with reference to configuration nos. 2 and 3. Micro patterns **516** are a uniform substantially parallel pattern of grooves along light guide **514,** and are simpler to form than the fan pattern described hereinabove with reference to configuration no. 2. Light guide **514** also includes a light scatterer strip **517** inside of light guide **514.** Micro patterns **516** and light scatterer strip **517** appear in **FIGS. 109 and 110.**

**Touch Screen System Configuration No. 7**

Configuration no. 7 enables detecting pressure on a touch screen, as applied during a touch operation. Detecting pressure enables discrimination between a light touch and a hard press, and is useful for user interfaces that associate separate actions to a touch and a press. E.g., a user may select a button or icon by touching it, and activate the function associated with the button or icon by pressing on it. Such a user interface is described in applicants' U.S. Application No. 12/486,033, US 2010/0017872 A1, entitled USER INTERFACE FOR MOBILE COMPUTER UNIT.

A touch enabled device includes a base plane, such as a PCB, a light guide frame rigidly mounted on the base plane, and a resilient member attached to the base plane to suspend or "float" a non-rigidly mounted touch screen inside the light guide frame. A press on the touch screen deflects the floating touch screen along a z-axis, exposing more of the light guide frame. A light guide frame reflector, which directs light over the screen as described hereinabove, is formed so that the exposure allows more light to traverse the screen. In this way, when a hard press on the screen occurs, many of the receivers detect a sudden increase in detected light. Moreover, detection of a hard press may be conditioned upon a touch being detected at the same time, thus preventing false detection of a hard press due to a sudden increase in ambient light. When the downward pressure is released, the resilient member returns the screen to its original position within the light guide frame.

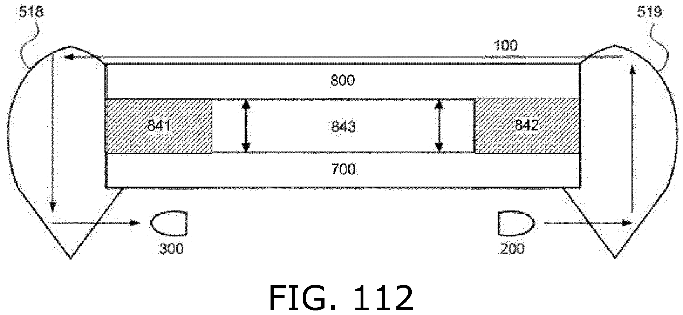

Reference is made to **FIGS. 112-115,** which are illustrations of a touch screen **800** that detects occurrence of a hard press. **FIG. 112** shows touch screen **800** in rest position, screen **800** being supported by resilient supporting members **841** and **842** that create a flex air gap **843,** which are mounted on a printed circuit board **700. FIG. 112** shows two light guides, **518** and **519,** one on either side of screen **800,** for directing light **100** from an emitter **200** over screen **800** to a receiver **300.** Only a small upper portion of each light guide **518** and **519** extends above screen **800.** Receiver **300** communicates detected light intensities to a calculating unit (not shown).

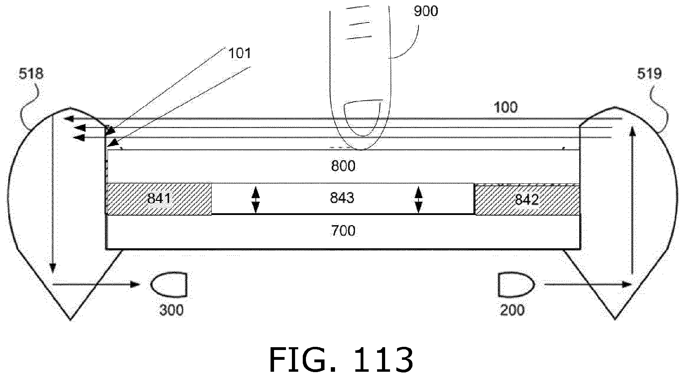

**FIG. 113** shows a finger **900** pressing down on the screen, causing members **841** and **842** to compress and to narrow flex air gap **843.** As a result, a larger portion of light guides **518** and **519** is exposed above screen **800,** thus allowing (a) more light **100** from emitter **200** to traverse screen **800** and be detected by receiver **300,** and (b) more ambient light **101** to reach receiver **300.** In various cases, either or both of these increases in detected light are used to indicate a hard press. In other cases, the amount of downward pressure applied is determined based on the amount of additional detected light, thus enabling discrimination between more hard and less hard touches.

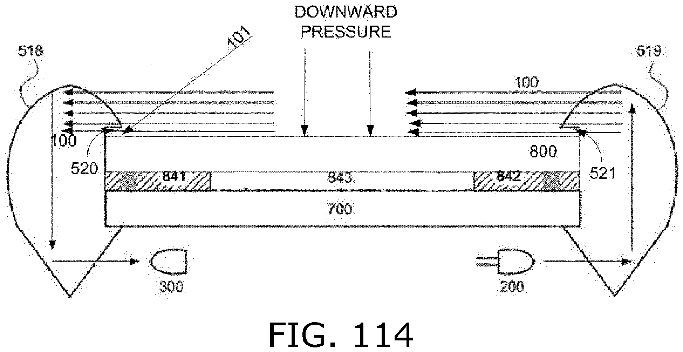

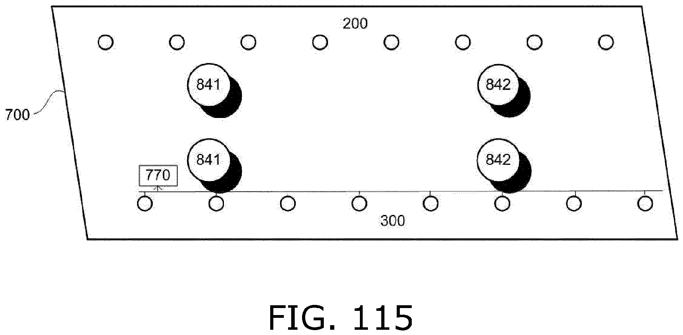

In some cases, the light guide frame includes protruding lips **520** and **521,** shown in **FIG. 114,** that extend over the edges of screen **800,** to counterbalance the upward force of resilient members **841** and **842** when no downward pressure is applied to screen **800.** Resilient members **841** and **842** may comprise inter alia a flexible mounting material, a torsion spring, an elastic polymer body, or a hydraulic suspension system. **FIG. 115** shows emitters **200,** receivers **300** coupled with calculating unit **770,** and resilient members **841** and **842** arranged on a single PCB **700.**

In other cases, the touch screen is not displaceable relative to the frame. However, the screen flexes or bends somewhat in response to a hard press. The bending of the screen causes a sudden increase in detected light in many of the receivers, indicating a hard press on the screen. As indicated hereinabove, detection of a hard press may be conditioned upon a touch also being detected at the same time, thus preventing false detection of a hard press in response to trauma to the device.

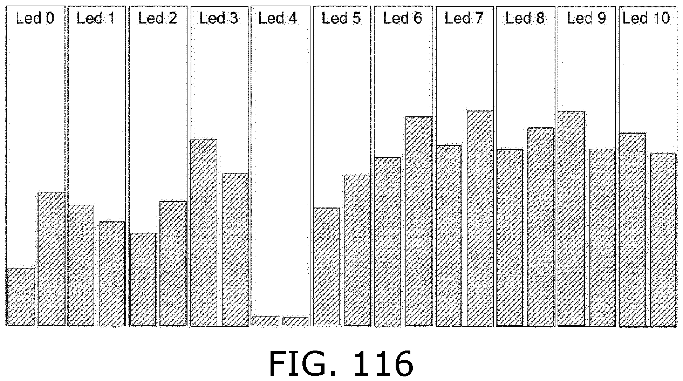

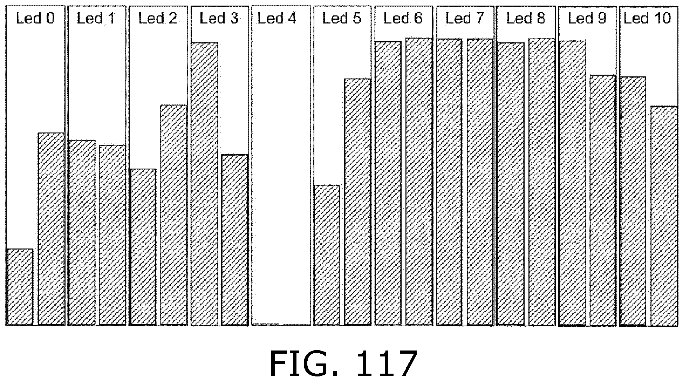

Reference is made to **FIGS. 116** and **117,** which are bar charts showing an increase in light detected, when pressure is applied to a rigidly mounted 7-inch LCD screen. The bar charts show the amount of light detected from each emitter along one edge of the screen when a soft touch occurs (**FIG. 116**), and when a hard touch occurs (**FIG. 117**). The light emitters and light receivers are shift-aligned, so that light from each emitter is detected by two receivers. As such, two bars are shown for each emitter, indicating the light detected by each of the two receivers. Both bars indicate that a touch is detected at receivers opposite LED 4, where no light is detected. The bar charts show that more light is detected from neighboring emitters in the case of a hard touch, than in the case of a soft touch.

**Touch Screen System Configuration No. 10**

Configuration no. 10 provides a touch screen with curved edges. In embodiments of the present invention, the curved edges are constructed so as not to substantially alter directions of light beams.

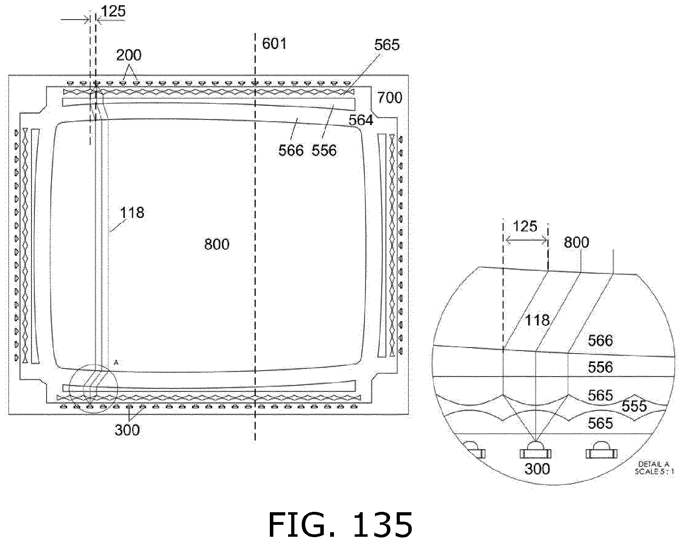

Reference is made to **FIG. 135,** which is a simplified diagram of a touch screen surrounded by a frame that has slightly curved edges, and having emitters and receivers along each screen edge that project and receive light beams substantially along the screen surface plane, in accordance with an embodiment of the present invention. **FIG. 135** shows an overhead view of a touch screen **800** that includes a PCB 700 that supports perpendicular rows of emitters **200** and receivers **300,** and a lens frame **564.** Lens frame **564** includes a two-part collimating lens **565,** and a curved lens **566.** Two-part collimating lens **565** is described above with reference to **FIGS. 50 - 53.** The two parts of collimating lens **565** are separated by a first air gap **555.** Collimating lens **565** and curved lens **566** are separated by a second air gap **556.** Emitters **200** are shift-aligned with receivers **300,** as shown by reference line **601.**

Light beams **118** are shown leaving an emitter **200** and arriving at a receiver **300.** Curved lens **566** has a substantially uniform thickness, in order that collimated beams **118** enter and exit lens **566** in the same direction, as shown in **FIG. 135.** The direction of incoming beams **118** is refracted when the beams enter one surface of the lens, and is refracted back to the incoming direction when the beams exit the other surface of the lens. To achieve high precision, the surfaces of lens **566** are constructed so that the angle of incidence at each surface entry point of the lens is matched at the corresponding surface exit point, the corresponding exit point being offset from the entry point in accordance with the offset distance **125** that an incoming beam is shifted due to refraction. The angle of incidence is generally a small angle, and is shown exaggerated in **FIG. 135** in order to explain the principles of the present invention.

To achieve accurate touch detection, the offset distance **125** is compensated for. Specifically, **EQ. (2)** below, which assigns coordinates to each emitter and receiver, is adjusted by adding offset distance **125** to the coordinate of the corresponding emitter or receiver. Moreover, offset distance **125** is generally different for each emitter or receiver along a given edge, depending on the angle of incidence at each entry surface point of lens **566.** As such, an array or table of offset distances **125** is provided.

In an alternative embodiment of the present invention, the emitters may be spaced apart so that beams from neighboring emitters are evenly spaced as they cross the screen. In this case, the emitters themselves are generally not evenly spaced. This alternative embodiment, with uneven spacing of emitters, is generally difficult to control in mass production of electronic devices, and thus the embodiment with evenly spaced emitters and use of an array or table of offset distances is more feasible.

The layout shown in **FIG. 135** is optimal for minimizing the profile of a touch screen device. The various elements, including emitters, receivers, lenses and the display, are situated on the same plane. Accordingly, the lenses do not require reflective surfaces for redirecting beams **118.**

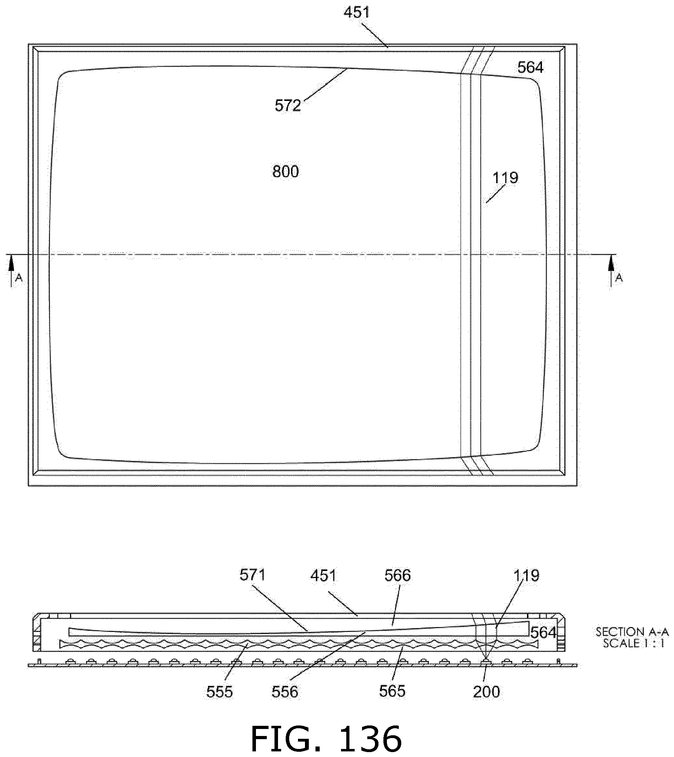

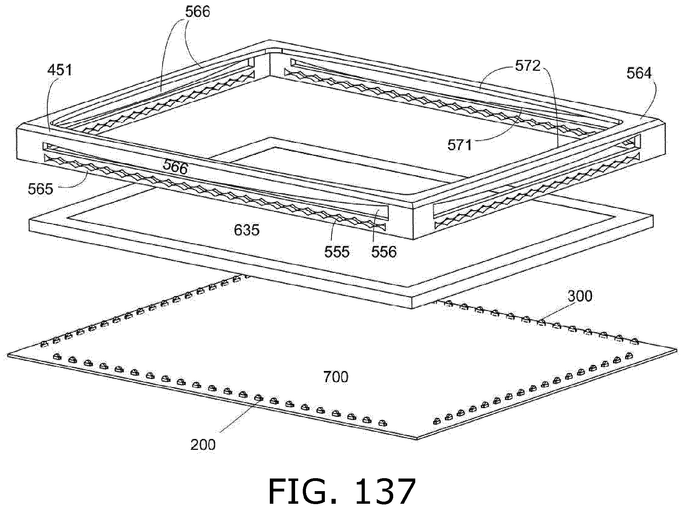

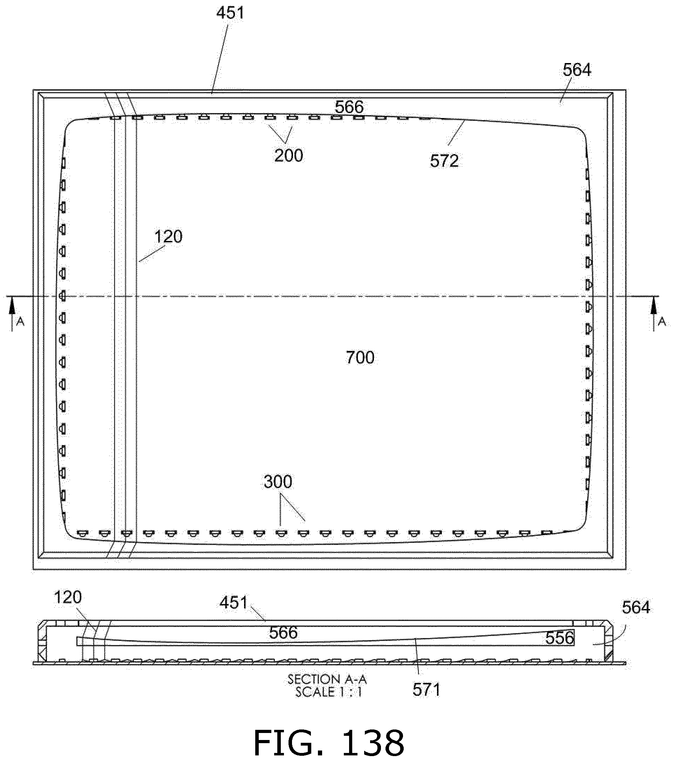

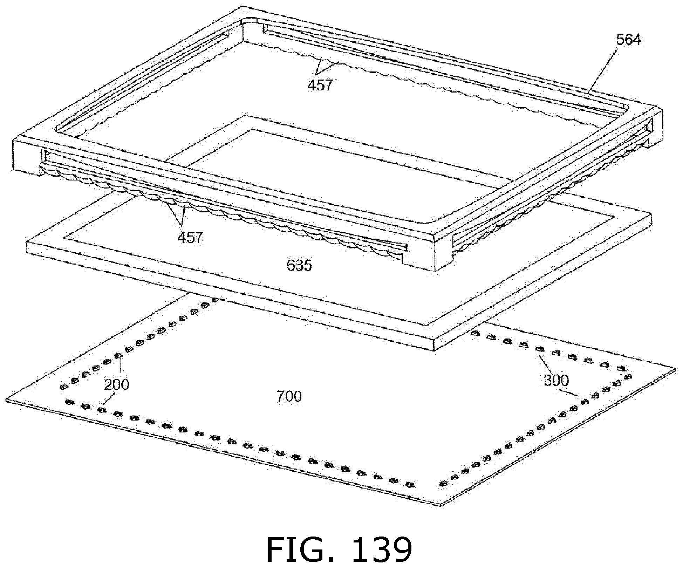

**FIGS. 136-139** show other layouts, with emitters and receivers situated below the screen. These other layouts minimize the width of the border surrounding the screen, by stacking emitters and receivers under the lenses, as in **FIGS. 136** and **137,** or under the screen, as in **FIGS. 138** and **139.**

Reference is made to **FIG. 136,** which is a simplified diagram of a touch screen surrounded by a frame that has slightly curved edges, and having upward-facing emitters and receivers underneath the screen edge that project and receive light beams perpendicular to the screen surface plane, in accordance with an embodiment of the present invention. **FIG. 136** shows touch screen **800** surrounded by lens frame **564.** A cross-section along line A-A shows how the touch screen elements are stacked. Upward-facing emitters **200** are situated underneath lens frame **564.** Lens frame **564** includes two-part collimating lens **565,** curved lens **566,** and air gaps **555** and **556.** In distinction from the curved lens shown in **FIG. 135,** the curved lens in **FIG. 136** has a first curved panel **571** facing downward, and a second curved panel **572** that forms a curved border of the screen and that faces the screen surface plane. An interior reflecting surface **451** is situated between panels **571** and **572.** Interior reflecting surface **451** redirects upward beams **119** across the screen surface. Panels **571** and **572** have similar curvatures, but due to the additional surface **451** the width of lens **566** is non-uniform.

Reference is made to **FIG. 137,** which is an exploded view of the touch screen of **FIG. 136,** in accordance with an embodiment of the present invention. **FIG. 137** shows the three elements that form the touch screen; namely, PCB **700** that supports emitters **200** and receivers **300,** display panel **635,** and lens frame **564.** Lens frame **564** includes two-part collimating lens **565,** curved lens **566,** air gaps **555** and **556,** and reflective surface **451.** **FIG. 137** also shows the two curved panels of lens **566;** namely, downward-facing panel **571** and inward-facing panel **572.**

Reference is made to **FIG. 138,** which is a simplified diagram of a touch screen surrounded by a frame that has slightly curved edges, and having outward-facing emitters and receivers underneath the screen edge that project and receive light beams on a plane below the screen surface, in accordance with an embodiment of the present invention. **FIG. 138** shows lens frame **564** over PCB **700,** viewed from above, and a cross-sectional view along line A-A. **FIG. 138** shows PCB **700** supporting emitters **200** and receivers **300.** Lens frame **564** includes an upper reflective surface **451,** for directing outgoing beams **120** across the screen, and for directing incoming beams **120** below the screen. Cross-section A-A shows the lower portion of curved lens **566** and its associated air gap **556,** and curved edge **571,** The upper portion of curved lens **566** and its curved edge **572** are shown in the view from above.

Reference is made to **FIG. 139,** which is an exploded view of the touch screen of **FIG. 138,** in accordance with an embodiment of the present invention. **FIG. 139** shows display **635** situated between PCB **700** and lens frame **564.**

Emitters **200** and receivers **300** are situated underneath the display, and face outward. Display **635** is not shown in **FIG. 138,** in order not to block view of emitters **200** and **300.** Lens frame **564** includes two interior reflecting surfaces, for directing light beams **120** above and across the screen. The lower section of lens frame **564,** indicated as element **457** in **FIG. 139,** collimates light beams **120** and reflects them. Outgoing beams **120** from emitters **200** are reflected vertical and upwards, and incoming beams to receivers **300** are reflected horizontal and inwards. Element **457** is substantially similar to the lower portion of lens **486** shows in **FIG. 48** and described above. Micro-lenses **487** of **FIG. 48** may be included or omitted in element **457,** depending on the required touch functionality and the required resolution.

In order to properly collimate light beams, element **457** is curved along the plane of incidence to emitters **200,** as shown in **FIG. 139.** The curved shape of element **457** also appears in lens **461** of **FIG. 38** and in lens **457** of **FIG. 37.**

**Operation of Configurations Nos. 2 and 3**

The following discussion relates to methods of operation for arrangements of the optical elements shown in configurations nos. 2 and 3, around a touch screen, to achieve accurate touch detection. These methods are of advantage for pen and stylus support, which have fine touch points, and provide highly accurate touch location determination for single-finger and multi-finger touches as well.

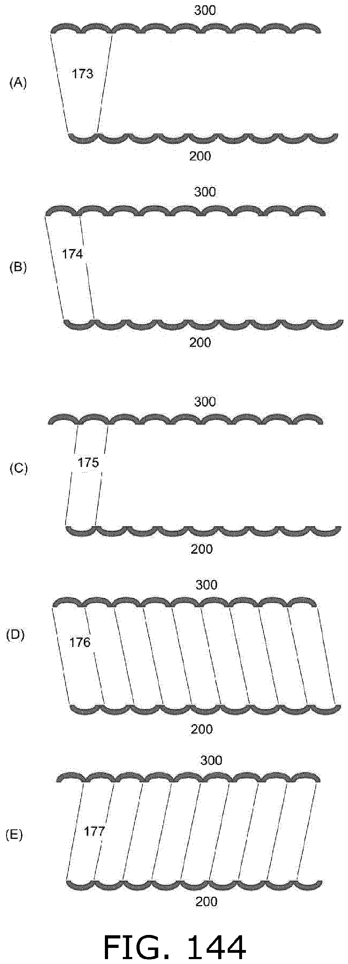

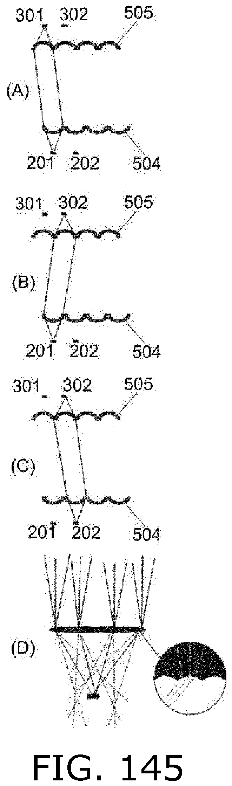

Reference is made to **FIGS. 144** and **145,** which are illustrations of opposing rows of emitter lenses and receiver lenses in a touch screen system. Positioned behind each emitter and receiver lens is a corresponding respective light emitter **200** or light receiver **300.** As shown in **FIG. 144,** each emitter **200** is positioned opposite two receivers **300** that detect light beams emitted by the emitter. Similarly, each receiver **300** is positioned opposite two emitters **200,** and receives light beams emitted from both emitters.

**FIG. 144** shows **(A)** a single, full beam **173** from an emitter **200** that spans two receivers **300; (B)** the portion of the full beam, designated **174,** detected by the left one of the two receivers **300; (C)** the portion of the full beam, designated **175,** detected by the right one of the two receivers **300; (D)** multiple beams **176,** for multiple emitters **200,** covering the touch screen, and **(E)** multiple beams **177,** for multiple emitters **200,** covering the touch screen. Generally, each emitter **200** is activated alone. Precision touch detection is described hereinbelow, wherein a touch point is detected by multiple beams. It will be appreciated from **(D)** and **(E)** that points on the screen are detected by at least one beam **176** and one beam **177.**

To conserve power, when the touch screen is idle only one set of beams, namely, beams **176** or beams **177,** is scanned in a scanning sweep, and only for the axis with the smallest number of emitters **200.** The scanning toggles between beams **176** and beams **177,** and thus two scanning sweeps along the axis activate every emitter-receiver pair along the axis. The other axis, with the larger number of emitters, is only scanned when either a touch is present, or when a signal differs from its reference value by more than an expected noise level, or when an update of reference values for either axis is being performed. Reference values are described in detail hereinbelow.

**FIG. 145** shows **(A)** an emitter **201** sending light to a receiver **301** at an angle of 15o to the left; **(B)** emitter **201** sending light to a receiver **302** at an angle of 15o to the right; **(C)** emitter **202** sending light to receiver **302** at an angle of 15o to the left; and **(D)** a microstructure refracting incoming light. The emitter lenses and receiver lenses shown in **FIG. 145** are equipped with the microstructure shown in **(D),** in order (i) to emit light in both left and right directions from multiple locations along the emitter lens surface, and (ii) to ensure that light received at any angle of incidence at any location along the receiver lens surface is detected by the receiver.

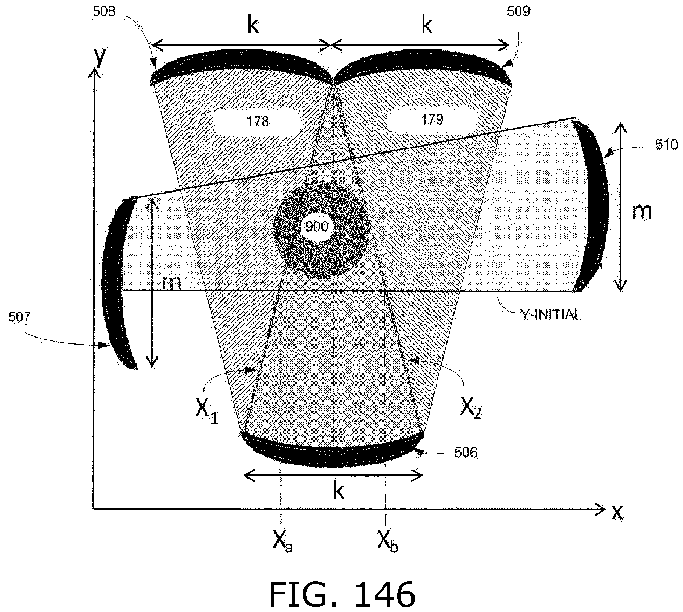

Reference is made to **FIG. 146,** which is a simplified illustration of a technique for detecting a touch location, by a plurality of emitter-receiver pairs in a touch screen system. Shown in **FIG. 146** is an optical emitter lens **506** of width **k,** positioned opposite two optical receiver lenses **508** and **509,** each of width **k,** on a touch screen. A pointer, **900,** touching the screen blocks a portion of the light beam emitted from optical emitter lens **506.** Optical emitter lens **506** emits overlapping beams that cover both optical receiver lenses **508** and **509.** The spread angle of the wide beam depends on the screen dimensions, and on the lens width, **k,** along the x-axis. Another optical emitter lens **507** is also shown, shifted by half an element width, **m**, below an optical receiver lens **510.**

At least one surface of optical emitter lens **506** is textured with a plurality of ridges. Each ridge spreads a beam of light that spans the two opposing receiver lenses **508** and **509.** As such, light from each of many points along the surface of optical emitter lens **506** reaches both opposing receiver lenses **508** and **509,** and the light beams detected by adjacent receivers overlap. In configuration no. 2 these ridges form a feather pattern, and in configuration no. 3 these ridges form a tubular pattern.

The ridges form micro-lenses, each having a pitch of roughly 0.2 - 0.5 mm, depending on the touch screen configuration. In the case of a feather pattern, the ridges form a fan, and their pitch narrows as the ridges progress inward and become closer together. In the case of a tubular pattern, the pitch of each micro-lens remains constant along the length of the micro-lens.

At least one surface of each receiver lens **508** and **509** is similarly textured, in order that at least a portion of the light arriving at each of many points along the receiver lens surface, arrives at the receiver photo diode.

The output x and y coordinates are filtered temporally and spatially. The following discussion relates to determination of the x-coordinate, and it will be appreciated by those skilled in the art that the same method applies to determination of the y-coordinate.

Configuration nos. 2 and 3 show that a touch location is detected by at least two emitter-receiver pairs. **FIG. 146** shows two such emitter-receiver pairs, **506-508** and **506-509,** detecting a touch location of object **900** along the x-axis. In **FIG. 146,** beams **506-508** are denoted by beam **178,** and beams **506-509** are denoted by beam **179. FIG. 137** shows three detection areas; namely,(i) the screen area detected by emitter-receiver pair **506-508,** drawn as a wedge filled with right-sloping lines, (ii) the screen area detected by emitter-receiver **506-509,** drawn as a wedge with left-sloping lines, and (iii) the screen area detected by both emitter-receiver pairs **506-508** and **506-509,** drawn as a wedge with a crosshatch pattern. The left and right borders of this third screen area are shown as lines $X_1$ and $X_2$, respectively.

In order to determine the x-coordinate $X_p$ of object **900**'s touch location ($X_p$, $Y_p$), an initial y-coordinate, $Y_{initial}$, is determined corresponding to the location along the y-axis of the emitter-receiver pair having the maximum touch detection signal among all emitter-receiver pairs along the y-axis. In **FIG. 146,** this emitter-receiver pair is **507-510.** The lines designated $X_1$ and $X_2$ in **FIG. 146** are then traversed until they intersect the line $y = Y_{initial}$ at locations ($X_a$, $Y_{initial}$) and ($X_b$, $Y_{inilial}$). Coordinates $X_a$ and $X_b$ are shown in **FIG. 146.** The x-coordinate of object **900** is then determined using the weighted average

$$X_P = (W_a\, X_a + W_b\, X_b)\, /\, (W_a + W_b)\,, \qquad\qquad (2)$$

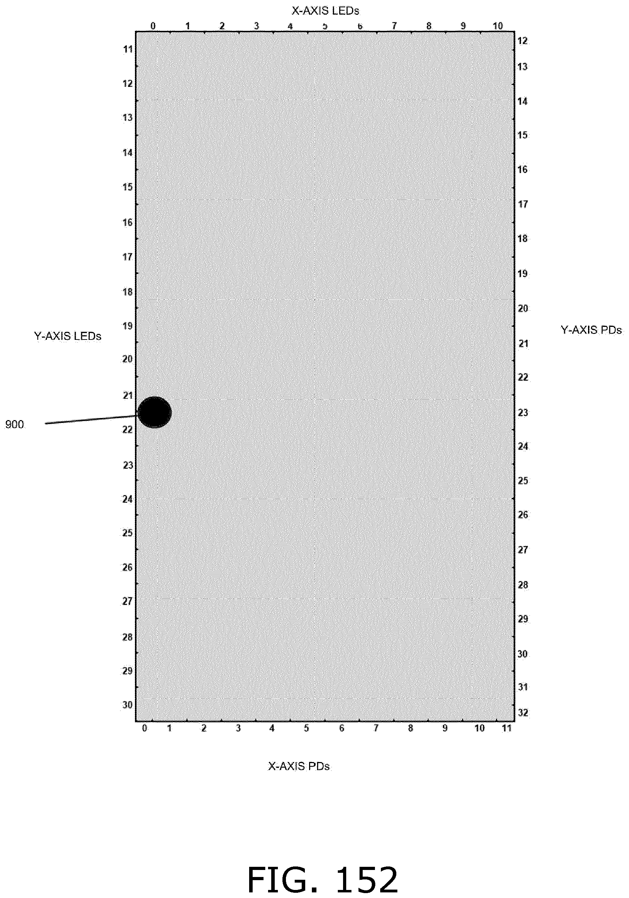

where the weights $W_a$ and $W_b$ are normalized signal differences for beam **178** and beam **179,** respectively. The signal difference used is the difference between a baseline, or expected, light value and the actual detected light value. Such difference indicates that an object is touching the screen, blocking a portion of the expected light. The weights $W_a$ and $W_b$ are normalized because the detection signal of a touch occurring near the row of emitters is different from a touch occurring near the row of receivers, as described hereinbelow with reference to **FIGS. 152-159.** A touch screen design is tested to determine different signal strength and attenuation patterns as an object crosses a beam at various portions along the length of the beam. Different scenarios are tested, e.g., a scenario for objects near the beam's emitter, a scenario for objects near the beam's receiver, and a scenario for objects in the middle of the screen. When a touch is detected, the detection pattern of detecting receivers is analyzed to select an appropriate scenario, and the signals are normalized according to the selected scenario. Calibration and further normalization of the weights is described hereinbelow. A similar weighted average is used to determine the y-coordinate $Y_P$.

If the pointer **900** is detected by more than two emitter-receiver pairs, then the above weighted average is generalized to

$$X_P = \Sigma(W_n\, X_n)\, /\, (\Sigma\, W_n)\,, \qquad\qquad (3)$$

where the weights $W_n$ are normalized signal differences, and the $X_n$ are weight positions.

When the pointer **900** is a small object, the largest signal difference is used in conjunction with the two closest signals to calculate the position. This compensates for the fact that the signal differences for small objects are small, and noise thus becomes a dominant error factor. Use of the two closest signals reduces error due to noise. Alternatively, only the two largest signal differences are used.

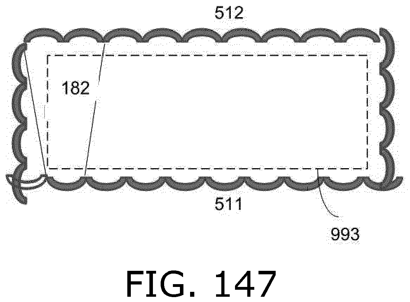

Reference is made to **FIG. 147,** which is an illustration of a light guide frame for the configuration of **FIGS. 144** and **145.** Shown in **FIG. 147** are four edges of a light guide frame, with optical emitter lenses **511** and optical receiver lenses **512.** It is noted that the inner edges of the frame are not completely covered by beams **182.** As such, only an inner touch area **993,** indicated by the dashed rectangle, is used.

To reduce error due to signal noise, the final coordinate is determined as the output of a temporal filter, using the spatially filtered current coordinate value, determined as above, and a previous coordinate value. The higher the filter weight given to the current x-coordinate, the closer the output will be to that value, and the impact of the filter will be less. Generally, use of substantially equal weights for both coordinate values results in a strong filter. The temporal filter can be a low-pass filter, but other filters are also contemplated. Different pre-designated filter weight coefficients may be used in different cases. Alternatively, the filter weight coefficients are calculated as needed.

Choice of appropriate filter coefficients is based on scanning frequency, the speed at which a touch object is moving across the screen, whether the object motion is along a straight line or not, and the size of the touch object.

Generally, the higher the scanning frequency, the nearer the current coordinate value is to the previous coordinate value, and a stronger filter is used. Scanning frequency is used to estimate the speed and direction of movement of an object. Based on the scanning frequency, a threshold distance is assigned to two input values, the threshold indicating fast movement. If the difference between the current and previous coordinate values is greater than the threshold distance, a weaker filter is used so that the output coordinate not lag considerably behind the actual touch location. It has been found by experiment that the filter

$$\text{output\_val} = 1/10 * \text{previous\_val} + 9/10 * \text{current\_val} \tag{4}$$

provides good results in this case. In addition, the lag value, described hereinbelow, is reset to equal the output value in this case.

If the difference between the current and previous coordinate values is less than the threshold distance, then a lag value is determined. The lag value indicates speed and direction along an axis. In has been found by experiment that the value

$$\text{lag} = 5/6 * \text{lag} + 1/6 * \text{current\_val} \tag{5}$$

provides good results in this case. The filter weight coefficients are selected based on the difference between the lag value and the current coordinate value. Generally, the greater this difference, which indicates either fast motion or sudden change in direction, the weaker the filter.

For example, if the touch object is stationary, the lag value eventually is approximately equal to the current coordinate value. In such case, signal noise may cause small differences in the spatially calculated touch position, which in turn may cause a disturbing jitter effect; i.e., the touch screen would show the object jittering. Use of a strong temporal filter substantially dampens such jittering.

If the touch object is moving fast or makes a sudden change in direction, a strong temporal filter may create a perceptible lag between the actual touch location and the displayed touch location. In the case of a person writing with a stylus, the written line may lag behind the stylus. In such cases, use of a weak temporal filter reduces such lagging.

When the touch object covers a relatively large screen area, such as a finger or other blunt object touching the screen, the lag between the actual finger motion and the displayed trace of the motion is less perceptible, because the finger covers the area of the lag. In such case, a different temporal filter is used.

The type of object, finger vs. stylus, being used may be inferred by knowing expected user behavior; e.g., a user interface intended for finger touch assumes a finger being used. The type of object may also be inferred by the shadowed area created by the object. The size of the touch area as determined based on shadowed emitter signals, is therefore also a factor used in selecting temporal filter weight coefficients.

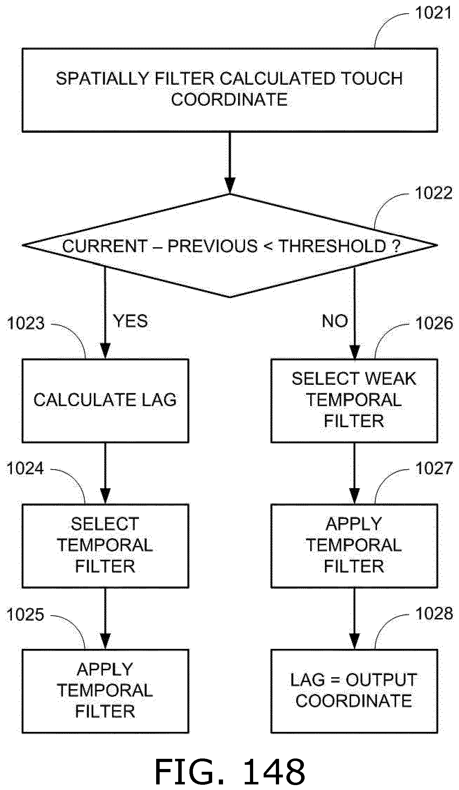

Reference is made to **FIG. 148,** which is a simplified flowchart of a method for touch detection for a light-based touch screen. At operation **1021,** a current coordinate value is received, based on a spatial filter that processes signals from multiple emitter-receiver pairs. A threshold distance is provided, based on a scan frequency. At operation **1022,** the difference between the current coordinate value and a previous coordinate value is compared to the threshold distance. If the difference is less than or equal to the threshold distance, then at operation **1023** a new lag value is calculated, as in **EQ. (5).** At operation **1024** temporal filter weight coefficients are determined based on the difference between the current coordinate value and the lag value. At operation **1025,** the temporal filter is applied to calculate an output coordinate value, as in **EQ. (4).**

If, at operation **1022,** the difference between the current coordinate value and previous coordinate value is greater than the threshold distance, then weak filter weight coefficients are selected at operation **1026.** At operation **1027,** the temporal filter is applied to calculate an output coordinate value, as in **EQ. (4).** At operation **1028** the lag value is set to the output coordinate value.

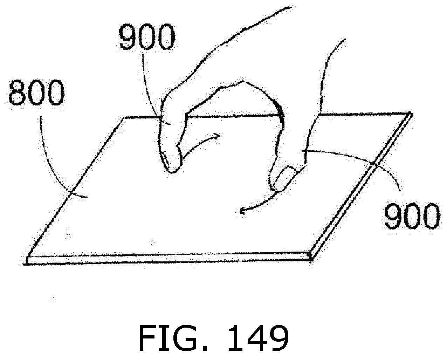

Systems provide a method and apparatus for detecting a multi-touch operation whereby two touches occur simultaneously at two corners of a touch screen. An example of such a multi-touch is a rotation gesture, shown in **FIGS. 149 - 151,** whereby a user places two fingers **900** on a screen **800** and turns them around an axis. As pointed out hereinabove with reference to **FIGS. 8** and **9,** it is difficult for a light-based system to discriminate between a top-left & bottom-right touch vs. a bottom-left & top-right touch. Use of shift-aligned emitters and receivers enables such discrimination, as described hereinbelow.

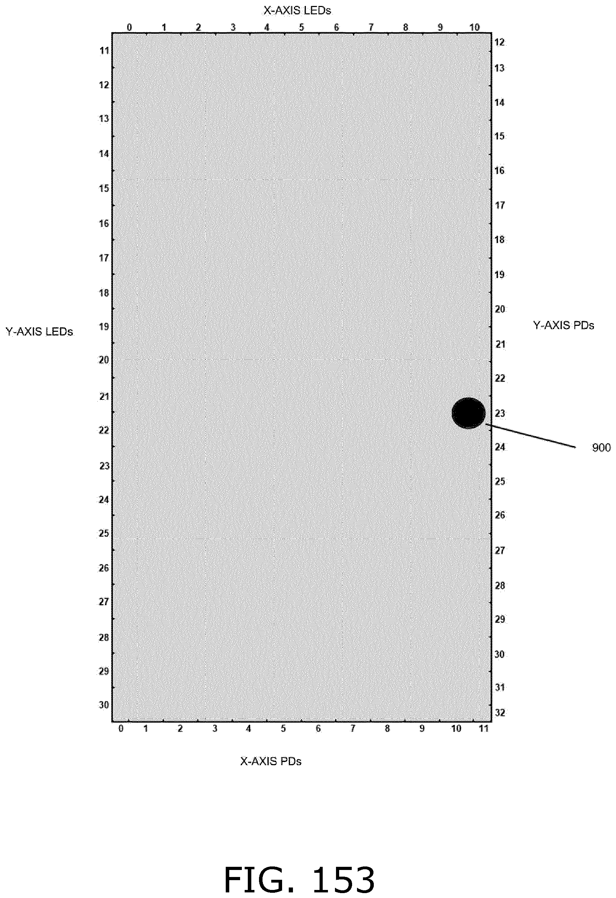

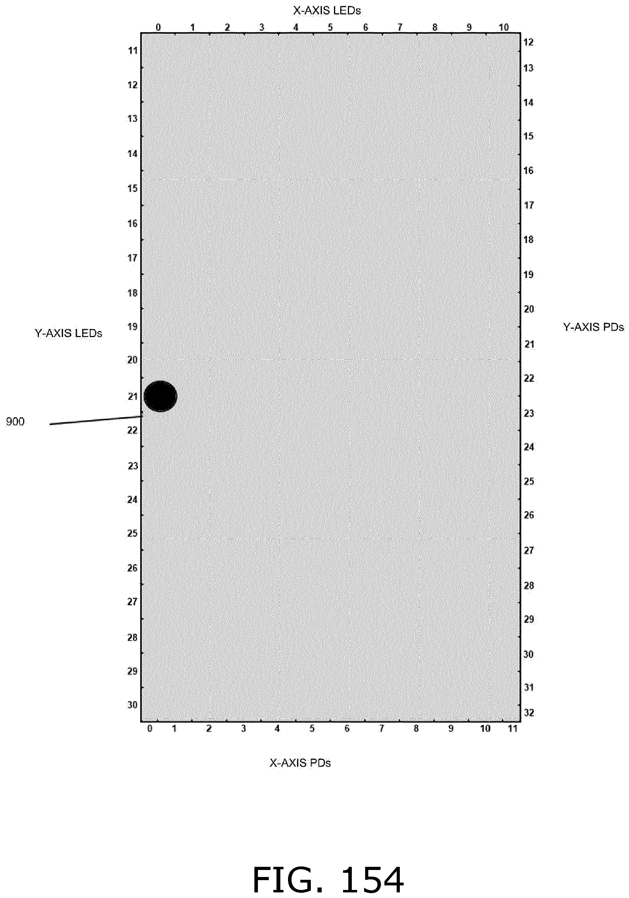

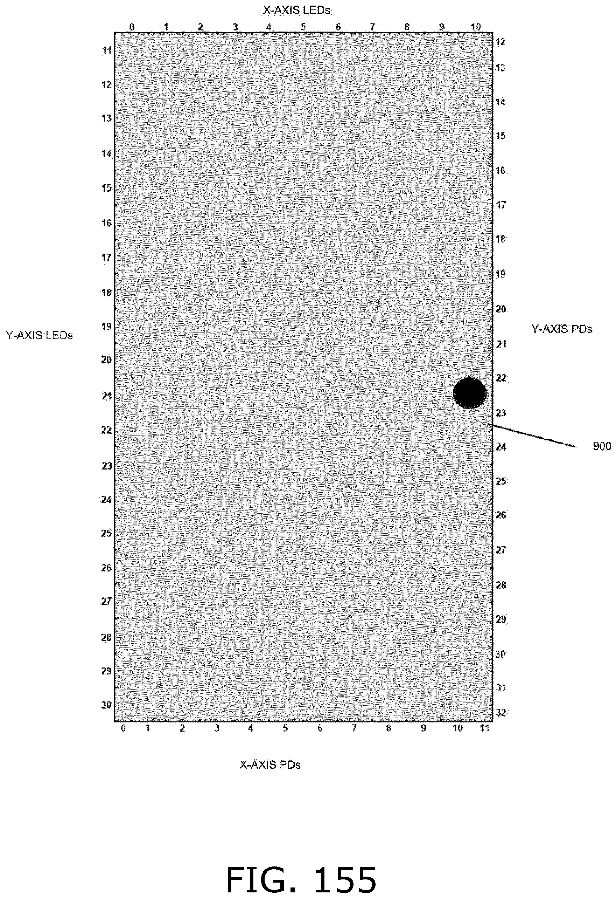

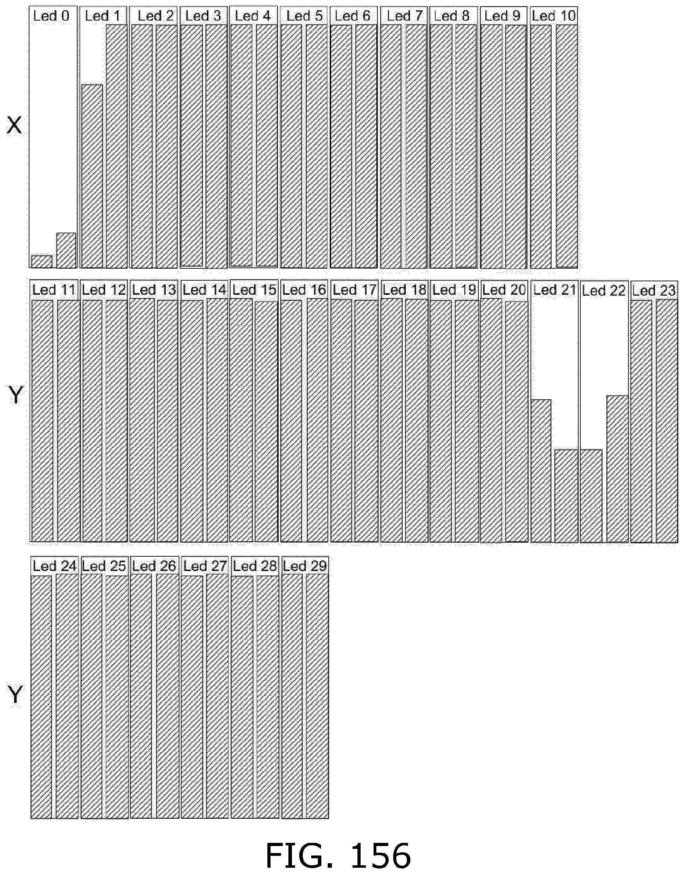

Data from receivers along a first axis is used to determine a touch location along two axes. Reference is made to **FIGS. 152 - 155,** which are illustrations of a finger **900** touch event at various locations on a touch screen, and corresponding **FIGS. 156 - 159,** which are respective bar charts of light saturation during the touch events. **FIG. 152** shows a touch located near a row of emitters, between two emitters. **FIG. 153** shows a touch located near a row of receivers, blocking a receiver. **FIG. 154** shows a touch located near a row of emitters, blocking an emitter. **FIG. 155** shows a touch located near a row of receivers, between two receivers.

**FIGS. 156 - 159** each include two bar charts; namely, an upper chart showing light saturation at receivers along an x-axis, and a lower chart showing light saturation at receivers along a y-axis. Each row of receivers is shift-aligned with an opposite row of emitters. As such, each emitter is detected by two receivers. Correspondingly, **FIGS. 156-159** show two bars for each emitter, one bar per receiver.

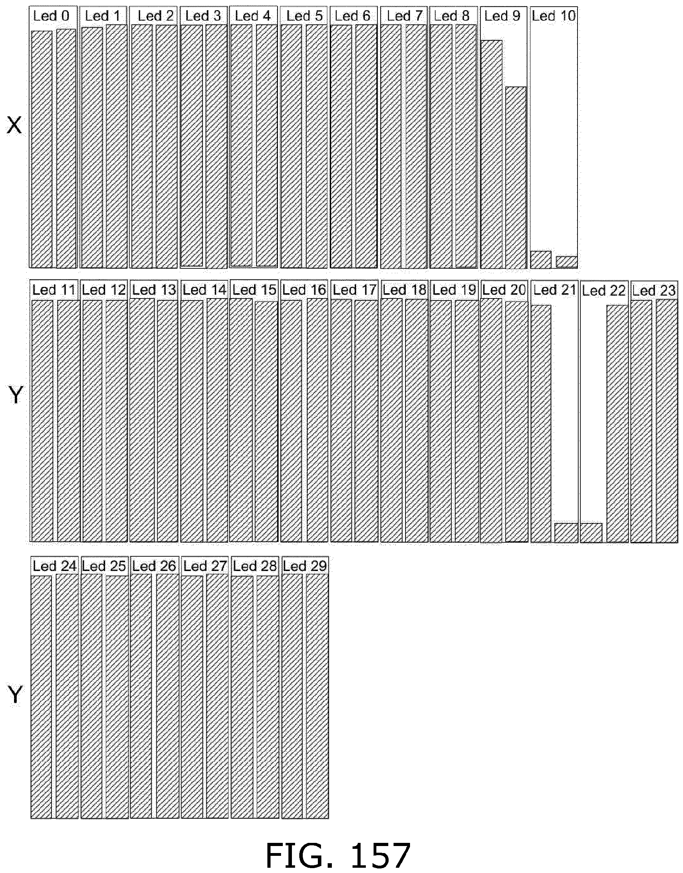

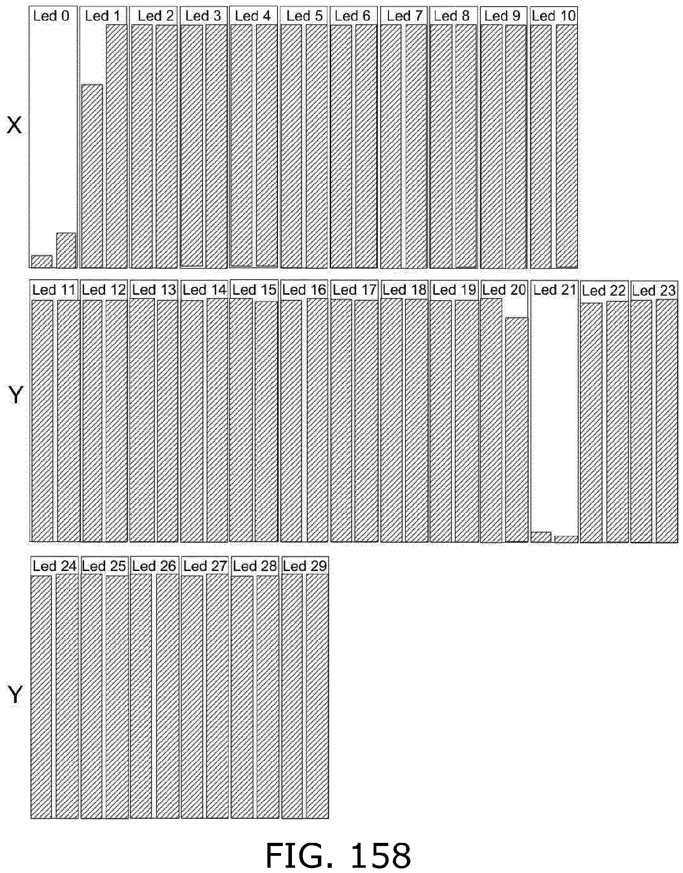

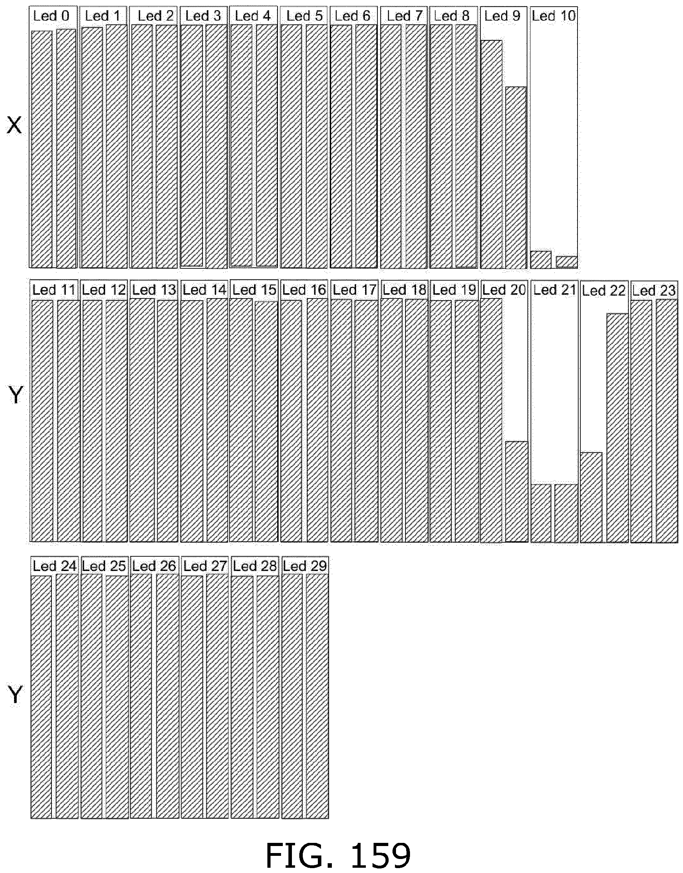

**FIGS. 156-159** exhibit four distinct detection patterns. **FIG. 156** shows an absence of light detected primarily by one receiver from its two respective emitters. The absence of light is moderate. **FIG. 157** shows an absence of light detected primarily by one receiver from its two respective emitters. The absence of light is large. **FIG. 158** shows two adjacent receivers detecting a large absence of expected light from the blocked emitter. Both receivers detect some light from neighboring elements. **FIG. 159** shows two adjacent receivers detecting a moderate absence of expected light from the blocked emitter. Both receivers detect some light from neighboring emitters. **TABLE III** summarizes these different patterns.

| TABLE III: Patterns of touch detection based on proximity to and alignment with emitters and receivers | | | |
|---|---|---|---|
| **Pattern No. FIGS.** | **Touch Location** | **No. of Receivers Detecting the Touch** | **Amount of Expected Light that is Blocked** |
| 1 **FIG. 129** **FIG. 133** | Near a row of emitters, between two emitters | 1 | Moderate |
| 2 **FIG. 130** **FIG. 134** | Near a row of receivers, blocking a receiver | 1 | Large |
| 3 **FIG. 131** **FIG. 135** | Near a row of emitters, blocking an emitter | 2 | Large |
| 4 **FIG. 132** **FIG. 136** | Near a row of receivers, between two receivers | 2 | Moderate |

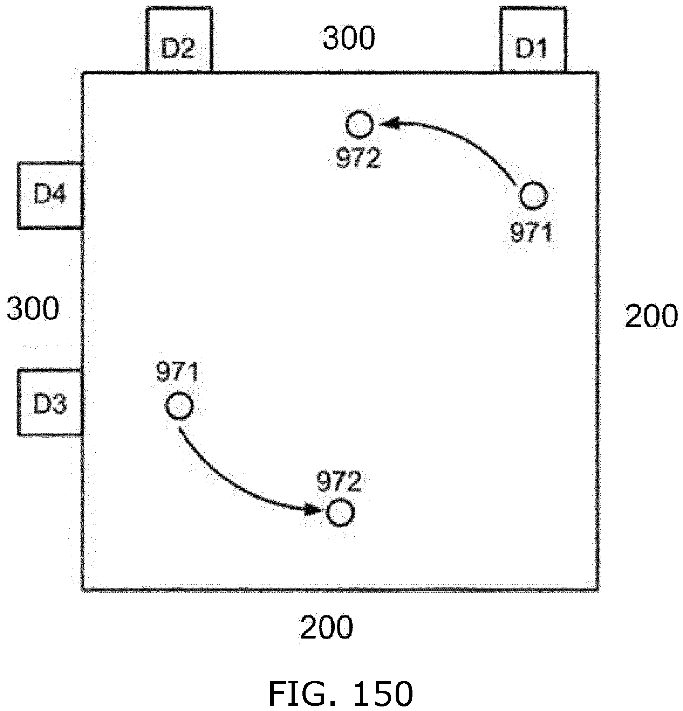

Locations of a multi-touch are determined based on the patterns indicated in **TABLE III.** Thus, referring back to **FIG. 150,** four detection points are shown along two rows of receivers. Detections **D1 - D4** detect touch points **971** in upper-right & lower-left corners of the screen. Based on whether the detection pattern of each point is of type 1 or 3, or of type 2 or 4, the detection patterns determine whether the corresponding touch is closer to the emitters, or closer to the receivers. Each touch has two independent indicators; namely, the X-axis detectors, and the Y-axis detectors. Thus, for detection points **971** in **FIG. 150,** detections **D1** and **D3** are of types 2 or 4, and detections **D2** and **D4** are of types 1 or 3. In distinction, for detection points **971** in **FIG. 132,** detections **D2** and **D4** are of types 2 or 4, and detections **D1** and **D3** are of types 1 or 3.

In addition to evaluation of detection points independently, the various detection patterns may be ranked, to determine which touch point is closer to the emitters or to the receivers.

Moreover, when a rotate gesture is performed, from touch points **971** to touch points **972,** movement of detections discriminates whether the gesture glides away from the emitters and toward the receivers, or vice versa. In particular, subsequent detections are compared, and discrimination is based on whether each detection pattern is becoming more like type 1 or 3, or more like type 2 or 4.

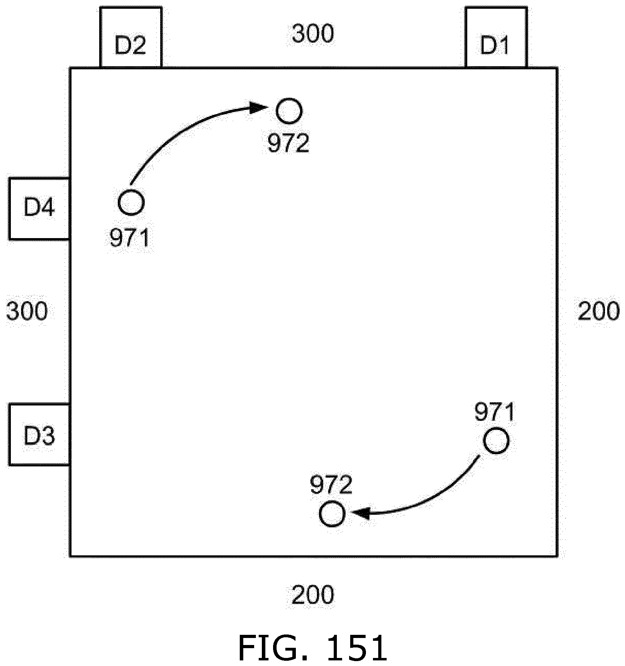

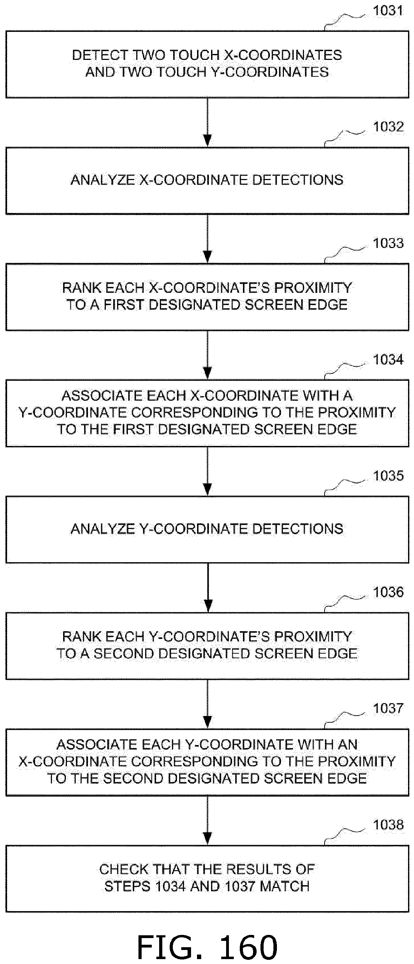

Reference is made to **FIG. 160,** which is a simplified flowchart of a method for determining the locations of simultaneous, diagonally opposed touches. At operation **1031,** two x-coordinates and two y-coordinates are detected, such as x-coordinates **D1** and **D2,** and y-coordinates **D3** and **D4,** shown in **FIGS. 150** and **151.** At operation **1032** the detected x-coordinates are analyzed to identify a pattern of detection from among those listed in **TABLE I.** At operation **1033** the detected x-coordinates are ranked according to touches that occurred closer to or farther from a designated screen edge, based on the pattern detected at operation **1032** and based on the "Touch Location" column of **TABLE**

**III.** The y-coordinates represent distances from the designated edge. At operation **1034,** each ranked x-coordinate is paired with a corresponding y-coordinate. Operations **1035 - 1037** are performed for the y-coordinates, similar to operations **1032 - 1034** performed for the x-coordinates. At operation **1038,** the two sets of results are compared.

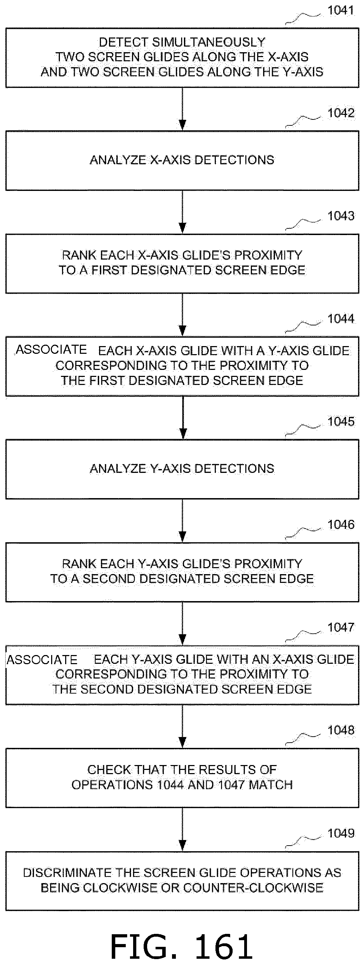

Reference is made to **FIG. 161,** which is a simplified flowchart of a method for discriminating between clockwise and counter-clockwise gestures. At operation **1041,** two glide gestures are detected along an x-axis. Each glide gesture is detected as a series of connected touch locations. Thus, with reference to **FIGS. 150** and **151,** a first glide gesture is detected as a connected series of touch locations beginning at x-coordinate **D1,** and a second concurrent glide gesture is detected as a connected series of touch locations beginning at x-coordinate **D2.** At operation **1042,** the x-glide detections are analyzed to determine the types of detections that occurred in each series, from among the patterns listed in **TABLE III.**

At operation **1043,** the x-glide detections are ranked according to touches that occurred closer to or farther from a designated screen edge, based on the patterns of detections determined at operation **1042,** and based on the "Touch Location" column of **TABLE III.** Operation **1043** relates to series of connected touch detections over a time interval. Each series generally includes touch detections of patterns 1 and 3, or of patterns 2 and 4, listed in **TABLE III,** depending on whether the glide was closer to or further away from the designated edge. In addition to analyzing the individual detections that comprise a glide, the series of touch detections is also analyzed to determine if the glide is moving closer to or farther from the designated edge, based on comparison of intensities of detections over time. E.g., in one series of detections having multiple pattern 1 detections, if the amount of blocked light increases over time, then it is inferred that the glide is moving toward the receivers, otherwise the glide is moving toward the emitters.

The y-coordinates represent distances from a designated edge, such as the edge of emitters. At operation **1044** each ranked x-axis glide is paired with a corresponding y-axis glide. Operations **1045 - 1047** are performed for the y-axis glide, similar to operations **1042 - 1044** performed for the x-axis glide. At operation **1048** the two sets of results are compared. At step **1049** a discrimination is made as to whether the rotation gesture is clockwise or counter-clockwise.

**FIGS. 54** and **70** show alignments of emitters and receivers whereby right and left halves of each beam overlap neighboring beams, as shown in **FIGS. 61** and **73.** Three beams are shown in these figures; namely, beams **167, 168** and **169.** The left half of beam **167** overlaps the right half of beam **168,** and the right half of beam **167** overlaps the left half of beam **169.** As such, a touch at any location within beam **167** is detected by two beams. The two detecting beams have different detection gradients along the widths of the beams, as shown by light detection areas **910 - 912** in the figures.

The gradient of light attenuation is substantially linear across the width of the beam. As such, a weighted average of the different detection signals is used to calculate a position along one axis using **EQS. (2)** and **(3)** above. **EQ. (2)** extends to a number, $n$, of samples. E.g., if a finger at the center of beam a blocks 40% of the expected signal of beam **a,** and blocks none of the expected signal of beam **b,** then $W_a$ and $W_b$ are 0.4 and 0, respectively, and the location $X_P$ is calculated as

$$X_P = (0.4 * X_a + 0 * X_b) / (0.4 + 0) = X_a .$$

The same value of $X_P$ is obtained for a stylus at the screen position which, due to its being narrower than the finger, blocks only 20% of the expected signal of beam a.

Similarly, if a finger between the centers of beams **a** and **b** blocks similar amounts of expected light from both beams, say 30%, then $X_P$ is calculated as

$$X_P = (0.3 * X_a + 0.3 * X_b) / (0.3 + 0.3) = ½(X_a + X_b) ,$$

which is the midpoint between $X_a$ and $X_b$.

Location calculation in a system of aligned emitters and receivers differs in several aspects from location calculation in a system of shift-aligned emitters and receivers. In a system of aligned emitters and receivers, beams are aligned with the coordinate system used for specifying the touch location. In this case, the touch location is calculated along a first axis without regard for the touch location along the second axis. By contrast, in a shift-aligned system the primary beam coordinate, e.g., $X_a$ for beam **a,** is determined based on an assumed touch coordinate on the second axis, $Y_{initial}$.

Further, in a system of aligned emitters and receivers the attenuation and signal strength pattern generated by an object crossing the beam is substantially the same at all locations along the length of the beam. As described hereinabove with reference to **FIGS. 67** and **97,** as an object moves across the width of a beam, it generates substantially similar signal patterns whether it crosses the beam near the beam's emitter, detector or in mid-screen. Therefore, an initial normalizing of weights, $W_a$, $W_b$, ..., $W_n$, based on the detection pattern is required in shift-aligned systems, and is not required in aligned systems.

When a light-blocking object is placed at the center of a beam, such as beam **167** in **FIGS. 61** and **73,** a portion of the neighboring beam is blocked. E.g., 40% of beam **167** is blocked and 5% of beam **168** is blocked. However, the signals include both random noise and also noise caused by the alternating facets that may account for signal fluctuations. A technique is required to determine whether the touch is in fact at the center of beam **167,** or slightly offset from the center.

Multiple samples of each signal are taken, and combined to filter out signal noise. Additionally, the neighboring beams **168** and **169** are configured by their respective optical elements to overlap around the center of beam **167,** as seen in **FIGS. 63** and **96** where all three signals detect touches around the center of the middle signal. In cases where the main detection signal is concentrated in one beam, detection signals from both left and right neighboring beams are used to fine tune the touch location calculation. Specifically, filtered signals of neighboring beams **168** and **169** are used to determine an offset from the center of beam **167.**

In systems with optical elements with three-way lenses that create light beams along two sets of axes, similar calculations are performed on the diagonal detection beams to determine locations on the second axis system. As described hereinabove, touch objects typically block a larger portion of the diagonal signals that of the orthogonal signals.

The spatial and temporal filters described hereinabove with reference to shift-aligned emitter-receiver arrangements are applied in aligned emitter-receiver arrangements as well.

**Calibration of Touch Screen Components**

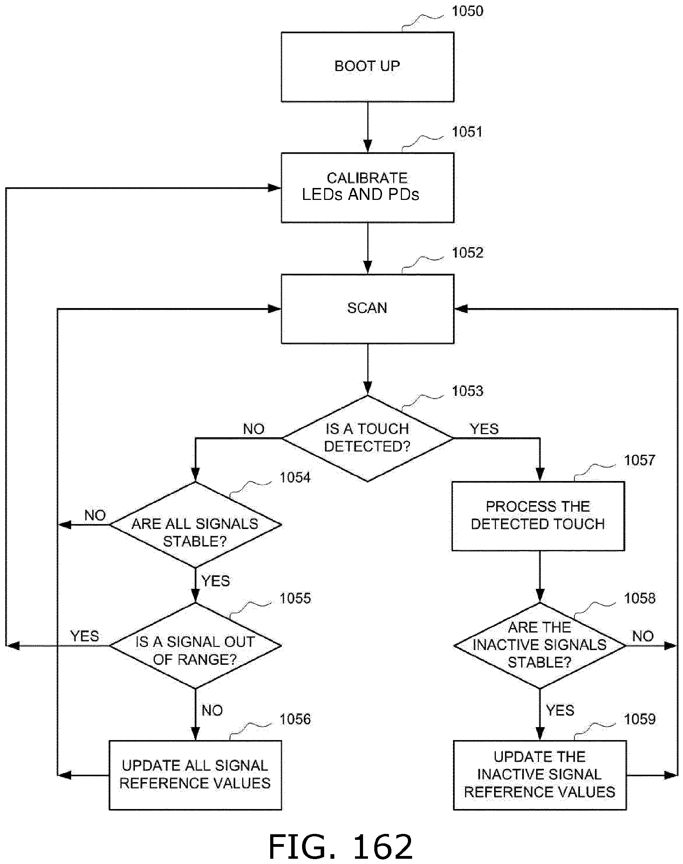

Reference is made to **FIG. 162,** which is a simplified flowchart of a method of calibration and touch detection for a light-based touch screen. In general, each emitter/receiver pair signal differs significantly from signals of other pairs, due to mechanical and component tolerances. Calibration of individual emitters and receivers is performed to ensure that all signal levels are within a pre-designated range that has an acceptable signal-to-noise ratio.

Calibration is performed by individually setting (i) pulse durations, and (ii) pulse strengths, namely, emitter currents. For reasons of power consumption, a large current and a short pulse duration is preferred. When a signal is below the pre-designated range, pulse duration and/or pulse strength is increased. When a signal is above the pre-designated range, pulse duration and/or pulse strength is decreased.

As shown in **FIG. 162,** calibration (operation **1051**) is performed at boot up (operation **1050**), and is performed when a signal is detected outside the pre-designated range (operation **1055**). Calibration is only performed when no touch is detected (operation **1053**), and when all signals on the same axis are stable (operation **1054**); i.e., signal differences are within a noise level over a time duration.

Reference signal values for each emitter/receiver pair are used as a basis of comparison to recognize a touch, and to compute a weighted average of touch coordinates over a neighborhood. The reference signal value for an emitter/receiver pair is a normal signal level. Reference signal values are collected at boot up, and updated when a change, such as a change in ambient light or a mechanical change, is detected. In general, as shown in **FIG. 162,** reference signal values are updated (operation **1056**) when signals are stable (operation **1054**); i.e., when signal variations are within an expected range for some number, $N$, of samples over time.

A touch inside the touch area of a screen may slightly bend the screen surface, causing reflections that influence detected signal values at photo diodes outside of the touch area. Such bending is more pronounced when the touch object is fine or pointed, such as a stylus. In order to account for such bending, when a touch is detected (operation **1053**), all stable signals (operation **1058**) outside the touch area undergo a reference update (operation **1059**). When no touch is present and all signals are stable (operation **1054**), but a signal along an axis differs from the reference value by more than the expected noise level (operation **1055**), the emitters are calibrated (operation **1051**). Recalibration and updating of reference values require stable signals in order to avoid influence of temporary signal values, such as signal values due to mechanical stress by bending or twisting of the screen frame.

To further avoid error due to noise, if the result of an emitter/receiver pair differs from a previous result by more than an expected noise level, a new measurement is performed, and both results are compared to the previous result, to get a best match. If the final value is within the expected noise level, a counter is incremented. Otherwise, the counter is cleared. The counter is subsequently used to determine if a signal is stable or unstable, when updating reference values and when recalibrating.

After each complete scan (operation 1052), signals are normalized with their respective reference values. If the normalized signals are not below a touch threshold, then a check is made if a recalibration or an update of reference values is necessary. If a normalized signal is below the touch threshold, then a touch is detected (operation **1053**).

To reduce risk of a false touch detection due to a sudden disturbance, the threshold for detecting an initial point of contact with the screen, such as when a finger first touches the screen, is stricter than the threshold for detecting movement of a point of contact, such as gliding of a finger along the screen while touching the screen. I.e., a higher signal difference is required to detect an initial touch, vis-à-vis the difference required to detect movement of an object along the screen surface. Furthermore, an initial contact is processed as pending until a rescan verifies that the touch is valid and that the location of the touch remains at approximately the same position.

To determine the size of a touch object (operation **1057**), the range of blocked signals and their amplitudes are measured. For large objects, there is a wait for detecting an initial point of contact with the screen, until the touch has settled, since the touch of a large object is generally detected when the object is near the screen before it has actually touched the screen. Additionally, when a large object approaches the screen in a direction not perpendicular to the touch area, the subsequent location moves slightly from a first contact location.

However, objects with small contact areas, such as a pen or a stylus, are typically placed directly at the intended screen location. As such, the wait for detecting an initial contact of a fine object is shortened or skipped entirely.

It has been found advantageous to limit the size of objects that generate a touch, in order to prevent detection of a constant touch when a device with a touch screen is stored in a pouch or in a pocket.

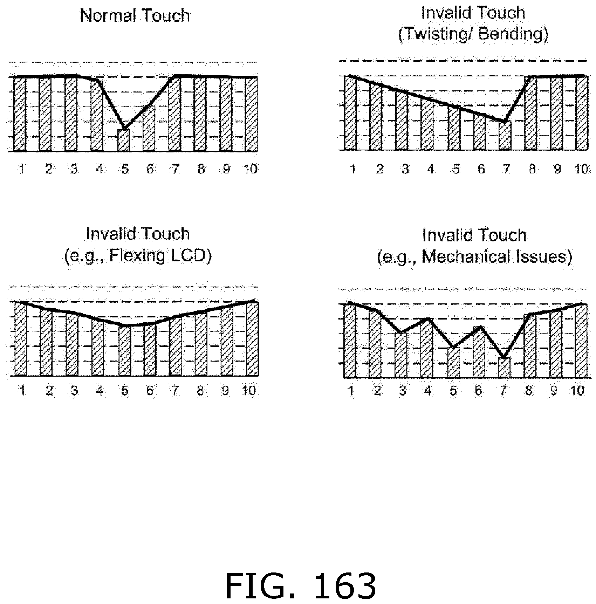

At operation **1053,** it is also necessary to distinguish between signals representing a valid touch, and signals arising from mechanical effects. In this regard, reference is made to **FIG. 163,** which is a picture showing the difference between signals generated by a touch, and signals generated by a mechanical effect. Each of the four graphs in **FIG. 163** shows detection beams 1 - 10 during a scan along one screen axis. As seen in **FIG. 163,** signal gradients discriminate between a valid touch and a mechanical effect.

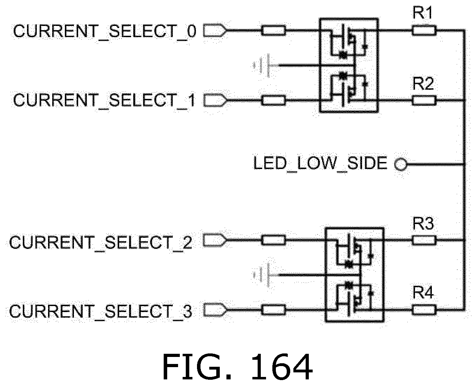

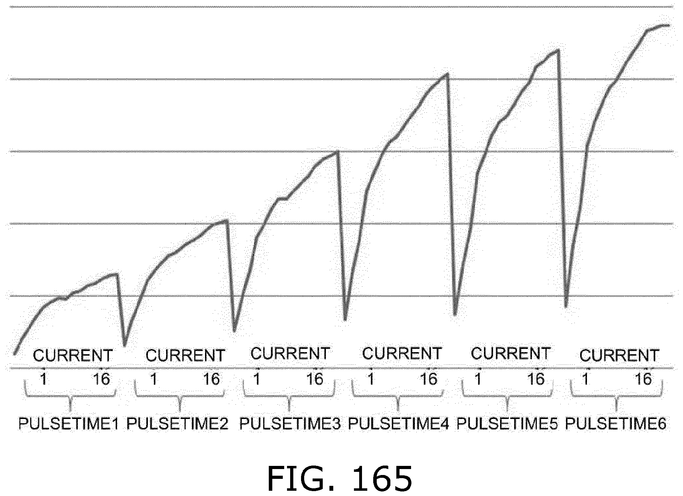

Reference is made to **FIG. 164,** which is a simplified diagram of a control circuit for setting pulse strength when calibrating a light-based touch screen. Reference is also made to **FIG. 165,** which is a plot of calibration pulses for pulse strengths ranging from a minimum current to a maximum current, for calibrating a light-based touch screen. **FIG. 165** shows plots for six different pulse durations (PULSETIME1 - PULSETIME 6), and sixteen pulse strength levels (1 - 16) for each plot.

The control circuit of **FIG. 164** includes 4 transistors with respective variable resistors **R1, R2, R3** and **R4.** The values of the resistors control the signal levels and the ratio between their values controls gradients of the pulse curves shown in **FIG. 164.**

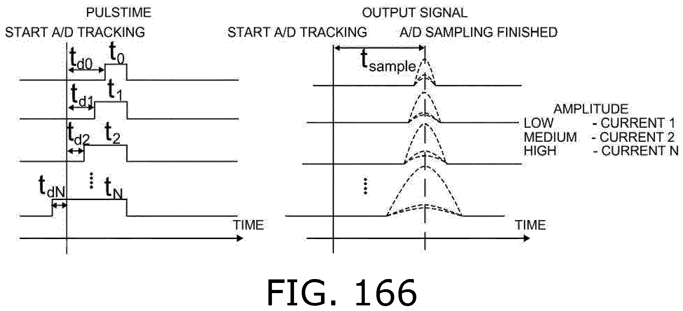

Reference is made to **FIG. 166,** which is a simplified pulse diagram and a corresponding output signal graph, for calibrating a light-based touch screen. The simplified pulse diagram is at the left in **FIG. 166,** and shows different pulse durations, $t_0$, ..., tN, that are managed by a control circuit when calibrating the touch screen. As shown in **FIG. 166,** multiple gradations are used to control duration of a pulse, and multiple gradations are used to control the pulse current. The corresponding output signal graph is at the right in **FIG. 166.**

As shown in **FIG. 166,** different pulse durations result in different rise times and different amplitudes. Signal peaks occur close to the time when the analog-to-digital (A/D) sampler closes its sample and hold circuit. In order to obtain a maximum output signal, the emitter pulse duration is controlled so as to end at or near the end of the A/D sampling window. Since the A/D sampling time is fixed, the timing, $t_d$, between the start of A/D sampling and the pulse activation time is an important factor.

## Assembly of Touch Screen Components

As described hereinabove, a minimum of tolerances are required when aligning optical guides that focus on respective light emitters and light receivers, in order to achieve accurate precision on a light-based touch screen. A small misalignment can severely degrade accuracy of touch detection by altering the light beam. It is difficult to accurately place a surface mounted receiver and transmitter such that they are properly aligned with respective light guides.

Because of this difficulty, a light guide and transmitter or receiver are combined into a single module or optical element, as described above with reference to **FIGS. 105 - 108.**

In some instances it may be of advantage not to combine an emitter or a receiver into an optical element, e.g., in order to use standard emitter and receiver components. In such instances precision placement of components is critical.

The optical lens that includes the feather pattern is part of a frame that fits over the screen. **FIG. 37** shows a cross-section of such a frame **455,** which is separate from LED 200.

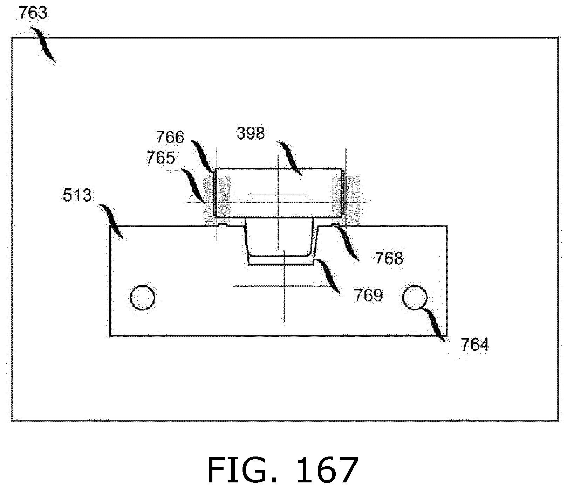

Reference is made to **FIG. 167,** which is an illustration showing how a capillary effect is used to increase accuracy of positioning a component, such as an emitter or a receiver, on a substrate, inter alia a printed circuit board or an optical component. Shown in **FIG. 167** is an emitter or a receiver **398** that is to be aligned with an optical component or temporary guide **513.** Optical component or temporary guide **513** is fixed to a printed circuit board **763** by guide pins **764.** Solder pads **765** are placed at an offset from component solder pads **766.** Printed circuit board **763** is then inserted into a heat oven for soldering.

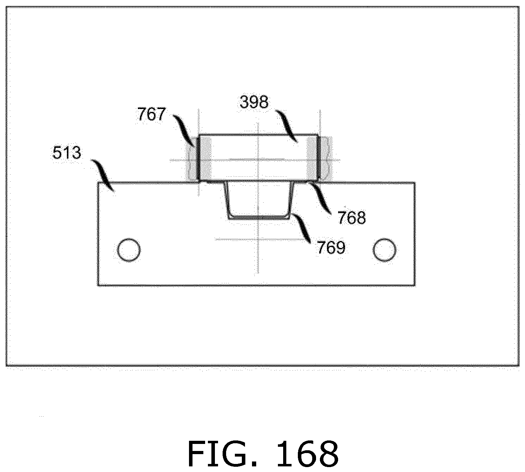

Reference is made to **FIG. 168,** which is an illustration showing the printed circuit board **763** of **FIG. 167,** after having passed through a heat oven. As shown in **FIG. 168,** component **398** has been sucked into place by the capillary effect of the solder, guided by a notch **768** and a cavity **769** in optical component or temporary guide **513.** When a temporary guide is used, it may be reused for subsequent soldering.

The process described with reference to **FIGS. 167** and **168** is suitable for use in mass production of electronic devices.

**ASIC Controller for Light-Based Touch Screen**

This section discusses design and use of a programmable state machine for novel light-based touch screen ASIC controllers that execute a scanning program on a series of emitters and detectors. The scanning program determines scan sequence, current levels and pulse widths. The controller includes integrated LED drivers for LED current control, integrated receiver drivers for photo detector current measurement, and an integrated A/D convertor to enable communication between the controller and a host processor using a standard bus interface, such as a Serial Peripheral Interface (SPI).

A host processor loads a plurality of controller configuration registers, e.g., over SPI. Thereafter, scanning execution runs independently from the host processor, optimizing overall system power consumption. When the scan data are ready, the controller issues an interrupt to the host processor via an INT pin.

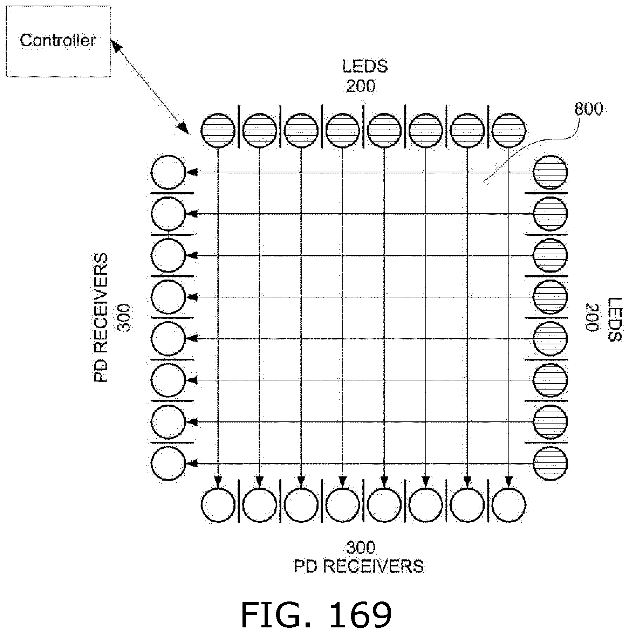

Reference is made to **FIG. 169,** which is a simplified illustration of a light-based touch screen **800** and an ASIC controller therefor.

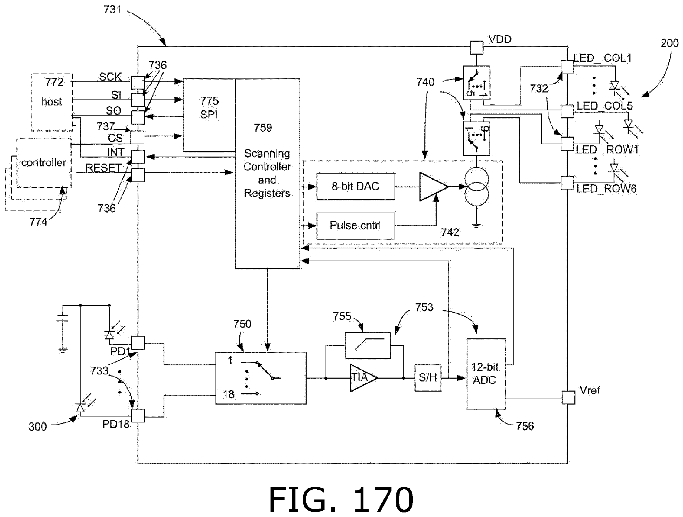

Reference is made to **FIG. 170,** which is a circuit diagram of a chip package **731** for a controller of a light-based touch screen.

As shown in **FIG. 170,** chip package **731** includes emitter driver circuitry **740** for selectively activating a plurality of photoemitters **200** that are outside of the chip package, and signal conducting pins **732** for connecting photoemitters **200** to emitter driver circuitry **740**. Emitter driver circuitry **740** is described in applicants' patent application U.S. Serial No. 12/371,609 entitled LIGHT-BASED TOUCH SCREEN filed on February 15, 2009. Inter alia, reference is made to paragraphs [0073], paragraphs [0087] - [0091] and FIG. 11 of this application as published in U.S. Publication No. 2009/0189878 A1 on July 30, 2009.

Emitter driver circuitry **740** includes circuitry **742** for configuring individual photoemitter pulse durations and pulse currents for each emitter-detector pair via a programmable current source. Circuitry **742** is described in applicants' patent application U.S. Serial No. 13/052,511 entitled LIGHT-BASED TOUCH SCREEN WITH SHIFT-ALIGNED EMITTER AND RECEIVER LENSES filed on March 21, 2011. Inter alia, reference is made to paragraphs [0343] - [0358] and FIGS. 99 - 101 of this application as published in U.S. Publication No. 2011/0163998 on July 7, 2011.

Chip package **731** includes detector driver circuitry **750** for selectively activating a plurality of photo detectors **300** that are outside of the chip package, and signal conducting pins **733** for connecting photo detectors **300** to detector driver circuitry **750**. Detector driver circuitry **750** includes circuitry **755** for filtering current received from photo detectors **300** by performing a continuous feedback bandpass filter, and circuitry **756** for digitizing the bandpass filtered current. Circuitry **755** is described inter alia at paragraphs [0076], paragraphs [107] - [0163] and FIGS. 14 - 23B of the above-referenced U.S. Publication No. 2009/0189878 A1. Chip package **731** also includes detector signal processing circuitry **753** for generating detection signals representing measured amounts of light detected on photo detectors **300.**

Chip package **731** further includes I/O pins **736** for communicating with a host processor **772**. Chip package **731** further includes controller circuitry **759** for controlling emitter driver circuitry **740** and detector driver circuitry **750**. Controller circuitry **759** communicates with host processor **772** using a bus standard for a Serial Peripheral Interface (SPI) **775**. Chip package **731** further includes a chip select (CS) pin **737** for coordinating operation of controller circuitry **759** with at least one additional controller **774** for the light-based touch screen.

The controller shown in **FIG. 170** packages all of the above mentioned elements within chip package **731,** (i) thereby enabling automatic execution of an entire scan sequence, such as 52 emitter-receiver pairs, and (ii) thereby storing the detection signals in a register array located in controller circuitry **759,** for subsequent analysis by host processor **772**. This register array provides storage for at least 52, 12-bit receiver results. Additional registers in controller circuitry **759** are provided for configuring individual pulse durations and pulse currents for individual emitter-receiver pairs. In order to support 52 unique emitter-receiver pairs, at least 104 registers are provided; namely, 52 registers for configuring individual pulse durations, and 52 registers for configuring individual pulse currents.

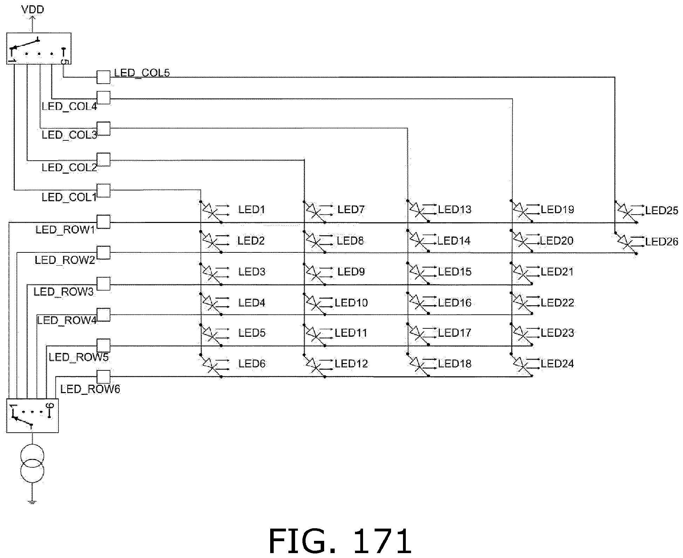

Reference is made to **FIG. 171,** which is a circuit diagram for six rows of photo emitters with 4 or 5 photo emitters in each row, for connection to pins **732** of chip package **731**. The 11 lines **LED_ROW1,** ..., **LED_ROW6** and **LED_COL1,** ..., **LED_COL5** provide two-dimensional addressing for 26 photo emitters, although the photo emitters are physically arranged around two edges of the touch screen, as shown in **FIG. 159. TABLE IV** shows LED multiplex mapping from photo emitter LEDs to LED_ROW and LED_COL pins. More generally, an LED matrix may include an $m$ x $n$ array of LEDs supported by $m + n$ I/O pins on the controller.

As such, an LED is accessed by selection of a row and a column I/O pin. The controller includes push-pull drivers for selecting rows and columns. It will be appreciated by those skilled in the art that the row and column coordinates of the LEDs are unrelated to the physical placement of the LEDs and the push-pull drivers. In particular, the LEDs do no need to be physically positioned in a rectangular matrix.

Alternatively, current source drivers are used instead of push-pull drivers. In another alternative, some of the push-pull drivers are combined with current source drivers, and others of the push-pull drivers are combined with current sink drivers.

| TABLE IV: LED multiplex mapping to LED_ROW and LED_COL pins | | |
| --- | --- | --- |
| | | |
| **LED** | **LED_ROW pin enabled** | **LED_COL pin enabled** |
| 1 | 1 | 1 |
| 2 | 2 | 1 |
| 3 | 3 | 1 |
| 4 | 4 | 1 |
| 5 | 5 | 1 |
| 6 | 6 | 1 |
| 7 | 1 | 2 |
| 8 | 2 | 2 |
| 9 | 3 | 2 |
| 10 | 4 | 2 |
| 11 | 5 | 2 |
| 12 | 6 | 2 |
| 13 | 1 | 3 |
| 14 | 2 | 3 |
| 15 | 3 | 3 |
| 16 | 4 | 3 |
| 17 | 5 | 3 |
| 18 | 6 | 3 |
| 19 | 1 | 4 |
| 20 | 2 | 4 |
| 21 | 3 | 4 |
| 22 | 4 | 4 |
| 23 | 5 | 4 |
| 24 | 6 | 4 |
| 25 | 1 | 5 |
| 26 | 2 | 5 |

Advantages of having a dedicated controller for emitters and receivers in a light-based touch screen are power savings and performance. In conventional systems, a conventional chip, such as the MSP430 chip manufactured by TEXAS INSTRUMENTS ® of Dallas, TX, controls emitters and receivers. Regarding power savings, conventional chips do not provide access to all of the power consuming chip elements. Moreover, with conventional chips it is not possible to power on and off external elements in sync with the emitters. For example, with a conventional chip the amplifier unit connected to the receivers and the analog-to-digital convertor (ADC) for digitizing receiver light detection current, cannot be turned on and off in sync with activation of the emitters. In conventional systems, these elements are left powered on throughout an entire scan sequence. In distinction, the present dedicated controller is able to power these elements on and off at a resolution of microseconds, in sync with emitter activation. This and other such selective activation of controller blocks, reduce the total power consumption of the touch system considerably. In fact, power consumption for the amplifier, the ADC and other controller blocks is reduced to the extent that their collective power consumption is negligible as compared to photoemitter activation power. As such, system power consumption is nearly the same as the power consumption for activating the photoemitters.

When the dedicated controller scans a series of emitter-receiver pairs, an LED driver supplies an amount of current to an LED in accordance with settings in LED current control registers and LED pulse length control registers. **TABLE V** shows the power consumption of the dedicated controller, for 50 emitter-receiver pairs at 100 Hz with a power source of 2.7V. Pulse durations and pulse currents are set via circuitry **742** using configuration registers. Current consumption is calculated as

$$100 \text{ Hz} \times 50 \text{ activation pairs} \times \text{pulse duration (μs)} \times \text{pulse current (A)} =$$

$$= \text{current consumption (μA) from the battery.}$$

Power consumption is calculated as

$$\text{current consumption (μA)} * \text{voltage (V)} = \text{power (mW).}$$

| TABLE V: Photometer power consumption for 50 emitter-receiver pairs at 100 Hz with 2.7V power source | | | |
|---|---|---|---|
| | | | |
| **Pulse duration (μs)** | **Pulse current (A)** | **Current consumption (μA)** | **Power (mW)** |
| 0.125 | 0.05 | 31.25 | 0.084375 |
| 0.25 | 0.05 | 62.5 | 0.16875 |
| 0.5 | 0.05 | 125 | 0.3375 |
| 1 | 0.05 | 250 | 0.675 |
| 2 | 0.05 | 500 | 1.35 |
| 4 | 0.05 | 1000 | 2.7 |
| 0.125 | 0.1 | 62.5 | 0.1685 |
| 0.25 | 0.1 | 125 | 0.3375 |
| 0.5 | 0.1 | 250 | 0.675 |
| 1 | 0.1 | 500 | 1.35 |
| 2 | 0.1 | 1000 | 2.7 |
| 4 | 0.1 | 2000 | 5.4 |
| 0.125 | 0.2 | 125 | 0.3375 |
| 0.25 | 0.2 | 250 | 0.675 |
| 0.5 | 0.2 | 500 | 1.35 |
| 1 | 0.2 | 1000 | 2.7 |
| 2 | 0.2 | 2000 | 5.4 |
| 4 | 0.2 | 4000 | 10.8 |
| 0.125 | 0.4 | 250 | 0.675 |
| 0.25 | 0.4 | 500 | 1.35 |
| 0.5 | 0.4 | 1000 | 2.7 |
| 1 | 0.4 | 2000 | 5.4 |
| 2 | 0.4 | 4000 | 10.8 |
| 4 | 0.4 | 8000 | 21.6 |

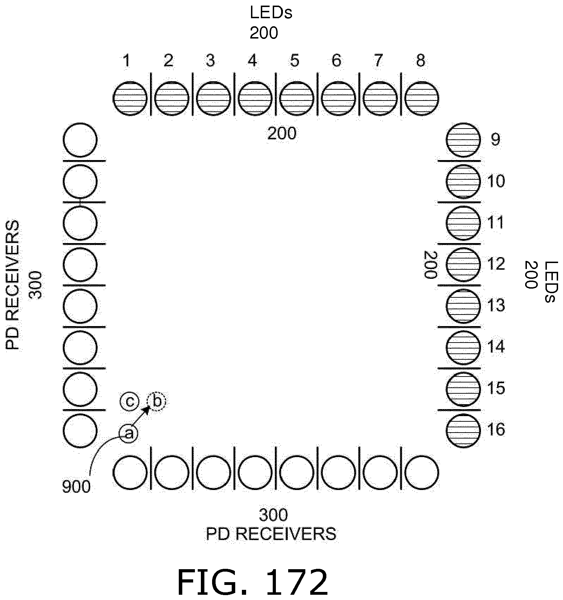

Regarding performance, the time required to complete a scan of all emitter-receiver pairs around the screen is critical, especially for fast stylus tracing. Reference is made to **FIG. 172,** which is a simplified illustration of a touch screen surrounded by emitters **200** and receivers **300.** Emitters **200** are scanned in a scan sequence; e.g., emitters **200** may be scanned in the numbered order 1 - 16 shown in **FIG. 172.** Touch points **900** correspond to touches made by a person writing his signature in a fast scrawl using a fine-point stylus. Three locations are indicated for touch points **900.** At a time t1, when emitter 1 is activated, the stylus is located at a location **a.** At a time t2, when emitter 16 is activated, the stylus is located at a location **b,** due to the quick movement as the user signs his name. However, the detected location on the screen at time t2 is a location **c,** different than location **b**; because at time t2, when emitter 16 is activated, the stylus has moved from its location at time t1. Such time lag between x-coordinate detection and y-coordinate detection produces errors in detecting touch positions of the stylus on the screen. These errors are most pronounced with fast stylus writing. As such, it is desirable to complete an entire scan sequence as fast as possible.

The dedicated controller completes a scan sequence faster than conventional chips. The dedicated controller includes register arrays that store necessary parameters to execute an entire scan sequence automatically. The dedicated controller further includes a register array for storing filtered, digital results for a scan sequence. In distinction, with conventional chips not all registers are available, and configuration data in registers is not automatically parsed. Thus, during a scan sequence using conventional chips, some cycles are required for configuring further emitter activations and for reading results.

In configurations where the number of emitters and receivers is larger than what may be supported by a single dedicated controller, multiple controllers are used. The multiple controllers are each configured prior to executing a scan, and then a scan is executed by each controller in rapid succession. After configuring registers in all controllers, a host selects a first controller chip, using the chip-select (CS) pin shown in **FIG. 170,** and activates that chip. When the scan sequence on that chip is completed, the chip sends an interrupt to the host. The host then selects a second controller chip using its CS pin, and runs the second chip's scan sequence. After all of the controller chips have completed their respective scans, the host reads the results from each chip and calculates touch locations.

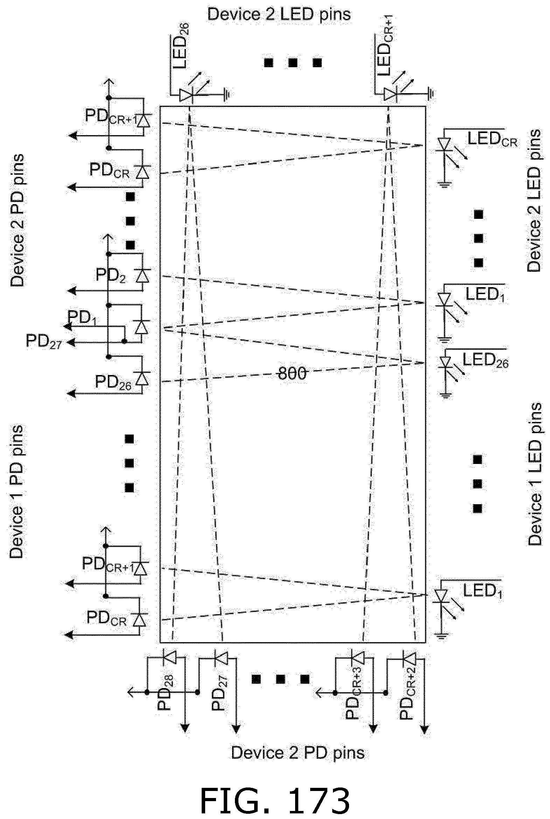

In this regard, reference is made to **FIG. 173,** which is a simplified application diagram illustrating a touch screen configured with two controllers, indicated as **Device 1** and **Device 2.** Shown in **FIG. 173** is touch screen **800** surrounded with LEDs and shift-aligned PDs. Twenty-six LEDs, $LED_1$ - $LED_{26}$, are connected along a first screen edge to LED pins from **Device 1,** and additional LEDS, $LED_1$ - $LED_{CR}$, along this edge are connected to LED pins from **Device 2.** Along the opposite edge, PDs are shift-aligned with the LEDs. PDs that detect light from the **Device 1** LEDS are connected to **Device 1** PD pins, and PDs that detect light from **Device 2** LEDs are connected to **Device 2** PD pins. The dashed lines connecting each LED to two PDs show how light from each LED is detected by two PDs. Each PD detects light from two LEDs.

As shown in **FIG. 173,** $PD_{27}$ of **Device 1** detects light from $LED_{26}$ of **Device 1** and also from $LED_1$ of **Device 2.** As such, $PD_{27}$ is connected to the $PD_{27}$ pin of **Device 1** and also to the $PD_1$ pin of **Device 2.** When detecting light from $LED_{26}$ of **Device 1,** $PD_{27}$ is sampled over the $PD_{27}$ pin of **Device 1** and its result is stored on **Device 1;** and when detecting light from $LED_1$ of **Device 2,** $PD_{27}$ is sampled over the $PD_1$ pin of **Device 2** and its result is stored on **Device 2.** As such, each controller coordinates LED activation with a respective PD activation. The host processor calculates touch locations along the **Device 1 - Device 2** border by interpolating the PD results from the two devices.

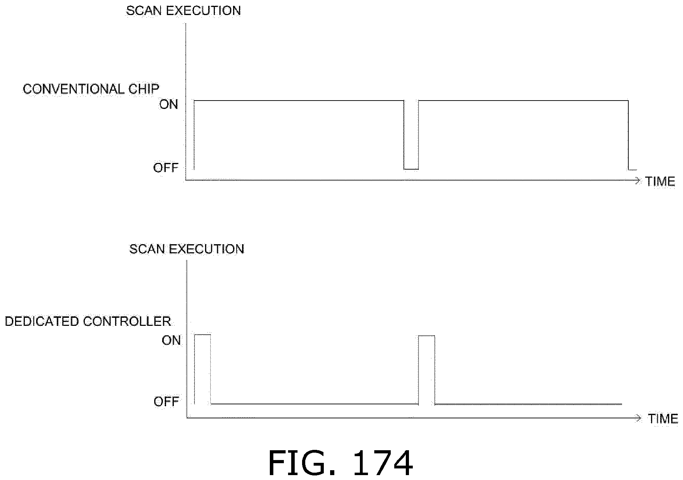

Reference is made to **FIG. 174,** which is a graph showing performance of a scan sequence using a conventional chip vs. performance of a scan using a dedicated controller. The duration of each complete screen scan is longer with the conventional chip than with the dedicated controller. The dedicated controller can be powered down between scan sequences, providing further power savings, especially since the stretches of time between scan sequences may be larger with use of the dedicated controller than with use of a conventional chip. To connect touch points of multiple scans, the host processor may use spline interpolation or such other predictive coding algorithms, to generate smooth lines that match the user's pen strokes. Of significance is that each touch point is very accurate, when using a dedicated controller.

Moreover, it is apparent from **FIG. 174** that a host using a dedicated controller may increase the scan frequency beyond the limits possible when using a conventional chip. E.g., a host can scan 50 emitter receiver pairs at 1000 Hz, using a dedicated controller. In distinction, touch screens using convention chips typically operate at frequencies of 100 Hz or less. The high sampling rate corresponding to 1000 Hz enables accurate touch location calculation over time. In turn, this enables temporal filtering of touch coordinates that substantially eliminates the jitter effect described above when a stylus remains stationary, while substantially reducing the lag time described above between a stylus location and a line representing the stylus' path along the screen.

Such high sampling rates on the order of 50 emitter-receiver pairs at 1000 Hz cannot be achieved if individual LEDs require configuration prior to activation. The dedicated controller achieves such high sampling rates by providing the registers and the circuitry to automatically activate an entire scan sequence.

A further advantage of completing multiple scan sequences in a short time is disambiguation of touch signals. The problem of ambiguous signals is described above with reference to **FIGS. 8** and **9.** As explained above, the same detection pattern of photo detectors is received for two concurrent touches along a screen diagonal, as illustrated in **FIGS. 8** and **9.** When placing two fingers on the screen, there is an inherent delay between the first and second touches. Completing multiple scan sequences in a very short time allows the system to determine the first touch, which is unambiguous. Then, assuming that the first touch is maintained when the second touch is detected, the second touch location is easily resolved. E.g., if it is determined that one touch is in the upper left corner and the touch detection pattern is as shown in **FIGS. 8** and **9,** then the second touch location must be at the lower right corner of the screen.

Thus it will be appreciated by those skilled in the art that a dedicated controller is power-efficient, highly accurate and enables highs sampling rates. The host configures the controller for low power, corresponding to 100 Hz or less, or for high frequency scanning, such as 500 Hz - 1000 Hz.

Determination of which configuration is appropriate is based inter alia on the area of the touch screen covered by a touch pointer, since jitter and lag are less prominent for a touch covering a relative large area, such as a finger touch, than for a touch covering a relatively small area, such as a stylus touch. Based on the area covered by the pointer, as determined by the size of the shadowed area of light-based touch screen signals, the host determines whether a finger or a stylus is being used, and configures an appropriate scan rate based on the trade-off between power and accuracy.

The dedicated controller includes scan range registers for selectively activating LEDs, and current control and pulse duration registers for specifying an amount of current and a duration, for each activation. The scan range registers designate a first LED and a first PD to be activated along each screen edge, the number of LEDs to be activated along each edge, and the step factor between activated LEDs. A step factor of 0 indicates that at each step the next LED is activated, and a step factor of 1 indicates that every other LED is activated. Thus, to activate only odd or only even LEDs, a step factor of 1 is used. Step factors of 2 or more may be used for steps of 2 or more LEDs, respectively. An additional register configures the number of PDs that are activated with each LED. A value of 0 indicates that each LED is activated with a single corresponding PD, and a value of 1 indicates that each LED is activated with two PDs. The number of PDs activated with each LED may be as many PD that are available around the touch screen.

To save power, it is advantageous to have a low resolution scan mode for detecting an initial touch location. The host may run in this mode, for example, when no touch is detected. When a touch is detected, the host switches to a high resolution scan mode, in order to calculate a precise touch location, as described above with reference to **FIG. 144.** In terms of controller scan sequence registers, every emitter is activated, i.e., step = 0, with one receiver. The scan sequence of **FIG. 144(d)** differs from that of **FIG. 144(e)** in the initial PD used in the sequence on each screen edge. Specifically, the first PD, namely, PD0, is used in **FIG. 144(d),** and the second PD, namely, PD1, is used in **FIG. 144(e).** The initial PD to be used along each screen edge is configured by a register.

When each LED is activated with more than one PD, the LED is activated separately for each of the PDs. Each such separate activation has respective current control and pulse duration registers.

The dedicated controller automatically controls a mux to direct current to desired LEDs. The LED mux control is set by the scan control registers. The controller automatically synchronizes the correct PD receivers when the drivers pulse the LEDS. Twelve-bit ADC receiver information is stored in PD data registers. Upon completion of scanning, the controller issues an interrupt to the host processor, and automatically enters standby mode. The host then reads receiver data for the entire scan sequence over the SPI interface.

In some touch screen configurations, emitters are shift-aligned with receivers, with emitters being detected by more than one receiver and being activated one or more times for each detecting receiver. For example, an emitter may be activated three times in rapid succession, and with each activation a different receiver is activated. Moreover, a receiver is further activated during the interval between emitter activations to determine an ambient light intensity.

In other touch screen configurations, emitters and receivers are aligned, but each emitter is detected by more than one receiver, and each emitter is activated separately for each detecting receiver. Emitter-receiver activation patterns are described in applicants' patent application U.S. Serial No. 12/667,692 entitled SCANNING OF A TOUCH SCREEN filed on January 5, 2010. Inter alia, reference is made to paragraphs [0029], [0030], [0033] and [0034] of this application as published in U.S. Publication No. 2011/0043485 on February 24, 2011.

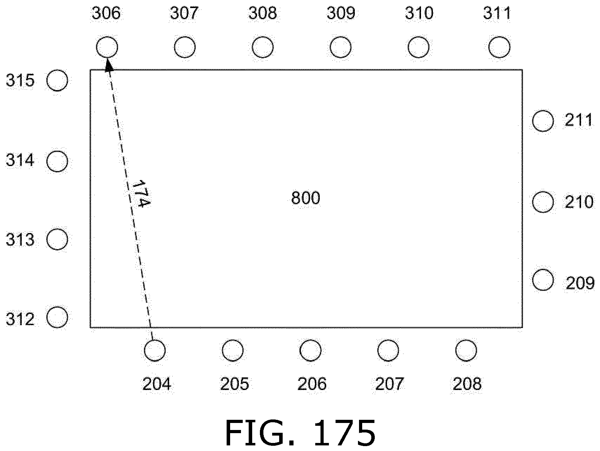

Reference is made to **FIG. 175,** which is a simplified illustration of a touch screen **800** having a shift-aligned arrangement of emitters and receivers. Shown in **FIG. 175** are emitters **204 - 208** along the south edge of screen **800,** shift-aligned receivers **306 - 311** along the north edge of screen **800,** emitters **209 - 211** along the east edge of screen **800,** and shift-aligned receivers **312 - 315** along the west edge of screen **800.** It is noted that each edge of receivers has one more receiver than the number of emitters along the opposite edge, in order to detect touches in the corners of screen **800.** A beam **174** depicts activation of emitter **204** and detection by receiver **306. TABLE VI** lists an activation sequence in terms of emitter-receiver pairs.

| **TABLE VI:** Activation sequence of emitter-receiver pairs |
| --- |
|  |

(continued)

| Activation No. | Emitter | Receiver |
|---|---|---|
| 1 | 204 | 306 |
| 2 | 204 | 307 |
| 3 | 205 | 307 |
| 4 | 205 | 308 |
| 5 | 206 | 308 |
| 6 | 206 | 309 |
| 7 | 207 | 309 |
| 8 | 207 | 310 |
| 9 | 208 | 310 |
| 10 | 208 | 311 |
| 11 | 209 | 312 |
| 12 | 209 | 313 |
| 13 | 210 | 313 |
| 14 | 210 | 314 |
| 15 | 211 | 314 |
| 16 | 211 | 315 |

Activation no. 10, **208-311,** is the last activation along the horizontal dimension of screen **800.** Activation no. 11 is the first activation along the vertical dimension of screen **800.** Such turning of a corner alters the activation pattern along screen edges. Specifically, the activation pattern along a screen edge is of the form AA-AB-BB-BC-CC-CD ..., where the first letter of each pair designates an emitter and the second letter designates a receiver. Thus in AA-AB a same emitter is activated with two receivers, and in AB-BB two emitters are activated with a same receiver. When turning a corner, as at activation no. 11, the pattern is reset. The active emitter, **209,** is not detected by the previously activated receiver **311,** since emitter **209** and receiver **311** are not situated along opposite screen edges. Instead, emitter **209** is detected by receiver **312,** thus starting a new AA-AB-BB-BC ... activation pattern along the vertical screen dimension. The controller handles a pattern reset based on the scan sequence registers, which indicate when a scan along a screen edge is complete.

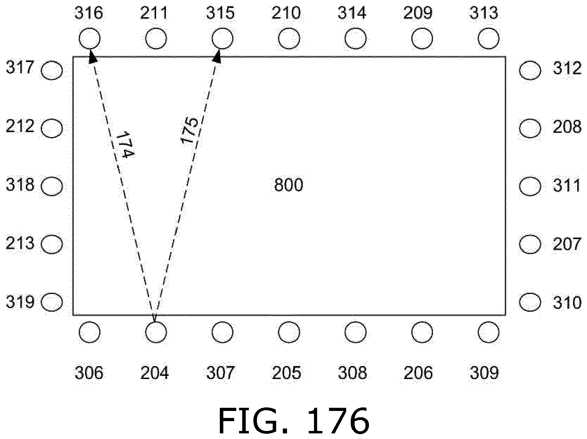

Reference is made to **FIG. 176,** which is a simplified diagram of a touch screen **800** having alternating emitters and receivers along each screen edge. As shown in **FIG. 176,** each emitter is situated between two receivers, resulting in $n$ emitters and $n+1$ receivers along a given edge, for some number $n$. **FIG. 176** shows touch screen **800** surrounded by ten emitters **204 - 213** and fourteen receivers **306 - 319.** As described above with reference to **FIG. 172,** each emitter is paired with two receivers. The dotted arrows **174** and **175** in **FIG. 176** indicate two activations of emitter **204;** namely, an activation detected by receiver **316,** and another activation detected by receiver **315.**

When an activation sequence arrives at the end of a sequence of emitters along a screen edge, the activation pattern is restarted when activating emitters along an adjacent edge. The angle of orientation of each emitter with a detecting receiver is substantially 45° from the normal to the edge along which the emitter is arranged. In such case, a receiver along an adjacent edge is operative to detect light from an emitter near a screen corner. As such, the activation pattern is not restarted, but instead continues as a series of activated emitters turn a corner. Alternatively, the controller may restart the activation pattern when turning a corner by use of registers to store the index of the last LED to be activated by the controller along each screen dimension.

The controller is a simple state machine and does not include a processor core, such as an ARM core. As such, costs of dedicated controllers are low. A light-based touch screen using a dedicated controller costs less than a comparable capacitive touch screen, since a capacitive touch screen requires a processor core in order to integrate a large number of signals and calculate a touch location. In order to achieve a quick response time, a capacitive touch screen uses a dedicated processor core to calculate a touch location, instead of offloading this calculation to a host processor. In turn, this increases the bill of materials for capacitive touch screens. In distinction, certain light-based touch screens use two neighboring receiver values to calculate a touch location along an axis, which enables the host to calculate a touch location and, consequently, enables use of a low-cost controller.

Multiple controllers may be operative to control touch screen 800. As mentioned above, chip package **731** includes a chip select (CS) pin **737** for coordinating operation of scanning controller circuitry **759** with at least one additional controller **774** for the light-based touch screen.

The dedicated controller supports activation sequences for the touch screen of Configuration No. 5 described hereinabove. In a first case, emitters are positioned along two screen edges, directly opposite respective receivers along the remaining two screen edges, as shown in **FIG. 54.** Each emitter sends a two-pitch wide light beam to its respective receiver. An optical element, such as element **530** described hereinabove with reference to **FIG. 55,** interleaves this wide beam with neighboring wide beams, to generate two sets of overlapping wide beams that cover the screen; e.g., the set including every second beam covers the screen. **FIG. 60** shows a contiguous area covered by beams **168** and **169** generated by respective emitters **201** and **202,** with emitter **200** between them.

Two activation sequences are provided; namely, an activation sequence for low-resolution detection when no touch is detected, and an activation sequence for high resolution detection for tracing one or more detected touches. In low-resolution detection every second emitter-receiver pair is activated along one screen edge. For a rectangular screen, the shorter edge is used. In order to distribute use of components uniformly, odd and even sets of emitter-receiver pairs are activated alternately. Thus in low-resolution detection each emitter is configured to be activated with one receiver, and the step factor is 1; i.e., every second emitter is activated. In high resolution detection mode each emitter is configured to be activated with one receiver, and the step factor is 0; i.e., every emitter is activated. The scan in this mode activates emitters along both emitter-lined screen edges.

In an alternative case, emitters and receivers are alternated along screen edges, as shown in **FIG. 70.** Each emitter sends a two-pitch wide beam to its respective receiver. An optical element, such as element **530** described hereinabove with reference to **FIG. 55,** interleaves this wide beam with neighboring wide beams, to generate two sets of overlapping wide light beams that cover the screen; e.g., the set including every second beam covers the screen. **FIG. 72** shows a contiguous area covered by beams **168** and **169** generated by respective emitters **201** and **202,** with receiver **300** between them.

In this case three activation sequences are provided; namely, an activation sequence for low-resolution detection using detection on one axis, an activation sequence for high resolution detection using detection on two axes, and an activation sequence for high resolution detection using detection in four axes. In low-resolution detection every second emitter-receiver pair is activated along one screen edge. For a rectangular screen, the shorter edge is used. In order to distribute use of components uniformly, odd and even sets of beams are activated alternately. However, because neighboring beams are aimed in opposite directions, the emitters are connected to the ASIC LED connectors in such a way that the index of emitters is configured to increment along a single screen edge. Thus the step factor is 0; i.e., every beam is activated, and the activation series ends at the last emitter along the active edge. In an alternative case the emitters are connected to the ASIC LED connectors such that the index of emitters is configured to increment together with the series of beams. In this case the step factor is 1; i.e., every second beam is activated.

In high resolution detection mode using beams along two axes, each emitter is configured to be activated with one respective receiver, the step factor is 0, and the activation series covers all emitters.

In high resolution detection mode using beams along four axes, multiple activations are executed. A first activation activates beams along the horizontal and vertical axes. The initial emitter index matches the initial receiver index, and the emitter index increments together with the receiver index. A second activation series activates a first set of diagonal beams. In this case, the initial emitter and receiver indices define endpoints of one of the diagonal beams from the initial emitter. The emitter index then increments together with the receiver index around the screen. A third activation series activates a second set of diagonal beams. In this case, the initial emitter and receiver indices define endpoints of the second diagonal beam from the initial emitter.

The present invention has broad application to electronic devices with touch sensitive screens, including small-size, mid-size and large-size screens. Such devices include inter alia computers, home entertainment systems, car entertainment systems, security systems, PDAs, cell phones, electronic games and toys, digital photo frames, digital musical instruments, e-book readers, TVs and GPS navigators.

The present invention is not limited to devices with touch sensitive displays. The present invention also applies to devices having a touch sensitive surface such as a touch sensitive opaque pad, and having a cavity through which emitters transmit light and within which locations of objects are detected.

In the foregoing specification, the invention has been described with reference to specific exemplary embodiments thereof. It will, however, be evident that various modifications and changes may be made to the specific exemplary embodiments without departing from the scope of the invention as set forth in the appended claims. Accordingly, the specification and drawings are to be regarded in an illustrative rather than a restrictive sense.

**Claims**

1.  A light-based touch-sensitive surface, comprising:

    a housing;
    a surface (800) attached to said housing for receiving touch input;
    a plurality of light sources (200) in said housing, mounted along a first edge of said surface, emitting light;
    a plurality of light receivers (300) in said housing, mounted along a second edge of said surface opposite the first edge, detecting the light beams (118, 119, 120) emitted by said light sources;
    a lens frame (564), comprising:

        first and second collimating means (565); and
        first and second air gaps (556); and

    a calculating unit in said housing, connected to said light receivers, for calculating a touch location on said surface based on an absence of light expected to be received by said light receivers, **characterized in that** said lens frame further comprises:

        a first curved lens (566) adjacent to the first edge of said surface, the first air gap (556) separating the first collimating means (565) and the first curved lens (566), the first curved lens comprising:

            a first entry panel curved in the plane defined by the beams entering this first entry panel contiguous with said first air gap; and
            a first exit panel, curved in the horizontal plane defined by the light beams exiting the first exit panel and parallel to said
            surface and forming a curved rim for said surface, wherein the first entry and
            the first exit panels have similar curvature in their respective plane, wherein the light beams emitted by said
            light sources are collimated by said first collimating means (565), pass through said first air gap (556), are refracted as they enter said first entry panel and are refracted again as they exit said first exit panel prior to crossing said surface, the refraction upon exit being the inverse of the refraction upon entry; and

        a second curved lens adjacent to the second edge of said surface, the second air gap (556) separating the second collimating means (565) and the second curved lens (566), the second curved lens comprising:

            a second entry panel, curved in the horizontal plane parallel to said surface and forming a curved rim for said surface; and
            a second exit panel curved in the plane defined by the beams exiting this second exit panel contiguous with said second air gap, wherein the second entry and the second exit panels have similar curvature in their respective plane, wherein after crossing said surface, the light beams are refracted as they enter said second entry panel and are refracted again as they exit said second exit panel, the refraction upon exit being the inverse of the refraction upon entry, pass through said second air gap (556), and are de-collimated by said second collimating means (565) so as to converge on said light receivers.

2.  The touch-sensitive surface of claim **1,** wherein said surface is embedded in a car entertainment system.

3.  The touch-sensitive surface of claim **1,** wherein said calculating unit calculates a touch location based on where the light beams emitted by said light sources exit said first exit panel.

4.  The touch-sensitive surface of claim **1,** wherein said calculating unit calculates a touch location based on where the light beams emitted by said light sources enter said second entry panel.

5.  The touch-sensitive surface of claim **1,** wherein said first and second curved lenses comprise respective first and second internal reflective surfaces (451).

6.  The touch-sensitive surface of claim 5, wherein said first entry panel (571) is curved in a vertical plane incident to the horizontal plane, and said first interior reflective surface (451) reflects the light beams between the entry and exit refractions of said first curved lens, and wherein said second exit panel is curved in a vertical plane incident to the horizontal plane, and said second interior reflective surface reflects the light beams between the entry and exit refractions of said second curved lens.

7. The touch-sensitive surface of claim 1, wherein said first entry panel is curved in the horizontal plane, and said second exit panel is curved in the horizontal plane.

**Patentansprüche**

1. Lichtbasierte berührungsempfindliche Oberfläche, die umfasst:

ein Gehäuse;
eine Oberfläche (800), die an dem Gehäuse angebracht ist, um eine Berührungseingabe zu empfangen;
eine Mehrzahl von Lichtquellen (200) im Gehäuse, die entlang eines ersten Rands der Oberfläche befestigt sind, wobei sie Licht emittieren;
eine Mehrzahl von Lichtempfängern (300) im Gehäuse, die entlang eines zweiten Rands der Oberfläche dem ersten Rand gegenüberliegend angeordnet sind, wobei sie die von den Lichtquellen emittierten Lichtstrahlen (118, 119, 120) detektieren;
einen Linsenrahmen (564), der umfasst:

erste und zweite Kollimatormittel (565); und
erste und zweite Luftspalten (556); und

eine Berechnungseinheit im Gehäuse, die mit den Lichtempfängern verbunden ist, um eine Berührungsstelle auf der Oberfläche auf Basis des Fehlens von Licht zu berechnen, von dem erwartet wird, dass es von den Lichtempfängern empfangen wird, **dadurch gekennzeichnet, dass** der Linsenrahmen des Weiteren umfasst:

eine erste gekrümmte Linse (566) dem ersten Rand der Oberfläche benachbart, wobei der erste Luftspalt (556) das erste Kollimatormittel (565) und die gekrümmte Linse (566) trennt, wobei die erste gekrümmte Linse umfasst:

ein erstes Eintrittsfeld, das in der Ebene gekrümmt ist, wie durch die Strahlen definiert, die in dieses erste Eintrittsfeld eintreten, an dem ersten Luftspalt anliegend; und
ein erstes Austrittsfeld, das in der horizontalen Ebene gekrümmt ist, wie durch die Lichtstrahlen definiert, die aus dem ersten Austrittsfeld austreten, und parallel zu der Oberfläche und eine gekrümmte Kante für die Oberfläche bildend, wobei das erste Eintritts- und das erste Austrittsfeld in ihrer jeweiligen Ebene eine ähnliche Krümmung aufweisen, wobei die von den Lichtquellen emittierten Lichtstrahlen vom ersten Kollimatormittel (565) kollimiert werden, den ersten Luftspalt (556) passieren, gebrochen werden, während sie in das erste Eintrittsfeld eintreten, und erneut gebrochen werden, während sie aus dem ersten Austrittsfeld austreten, bevor sie die Oberfläche kreuzen, wobei die Brechung beim Austritt die Umkehrung der Brechung beim Eintritt ist; und

eine zweite gekrümmte Linse dem zweiten Rand der Oberfläche benachbart, wobei der zweite Luftspalt (556) das zweite Kollimatormittel (565) und die zweite gekrümmte Linse (566) trennt, wobei die zweite gekrümmte Linse umfasst;

ein zweites Eintrittsfeld, das in der horizontalen Ebene gekrümmt ist, parallel zur Oberfläche und eine gekrümmte Kante für die Oberfläche bildend; und
ein zweites Austrittsfeld, das in der Ebene gekrümmt ist, die durch die Strahlen definiert wird, die aus diesem zweiten Austrittsfeld austreten, an dem zweiten Luftspalt anliegend, wobei das zweite Eintritts- und das zweite Austrittsfeld in ihrer jeweiligen Ebene eine ähnliche Krümmung aufweisen, wobei die Lichtstrahlen nach Kreuzen der Oberfläche gebrochen werden, während sie in das zweite Eintrittsfeld eintreten, und erneut gebrochen werden, während sie aus dem zweiten Austrittsfeld austreten, wobei die Brechung beim Austritt die Umkehrung der Brechung beim Eintritt ist, den zweiten Luftspalt (556) passieren und vom zweiten Kollimatormittel (565) dekollimiert werden, um auf den Lichtempfängern zusammenzulaufen.

2. Berührungsempfindliche Oberfläche nach Anspruch 1, wobei die Oberfläche in ein Unterhaltungssystem für Autos eingebettet ist.

**3.** Berührungsempfindliche Oberfläche nach Anspruch 1, wobei die Berechnungseinheit eine Berührungsstelle basierend darauf berechnet, wo die von den Lichtquellen emittierten Lichtstrahlen aus dem ersten Austrittsfeld austreten.

**4.** Berührungsempfindliche Oberfläche nach Anspruch 1, wobei die Berechnungseinheit eine Berührungsstelle basierend darauf berechnet, wo die von den Lichtquellen emittierten Lichtstrahlen in das zweite Eintrittsfeld eintreten.

**5.** Berührungsempfindliche Oberfläche nach Anspruch 1, wobei die erste und die zweite gekrümmte Linse jeweilige erste und zweite interne Reflexionsflächen (451) umfassen.

**6.** Berührungsempfindliche Oberfläche nach Anspruch 5, wobei das erste Eintrittsfeld (571) in einer vertikalen Ebene zur horizontalen Ebene inzident gekrümmt ist, und wobei die erste interne Reflexionsfläche (451) die Lichtstrahlen zwischen den Eintritts- und Austrittsbrechungen der ersten gekrümmten Ebene reflektiert, und wobei das zweite Austrittsfeld in einer vertikalen Ebene zur horizontalen Ebene inzident gekrümmt ist, und wobei die zweite interne Reflexionsfläche die Lichtstrahlen zwischen den Eintritts- und Austrittsbrechungen der zweiten gekrümmten Linse reflektiert.

**7.** Berührungsempfindliche Oberfläche nach Anspruch 1, wobei das erste Eintrittsfeld in der horizontalen Ebene gekrümmt ist und wobei das zweite Austrittsfeld in der horizontalen Ebene gekrümmt ist.

## Revendications

**1.** Surface tactile à base de lumière, comprenant :

un logement ;
une surface (800) attachée au dit logement pour recevoir une entrée tactile ;
une pluralité de sources de lumière (200) dans ledit logement, montées le long du premier bord de ladite surface, émettant de la lumière ;
une pluralité de récepteurs de lumière (300) dans ledit logement, montés le long d'un deuxième bord de ladite surface opposé au premier bord, détectant les faisceaux de lumière (118, 119, 120) émis par lesdites sources de lumière ;
une monture de lentille (564), comprenant :

des premiers et deuxièmes moyens de collimation (565) ; et
des premier et deuxième espaces d'air (556) ; et

une unité de calcul dans ledit logement, connectée aux dits récepteurs de lumière, pour calculer un emplacement de contact sur ladite surface sur la base d'une absence de la lumière supposée être reçue par lesdits récepteurs de lumière, **caractérisée en ce que** ladite monture de lentille comprend en outre :

une première lentille incurvée (566) adjacente au premier bord de ladite surface, le premier espace d'air (556) séparant les premiers moyens de collimation (565) et la première lentille incurvée (566), la première lentille incurvée comprenant :

un premier panneau d'entrée incurvé dans le plan défini par les faisceaux entrant dans ce premier panneau d'entrée contigu au dit premier espace d'air ; et
un premier panneau de sortie, incurvé dans le plan horizontal défini par les faisceaux de lumière sortant du premier panneau de sortie et parallèle à ladite surface et formant un rebord incurvé pour ladite surface, dans laquelle le premier panneau d'entrée et le premier panneau de sortie ont une courbure similaire dans leur plan respectif, dans laquelle les faisceaux de lumière émis par lesdites sources de lumière sont collimatés par lesdits premiers moyens de collimation (565), passent à travers ledit premier espace d'air (556), sont réfractés alors qu'ils entrent dans ledit premier panneau d'entrée et sont réfractés de nouveau alors qu'ils sortent dudit premier panneau de sortie avant de traverser ladite surface, la réfraction lors de la sortie étant l'inverse de la réfraction lors de l'entrée ; et

une deuxième lentille incurvée adjacente au deuxième bord de ladite surface, le deuxième espace d'air (556) séparant les deuxièmes moyens de collimation (565) et la deuxième lentille incurvée (566), la deuxième lentille incurvée comprenant :

> un deuxième panneau d'entrée, incurvé dans le plan horizontal parallèle à ladite surface et formant un rebord incurvé pour ladite surface ; et
> un deuxième panneau de sortie incurvé dans le plan défini par les faisceaux sortant de ce deuxième panneau de sortie contigu au dit deuxième espace d'air, dans laquelle le deuxième panneau d'entrée et le deuxième panneau de sortie ont des courbures similaires dans leur plan respectif, dans laquelle

> après avoir traversé ladite surface, les faisceaux de lumière sont réfractés alors qu'ils entrent dans ledit deuxième panneau d'entrée et sont réfractés de nouveau alors qu'ils sortent dudit deuxième panneau de sortie, la réfraction lors de la sortie étant l'inverse de la réfraction lors de l'entrée, passent à travers ledit deuxième espace d'air (556), et sont décollimatés par lesdits deuxièmes moyens de collimation (565) de manière à converger sur lesdits récepteurs de lumière.

2. Surface tactile selon la revendication 1, dans laquelle ladite surface est intégrée dans un système de divertissement d'automobile.

3. Surface tactile selon la revendication 1, dans laquelle ladite unité de calcul calcule un emplacement de contact sur la base de l'emplacement où les faisceaux de lumière émis par lesdites sources de lumière sortent dudit premier panneau de sortie.

4. Surface tactile selon la revendication 1, dans laquelle ladite unité de calcul calcule un emplacement de contact sur la base de l'emplacement où les faisceaux de lumière émis par lesdites sources de lumière entrent dans ledit deuxième panneau d'entrée.

5. Surface tactile selon la revendication 1, dans laquelle lesdites première et deuxième lentilles incurvées comprennent des première et deuxième surfaces internes réfléchissantes (451) respectives.

6. Surface tactile selon la revendication 5, dans laquelle ledit premier panneau d'entrée (571) est incurvé dans un plan vertical incident au plan horizontal, et ladite première surface intérieure réfléchissante (451) réfléchit les faisceaux de lumière entre les réfractions d'entrée et de sortie de ladite première lentille incurvée, et dans laquelle ledit deuxième panneau de sortie est incurvé dans un plan vertical incident au plan horizontal, et ladite deuxième surface intérieure réfléchissante réfléchit les faisceaux de lumière entre les réfractions d'entrée et de sortie de ladite deuxième lentille incurvée.

7. Surface tactile selon la revendication 1, dans laquelle ledit premier panneau d'entrée est incurvé dans le plan horizontal, et ledit deuxième panneau de sortie est incurvé dans le plan horizontal.

801

606

701

# FIG. 1
# (PRIOR ART)

FIG. 2
(PRIOR ART)

# FIG. 3
# (PRIOR ART)

FIG. 4
(PRIOR ART)

401    201-203

301-305

C    ←    →

1    2
     ABC

3
CDE

402

4    5    6

7    8    9

0    ↵

FIG. 5

FIG. 6

EP 2 807 538 B1

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

826

301    302    303

770

636

441    442    443

439    440

201    202

# FIG. 22

EP 2 807 538 B1

FIG. 23

74

FIG. 24

FIG. 25

FIG. 26

FIG. 27

FIG. 28

FIG. 29

FIG. 30

FIG. 31

FIG. 32

FIG. 33

444    439    444

440

201    202

# FIG. 34

FIG. 35

FIG. 36

FIG. 37

FIG. 38

101

462

102

# FIG. 39

827

H2

H1

452

466

464

451

463

453

H3

637

465

200

100

# FIG. 40

FIG. 41

FIG. 42

FIG. 43

FIG. 44

FIG. 45

FIG. 46

832

637

483

484

200

FIG. 47

832

485

487

637

486

200

FIG. 48

FIG. 49

TOP VIEW

SIDE VIEW

FIG. 50

FIG. 51

FIG. 52

FIG. 53

FIG. 54

FIG. 55

921          920

530

201                    200

# FIG. 56

FIG. 57

FIG. 58

FIG. 59

FIG. 60

FIG. 61

FIG. 62

FIG. 63

FIG. 64

FIG. 65

FIG. 66

# FIG. 67

FIG. 68

FIG. 69

**800**

FIG. 70

baseline
signal
strength

910

**800**

200

167

300

Legend

LED

PD

# FIG. 71

FIG. 72

FIG. 73

## FIG. 74

FIG. 75

FIG. 76

FIG. 77

FIG. 78

FIG. 79

FIG. 80

FIG. 81

FIG. 82

FIG. 83

826

301    202    302

636

441    442    443

439    440

303    201    304

# FIG. 84

FIG. 85

FIG. 86

FIG. 87

FIG. 88

FIG. 89

FIG. 90

FIG. 91

FIG. 92

FIG. 93

FIG. 94

FIG. 95

FIG. 96

FIG. 97

FIG. 98

FIG. 99

# FIG. 100
# (PRIOR ART)

FIG. 101

FIG. 102

FIG. 103

FIG. 104

FIG. 105

FIG. 106

FIG. 107

FIG. 108

FIG. 109

FIG. 110

FIG. 111

FIG. 112

FIG. 113

FIG. 114

FIG. 115

FIG. 116

FIG. 117

FIG. 135

FIG. 136

FIG. 137

FIG. 138

FIG. 139

300

(A)          173

200

300

(B)          174

200

300

(C)          175

200

300

(D)          176

200

300

(E)          177

200

# FIG. 144

# FIG. 145

FIG. 146

FIG. 147

1021

SPATIALLY FILTER CALCULATED TOUCH
COORDINATE

1022

CURRENT – PREVIOUS < THRESHOLD ?

1023 ── YES

CALCULATE LAG

1024

SELECT
TEMPORAL
FILTER

1025

APPLY
TEMPORAL
FILTER

NO ── 1026

SELECT WEAK
TEMPORAL
FILTER

1027

APPLY
TEMPORAL
FILTER

1028

LAG = OUTPUT
COORDINATE

# FIG. 148

FIG. 149

FIG. 150

FIG. 151

FIG. 152

FIG. 153

FIG. 154

FIG. 155

FIG. 156

FIG. 157

FIG. 158

FIG. 159

```
                                                        1031
┌─────────────────────────────────────────────┐
│        DETECT TWO TOUCH X-COORDINATES         │
│         AND TWO TOUCH Y-COORDINATES           │
└─────────────────────────────────────────────┘
                      │
                      ▼                             1032
┌─────────────────────────────────────────────┐
│          ANALYZE X-COORDINATE DETECTIONS      │
└─────────────────────────────────────────────┘
                      │
                      ▼                             1033
┌─────────────────────────────────────────────┐
│        RANK EACH X-COORDINATE'S PROXIMITY     │
│        TO A FIRST DESIGNATED SCREEN EDGE      │
└─────────────────────────────────────────────┘
                      │
                      ▼                             1034
┌─────────────────────────────────────────────┐
│       ASSOCIATE EACH X-COORDINATE WITH A      │
│   Y-COORDINATE CORRESPONDING TO THE PROXIMITY │
│      TO THE FIRST DESIGNATED SCREEN EDGE      │
└─────────────────────────────────────────────┘
                      │
                      ▼                             1035
┌─────────────────────────────────────────────┐
│          ANALYZE Y-COORDINATE DETECTIONS      │
└─────────────────────────────────────────────┘
                      │
                      ▼                             1036
┌─────────────────────────────────────────────┐
│        RANK EACH Y-COORDINATE'S PROXIMITY     │
│       TO A SECOND DESIGNATED SCREEN EDGE      │
└─────────────────────────────────────────────┘
                      │
                      ▼                             1037
┌─────────────────────────────────────────────┐
│       ASSOCIATE EACH Y-COORDINATE WITH AN     │
│  X-COORDINATE CORRESPONDING TO THE PROXIMITY  │
│     TO THE SECOND DESIGNATED SCREEN EDGE      │
└─────────────────────────────────────────────┘
                      │
                      ▼                             1038
┌─────────────────────────────────────────────┐
│          CHECK THAT THE RESULTS OF            │
│         STEPS 1034 AND 1037 MATCH             │
└─────────────────────────────────────────────┘
```

FIG. 160

1041

DETECT SIMULTANEOUSLY
TWO SCREEN GLIDES ALONG THE X-AXIS
AND TWO SCREEN GLIDES ALONG THE Y-AXIS

1042

ANALYZE X-AXIS DETECTIONS

1043

RANK EACH X-AXIS GLIDE'S PROXIMITY
TO A FIRST DESIGNATED SCREEN EDGE

1044

ASSOCIATE   EACH X-AXIS GLIDE WITH A Y-AXIS GLIDE
CORRESPONDING TO THE PROXIMITY TO
THE FIRST DESIGNATED SCREEN EDGE

1045

ANALYZE Y-AXIS DETECTIONS

1046

RANK EACH Y-AXIS GLIDE'S PROXIMITY
TO A SECOND DESIGNATED SCREEN EDGE

1047

ASSOCIATE   EACH Y-AXIS GLIDE WITH AN X-AXIS GLIDE
CORRESPONDING TO THE PROXIMITY TO
THE SECOND DESIGNATED SCREEN EDGE

1048

CHECK THAT THE RESULTS OF
OPERATIONS 1044 AND 1047 MATCH

1049

DISCRIMINATE THE SCREEN GLIDE OPERATIONS AS
BEING CLOCKWISE OR COUNTER-CLOCKWISE

FIG. 161

FIG. 162

Normal Touch

Invalid Touch
(Twisting/ Bending)

Invalid Touch
(e.g., Flexing LCD)

Invalid Touch
(e.g., Mechanical Issues)

# FIG. 163

FIG. 164

FIG. 165

FIG. 166

FIG. 167

FIG. 168

FIG. 169

FIG. 170

# FIG. 171

FIG. 172

FIG. 173

SCAN EXECUTION

CONVENTIONAL CHIP

ON

OFF

TIME

SCAN EXECUTION

DEDICATED CONTROLLER

ON

OFF

TIME

# FIG. 174

FIG. 175

FIG. 176

**REFERENCES CITED IN THE DESCRIPTION**

**Patent documents cited in the description**

- EP 0884691 A2
- US 2011175852 A1
- CN 101387930 A
- US 2008056068 A1
- CN 201965588 U
- US 8339379 B
- US 760568 A
- US 20100238139 A1
- US 7333095 B
- US 486033 A
- US 20100017872 A1
- US 12371609 B
- US 20090189878 A1
- US 13052511 B
- US 20110163998 A
- US 12667692 B
- US 20110043485 A